# EUROPEAN PATENT SPECIFICATION

(11) **EP 0 799 105 B1**
(45) Date of publication and mention of the grant of the patent: **16.03.2005**
(21) Application number: 95906703.4
(22) Date of filing: 22.12.1994
(51) Int. Cl.: B23C 3/35

(54) **METHOD AND APPARATUS FOR AUTOMATICALLY MAKING KEYS**
METHODE UND GERÄT ZUR AUTOMATISCHEN FERTIGUNG VON SCHLÜSSELN
PROCEDE ET APPAREIL DE REPRODUCTION AUTOMATIQUE DE CLEFS

(43) Date of publication of application: 08.10.1997
(73) Proprietor: Almblad, Robert E., Mundelein, IL 60060 (US)
(72) Inventor: ALMBLAD, Robert, E., Mundelein, IL 60060 (US); BLIN, John, Arlington Heights, IL 60004 (US); JURCZAK, Paul, Gurnee, IL 60031 (US)
(74) Representative: Goodenough, Nigel
(86) International application number: PCT/US1994/014862
(87) International publication number: WO 1996/019309

(56) References cited:
- EP-A- 0 628 683
- FR-A- 2 489 535
- US-A- 3 796 130
- US-A- 4 143 582
- US-A- 4 324 513
- US-A- 4 899 391
- US-A- 5 129 010
- US-A- 5 193 120

## Description

This invention generally relates to a method (claim 26) and an apparatus (claim 1) for automatic key making (see for example US-A-4 143 582). More particularly, the invention extracts key attributes of an object key. without mechanically fixturing and without physically contacting the key after the key making apparatus independently positions the object key for such extraction without human intervention.

The key making art has taught us that each lock manufacturer has adopted a number of different key blanks, each with its own unique shape and specific groove characteristics. Furthermore, for each key blank its manufacturer has assigned one or more known key cut codes that define the manner in which the key blank can be cut to match the manufacturer's lock.

There are several thousand types of key blanks in the world. When a key is presented to be duplicated by a locksmith, he must be skilled at looking, inspecting, and measuring the customer's key (object key) to determine which key blank it is among the thousands made, and he must also be skilled at trace cutting the notches (cuts or bits) of the customer's key into a correctly identified key blank. If the wrong key blank is chosen, then it will not operate in the customer's lock. Also, if the key cuts are not traced precisely, then the new key will not work in the lock.

The traditional method of key identification is to inspect the handle (bow) and any stamping, the grooves, and the length. What has not been done, is to measure the cuts in a key, and then compare this information to the grooves and/or outer shape to determine the type of key blank.

For each key with an elongated blade and a handle, the blade has longitudinal grooves determined by the manufacturer to match its locks. Notches are cut into at least one side of the blade. The handle normally has a hole disposed along the longitudinal centerline which is adapted to allow the key to be used on a key ring. The grooves of a key begin at the point that the blade extends from the handle.

The manufacturer's key cut codes define the relationship between the cuts and key blank, and between one cut and another. The following characteristics (attributes) are representative: (1) the distance from the key shoulder to the center of the first cut; (2) the distance between cuts, i.e. the distance being measured from the center of one cut to the center of an adjacent cut; (3) the depth of each cut; (4) the angle of each cut; (5) the length of the flat at the bottom of each cut; (6) the distance between the tip and key shoulder; and (7) the distance from the key shoulder to the center of the first cut. Once attributes, such as key outer shape, groove characteristics, and key cut features of an object key can be extracted, recognized, and compared to that which was supplied by an original key manufacturer, a new key duplicating the original can be automatically selected and cut.

Since the shape of the blade, grooves and key cut codes define the functional features of a key, this is the information that must be identified and utilized to make a proper key. In other words, if the shape of the blade, key cut codes, or grooves are wrong, the key will not operate the lock. Even though the handle may be different, if the shape of the blade, codes, and grooves are correct, it will still operate the lock.

Various types of key making machines currently exist which identify and utilize a key manufacturer's coding to duplicate a customer's key. However, none of the following patents teaches a method or apparatus that extracts key cut codes of an object key absent some means of physically making referential contact with the object key. Nor do the patents discussed disclose a method or apparatus that extracts the aforementioned key attributes without physically making referential contact with the key after the key making apparatus independently positions the object key for such extraction without human intervention.

U. S. Patent No. 2,070,228, issued in 1935, is the seminal patent relating to key cut codes. The device taught measures relative depth of key cuts using spring loaded tumblers which make physical contact with the key cuts. Analysis of the slope of the key cut is not considered. The acquired data is then used by a locksmith to determine an appropriate key code.

U. S. Patent No. 4,090,303, relating to a key decoding apparatus, discloses a method of determining the original key cuts utilizing manufacturers' predetermined key cut depth and spacing. The key decoding apparatus disclosed employs an index card having sequential indexes thereon corresponding to a predetermined coded depth of the key desired to be duplicated. This card is inserted into a housing and the key to be duplicated is inserted into a slot in the housing where it engages an indexing member which enters one of the key cuts on the key and indicates on the card the coded depth of that key cut. The angle of the cut of the same key cut may also be determined.
The remaining key cuts of the key may be decoded in like manner.

The '303 disclosure does not teach the use of key cut spacing and depth to determine the key blank; rather this determination is left to the locksmith. It neither aids in the selection of a manufacturer's index (coding) card nor in the selection of a key blank.
What '303 does disclose is that when a manufacturer's predetermined key cut depth and spacing index card is independently selected by the locksmith, the correct depth of the key cuts can be duplicated. The same index card is then inserted into a housing which includes an indexing drum having key cuts therein with spacing that corresponds to the predetermined coded spacing of the key to be duplicated.

Some of the drawbacks to these designs are that each teaches the utilization of a manufacturer's index card data as the criteria to determine which key blank is appropriate. But an individual locksmith first has to determine which key blank he will use without the use of the manufacturer's index cards.

Alternative technology is available in the form of U.S. Patent No. 3,865,011 issued to Patriquin in 1975 which reveals an automatic key duplicating apparatus which discloses a sample device for receiving and retaining a sample key in a vice. The principal disadvantage of such a device is its requirement for proper positioning requiring the skills of a mechanical operator such as a locksmith.

Additionally, U.S. Patent No. 3,796,130 issued in 1974 to Gartner reveals a semi-automatic key duplicating and vending machine. This device requires the customer to place his key into one of a plurality of slots, each slot adapted to receive a key blade of a different cross-section corresponding to the shape of one of the key blanks in storage. Selection of the proper slots provides a means for selecting the appropriate key blank in storage and automatically positions such blank for trace cutting a duplicate profile to that of the customer's key. The principal disadvantages of such a device are that smaller keys fit into larger holes, its inability to determine the differences in key blade length or shoulder position which can distinguish one key blank from another, and the fact that this device merely duplicates the cut features of the customer's key which may be overly worn.

U. S. Patent No. 4,717,294 discloses a key cutting device which cuts key blanks by employing a set of coded depth keys supplied by the lock manufacturer.

U. S. Patent No. 4,899,391 discloses a system for identifying an appropriate key blank from a pattern comprised of a plurality of horizontal grooves of a predetermined depth and spacing taken from the image of the front profile of the key. The principal disadvantage of such a device is its need to be precisely fixtured and it needs to take images of the grooves from the blade tip. Length of the blade and shoulder position cannot be determined and discontinuities result from slight bends in the blade and/or surface imperfections. Moreover, keys with worn tips cannot be read accurately at all.

U.S. Patent No. 3,442,174 issued to Weiner et al. for a key blank dispensing and cutting apparatus which requires the assistance of the customer in selecting a slot in which to insert the blade of the key. Once having found the slot, the blank identification process is completed. Unfortunately, the apparatus only allowed for identification of the profile of the key and could not take into account keys having identical profiles and varying lengths and shoulder positions and smaller keys that fit into larger holes. Moreover, the apparatus was limited to forty eight known key blanks, whereas the instant device teaches no such limitation. Additionally, the selection method disclosed reveals mechanical push rods, one for each of forty eight key blanks to push a key blank out of its respective key blank container. In the instant device only one robotic means for withdrawal of a key blank from a key dispenser is required for all stored key blanks.

Other representative art includes U.S. Patent Nos. 5,245,329, 5,050,462, 4,929,129, and 3,358,561.

These earlier methods and apparatus for automatic key making required skill on the part of the operator to fixture the object key in some fashion and to have some special knowledge of key blanks with some kind of training. Moreover, the prior art methods to decode keys required instruments and gadgets that only locksmiths would be familiar with.

While unrelated to the key making art, the following patents are nevertheless of note. U. S. Patent No. 4,809,341 teaches a method and apparatus used in semiconductor device fabrication for a reticle or mask image, which has a slight modification of reduction or magnification, using a comparison method in which the real image pattern is compared with the pattern produced from design data; and U. S. Patent No. 4,805,224 which reveals a pattern recognition method and device employing second order differential analysis of distinctive features.

The citation of the foregoing publications is not an admission that any particular publication constitutes prior art, or that any publication alone or in conjunction with others, renders unpatentable any claim of the present application. None of the cited publications is believed to detract from the patentability of the claimed invention.

Unlike the key vending machines referenced above, the important invention disclosed herein is designed to be operated by an inexperienced customer who possesses neither the skills of a trained locksmith nor those of a skilled imaging operator.

Moreover, deficiencies in the prior art relating to proper sizing of the object key, elimination of distortions and surface flaws, and the need to mechanically fixture the object key have not been remedied by the art disclosed.

No other device for automatically making keys has disclosed a non-contact means for extracting laterally exposed attributes, comprising three dimensional grooves, outer shape and laterally exposed key cuts, of an object key. Nor has the prior art taught a key making apparatus or method that automatically establishes an operative positional relationship between an object key and the key making machine without pre-fixturing the object key in a vice or some other holding device.

To alleviate these problems, and others which will become apparent from the disclosure which follows, the present invention provides a key making apparatus that automatically establishes an operative positional relationship between an object key and the components of the apparatus that extract information from an object key, extracts the attribute information necessary for it to determine the correct key blank and the correct key cut codes and a method of automatically cutting the correct codes in to a key blank despite any deficiencies in the codes of the object key.

Attribute information is extracted by the instant apparatus automatically reading an object key and comparing the attributes of the object key with a master pattern memory of known manufacturers' keys. Then it selects the proper matching key blank and cuts it to the original key cut codes established by the manufacturer. Alternatively, the key blank can be trace-cut, duplicating the used attributes of the object key.

### ADVANTAGES OF THIS INVENTION

Unlike the foregoing devices which teach structures that require fixturing an object key requiring the precision of a trained locksmith to properly place the key within a vice or similar holding device, the instant invention allows the key to be loosely situated within a specified but yet broader area. Thereafter, the key making machine operates automatically to position the key, to extract key attributes so that a corresponding key blank stored in the machine can be identified, and corresponding key cut codes can be identified and cut into the corresponding key blank to make a new key conforming to the manufacturer's original specifications. Every necessary aspect of the key making process has been incorporated into the preferred embodiments of the instant apparatus.

Furthermore, a superior method and apparatus is disclosed herein which allows the internal grooves to be identified more accurately. The prior art discussed above reveals a method for looking down the front profile of the key, that is, looking longitudinally from the tip of the blade. This method is subject to inaccuracies due to distortions from wear and blade bending. Moreover, the system is unable to determine blade length, shoulder position, or attribute information.

By combining a backlighting method, which sees the outer shape of the key, including its key cut features, and a light stripe method, which obliquely projects a light stripe on to the blade producing a multidimensional image, the disadvantages of the prior art have been overcome.

The disclosed embodiment of the instant invention can identify and produce not only American made keys, but those of Europe and throughout the world having laterally protected cuts and curved grooves as well.

The instant automatic key making apparatus provides an efficient and convenient means of making new keys. The apparatus of the present invention performs all of the required functions to achieve the objective of making a key that meets the specifications of the original manufacturer. Additionally, the methods disclosed provide that the apparatus may acquire new key information which may be added to the machine's database, thus, allowing the range of applicable customer keys to expand.

Moreover, the methods disclosed herein requires no skill on the part of the operator or any knowledge of keys. Particularly when compared to the foregoing devices, the instant invention is user-friendly.

The embodiments of the disclosed invention reveal a self-service key making apparatus requiring few instructions and little or no skill or special knowledge on the part of the customer. Ease of use is a critical advantage. It is no harder to use than a photocopy machine - no greater level of complexity is required.

Still other advantages will be apparent from the disclosure that follows.

The invention relates to methods and apparatus for automatically making keys by extracting key cut codes, or other attributes, of an object key without physically contacting the key in such extraction process. Additionally, the key making apparatus may independently position the object key for such extraction without human intervention.

US-A-4143582 is a key making system having an elasticated pressure element which is utilised to make a three dimensional receding in thin metallic foil from each of the two sides of a key to be reproduced. The key to be copied is clamped on a bed and a recording roller moved thereover which extracts the profile shape of the key.

According to the present invention there is provided a key making apparatus utilizing attributes of an object key having a longitudinal axis comprising: means for extracting attributes of an object key ; and means for supporting the object key for establishing an operative positional relationship between the object key and the attribute extracting means; characterised in that said supporting means supports the object key in an unconstrained manner, is rotatable and has a transparent section on which the object key may be placed; said attribute extracting means having backlighting means arranged and adapted to pass light through the transparent section of the supporting means and project an image of the object key positioned thereon, means for receiving the object image of the object key and producing an output signal, means for determining the position of the longitudinal axis of the object key relative to a light stripe which may be projected on to the object key by a light stripe generator responsive to the output signal produced by the receiving means , means for rotating the supporting means, an object key positioning control means that is operably connected and responsive to an output signal from the means for determining the position of the object key and that is operably connected to the means for rotating the supporting means, whereby, the longitudinal axis of an object key, by the light stripe generator.

The present invention further provides a method of automatically making keys utilizing attributes of an object key (32) having a longitudinal axis which comprising the steps of:
a. unconstrainedly supporting the object key (32) on a transparent section (25,26) of a surface (22);
b. backlighting the object key by passing light through the transparent section in order to identify the attributes of the object key;
c. projecting a light stripe on to the object key and rotating the surface (22) to establish an operative positional relationship between the longitudinal axis of the unconstrainedly supported object key (32) and a means (2) for extracting attributes of the loosely supported object key; and
d. extracting attributes of the unconstrainedly supported object key including laterally exposed key cuts, independent of physical contact whereby, key cut codes of the object key can be recognized.

The key making apparatus comprise a transparent section on which an object key may be supported which is rotatable, and a backlighting means is used to pass light through the transparent section and project an image of the object key. From the image received, the position of the longitudinal centreline of the object key relative to a fixed datum is determined and an output signal generated. The object key may then be rotated to align it. Object key attributes may thus be extracted without fixturing or confining the object key in a holder or like device and a correct key blank may be identified.

Moreover, after extracting essential attribute information which is then compared with known key manufacturer's information stored in memory, an appropriate key blank in a robotically accessible inventory is selected, cut, deburred, and automatically dispensed.

Preferred embodiments of the invention are described hereinafter with reference to the accompanying drawing wherein:
FIG. 1 is a perspective view of a preferred embodiment of a rotatable object key supporting means and an assembly of the light stripe generator and camera of the automatic key making apparatus of the present invention;
FIG. 2 is a fragmentary side elevation view of a preferred embodiment of a transparent section of the object key supporting means with an object key disposed in a sloped position thereon of the automatic key making apparatus of the present invention;
FIG. 3 is a fragmentary side elevation view of a preferred embodiment of the transparent section of the object key supporting means of FIG. 2 with the handle section lowered and horizontal light obstructed by the blade of the object key disposed flatly on the blade section thereof of the automatic key.making apparatus of the present invention;
FIG. 4 is a cut-away perspective view of a preferred embodiment of the rotatable object key supporting means showing the backlighting means, the horizontal adjustment means, and tandem movement of the assembly of the light stripe generator and camera of the automatic key making apparatus of the present invention;
FIG. 5 is a perspective view of a preferred embodiment of the key effector base showing the subbase linear slide motion guides;
FIG. 6 is a partially exploded perspective view showing a positional relationship of a preferred embodiment of a key dispenser cup to a key holding container and the key effector, respectively;
FIG. 7 is a perspective view of a preferred embodiment of the dispenser cup showing its hinged door;
FIG. 8 is a perspective view of a preferred embodiment of the key effector showing a clamp and spring biased block in an exploded format;
FIG. 9 is a perspective view of a preferred embodiment of the key holding container showing its relationship to one key blank of a stack of key blanks;
FIG. 10 is a side elevation view of a preferred embodiment of the dispenser cup with the hinged door closed and the key holding container, shown in phantom, disposed therein, and the clamp and rod of the key effector in a pre-engagement position;
FIG. 11 is a side elevation view of a preferred embodiment of the dispenser cup with the hinged door engaged by the clamp of the key effector to open same and the key holding container, shown in phantom, disposed therein, and a pin disposed upwardly on the rod engaged with a hole in the handle of a key blank;
FIG. 12 is a partial cut-away side elevation view of a preferred embodiment of the key effector with the key blank secured in position for cutting;
FIG. 13 is a side elevation view of a preferred embodiment of a rotatable cutting wheel and associated anvils for cutting a key blank;
FIG. 14 is a partial perspective view of a preferred embodiment of a spatial orthogonal array of the dispenser cups and associated key holding containers in relation to a representation of the key effector, shown in phantom;
FIG. 15 is a top plan view of representative shapes of different keys;
FIG. 16 is a top plan view of a cut key and representative light stripes projected thereon, with a representation of the characteristics of the key from the respective light stripes;
FIG. 17 is a flow diagram of a preferred embodiment of the operation of the automatic key making apparatus of the present invention;
FIG. 18 is a block diagram of a preferred embodiment of the electrically actuated components of the automatic key making apparatus of the present invention;
FIGS. 19, 19A, and 19B, are, respectively, perspective views of a key having laterally protected attributes: FIG. 19 showing a key having laterally protected key cuts and a linear groove, FIG. 19A showing a key having a laterally protected linear groove and a laterally protected curved groove, and FIG. 19B showing a key having a laterally protected linear groove and a plurality of laterally protected recessed dimples; and
FIGS. 20, 20A, 20B, 20C, AND 20D, are, respectively, top plan views of representative shapes of different key blanks, each having a uniformly disposed hip to support registration of the key blank when secured by the key effector (not shown).

The preferred embodiments depicted in the drawing include an automatic key making apparatus, a flow diagram of a preferred method of operation, and a block diagram of various components. The discussion that follows, without limiting the scope of the invention, will refer to the invention as depicted in the drawing, showing methods and embodiments of an apparatus that will automatically make new keys requiring only minimum skill on the part of the user (customer).

A preferred method for automatically making keys comprises establishing an operative positional relationship between an object key and a means for extracting attributes of an object key while leaving the object key independent of constraint and then extracting attributes of an object key.

This method is achieved by an automatic key making apparatus, which in one of its preferred embodiments, orients the object key into an operative positional relationship before extracting its attributes, leaving the object key independent of constraint. In another embodiment laterally exposed attributes are extracted independent of physical contact.

One method for automatically making keys comprises establishing an operative positional relationship between an object key and a means for extracting laterally protected attributes of an object key while leaving the object key independent of forcible holding and extracting laterally protected attributes of an object key independent of physical contact.

In a preferred embodiment of the invention both laterally protected and laterally exposed attributes of an object key are recognized and compared with a master pattern memory to identify a corresponding key blank having a hole in the handle and its associated key cut code.

Another method comprises receiving an object key on a rotatable means for supporting an object key having a transparent section, backlighting the object key by passing light through a transparent section of the supporting means and projecting an object image, receiving at least one object image of the object key, determining from the object image the position of the longitudinal centerline of the object key in a generally horizontal position relative to a light stripe which may be projected on to the object key by a light stripe generator, producing an output signal corresponding to the determination, and rotating the means for supporting an object key for alignment with a line perpendicular to the light stripe.

Any structured light may be used for applications requiring surface feature extraction. Structured light being defined as any method, including filtering, polarizing, lensing, aperturing, and light placement at appropriate angles of incidence, that controls the light path between its source, the illuminated object and the camera.

In its preferred form, collimated light in which all of the light waves travel parallel to one another, is used to produce sharply defined shadows of parts placed in its path which can be cast either directly onto a sensor or on to a flat surface where it can then be measured. Backlighting produces a silhouette image of an object contour or polyline. A preferred embodiment utilizes for a backlight source a 7 watt bulb with a light diffuser of opaque plastic.

As shown in the drawing, this invention establishes an operative positional relationship between the object key 32 and the automatic key making apparatus. The pedestal 28 on which the object key may be placed may be rotated by an offset motor drive 30, as shown in FIG. 4. Thus, even if a customer does not orient the object key 32 properly, backlighting will reveal its orientation and the transparent section (blade section 25 and handle section 26, taken together) of the pedestal 28 can be rotated to reorient the object key. The camera 2 is used to receive the object image of the object key 32 produced by backlighting and it produces an output signal which can be processed by computer to determine the position of the longitudinal centerline of the object key 32 relative to a fixed datum.

A key method of establishing an operative positional relationship between an object key and a means for extracting attributes of an object key while leaving the object key independent of constraint and may be employed with any known method of extracting attributes of an object key including those utilizing physical contact.

Another method for automatically making keys involves aligning an object key with a horizontal plane.

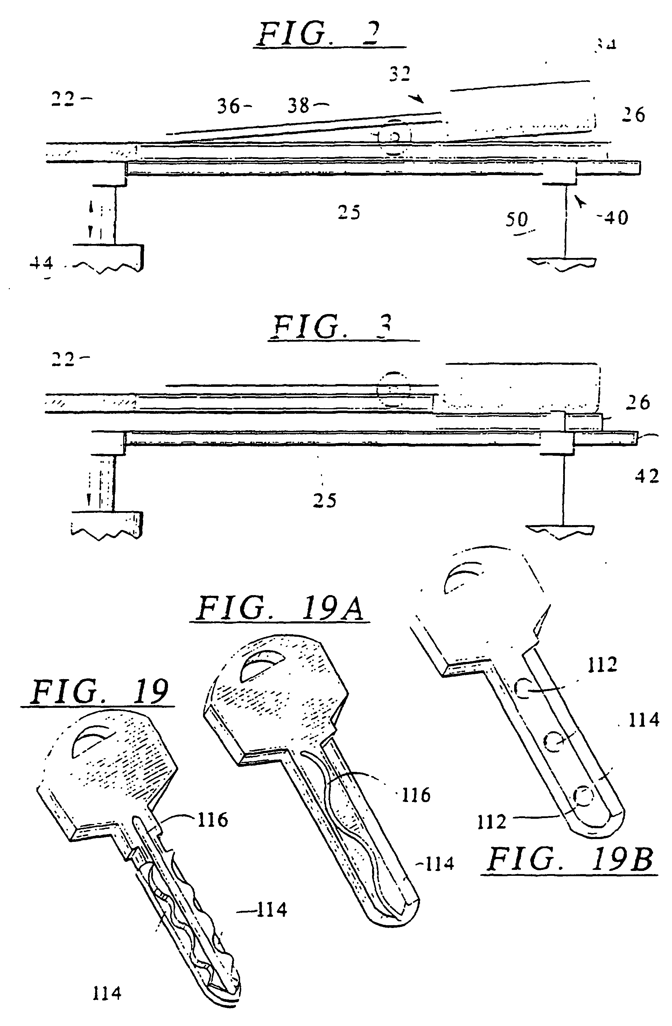

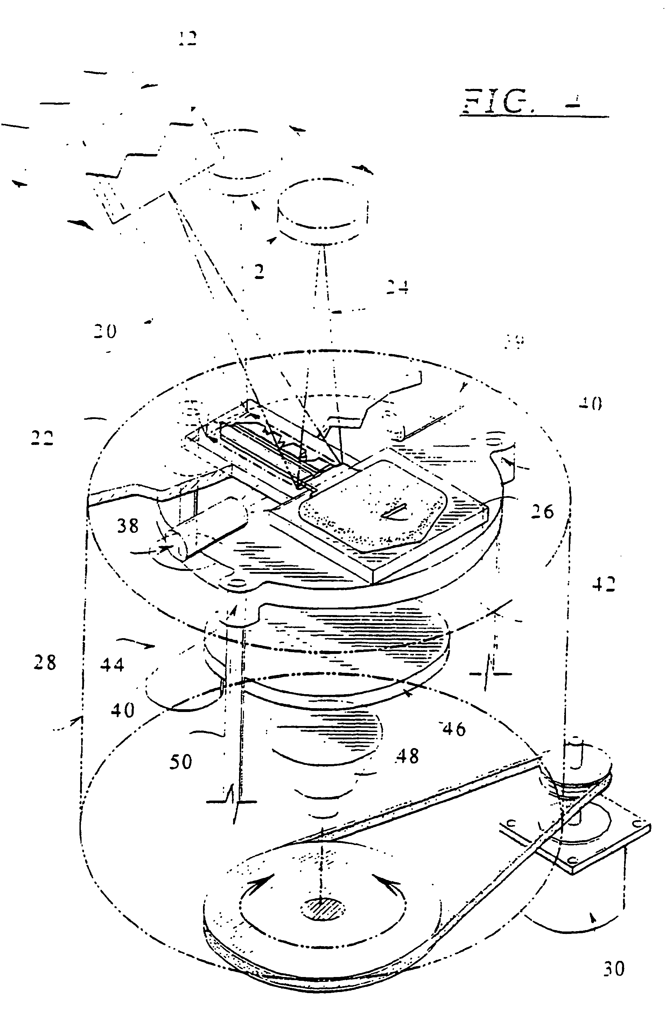

As best shown in FIGS. 2 and 3 of the drawing, the present invention provides that when an object key 32 is placed on the transparent section (25, 26) of the pedestal 28, it may not be lying flat due to a bulky key handle 34. The instant invention remedies this problem utilizing a horizontal light generator 38 and horizontal light receiver 39 (see FIG. 4) positioned immediately above the pedestal 28 that allows light to be transmitted and received under the key blade 36. The handle 34 can then be lowered until the blade 36 is positioned flatly on the blade section 25.

In this embodiment of the apparatus, the transparent section has a blade section 25 proximate to a handle section 26 and the handle section is movable vertically from an upper position which is parallel to the plane of the blade section (illustrated in FIG. 2) to a lower position at a spaced distance below the plane of the blade section (illustrated in FIG. 3). The handle section 26 is sized and adapted to support the handle of an object key 32 that has a blade 36 and a handle 34. The blade section 25 is sized and adapted to support the blade of an object key.

The means for aligning an object key with a horizontal plane includes a horizontal light generator 38 arranged and adapted to project a generally horizontal beam of light immediately above the transparent section and transverse to the blade of an object key which may be supported on the transparent section. The light generator could be as common as a light bulb or as sophisticated as a fiber optic cable.

As best shown in FIG. 4 of the drawing, the present invention provides that when the backlight 48 turns off and a horizontal light is projected immediately above the pedestal 28 and transverse to a blade 36 of the object key 32 which is supported on a blade section 25 and an adjacent handle section 25 of the transparent section for a blade and handle, respectively, of the object key 32; and the horizontal beam of light which is not obstructed by the blade of the object key disposed on the blade section is received by a horizontal light receiver 39 which produces at least one output signal. As best shown in FIG. 2 of the drawing, if the blade 36 of the object key is not positioned flatly on the blade section 25, horizontal light above a minimum threshold will be received and the vertical elevation of the handle section 26 of the transparent section will be incrementally lowered in relation to the output signal.

The steps of the previous paragraph are repeated until the light received no longer exceeds the minimum threshold, indicating that the blade of the object key is disposed flatly on the blade section.

In some instances the customer may forget to place the object key 32 on the pedestal 28. In such instances, the horizontal leveling light will not be blocked regardless of the handle section height adjustment. This will indicate that either the key is not positioned on the transparent section or that the customer forgot to insert the key altogether, triggering a signal to open the key access door (not shown in the drawing) and the customer will be re-instructed to place the key.

By projecting a generally horizontal beam of light immediately above a means for supporting an object key and transverse to the blade of the object key which may be supported thereon and receiving the light of the horizontal beam that is not obstructed by the blade of an object key disposed on the blade section of the means for supporting an object key and producing at least one output signal, and incrementally lowering the vertical elevation of the handle section of the means for supporting an object key in relation to said second output signal, and repeating these sequential steps a specified number of times, the non-existence of an object key can be determined and an appropriate signal generated. Such signal would indicate that there was a lack of an object key blocking the light reception, which would indicate that the object key was not disposed on the supporting means. In such a case the signal would produce a response wherein an overhead light (not shown in the drawing) would be turned on, appropriate instructions would be displayed to the customer, and the access door would open.

The horizontal light generated would be obstructed by the blade of an object key, if it were disposed horizontally on the blade section of the transparent section of the pedestal, as shown in FIG. 3.
Otherwise, when the blade of an object key is other than horizontally disposed in face to face contact with the blade section, the light generated will be seen by a horizontal light receiver disposed to receive light from the horizontal light generator that is not obstructed by the blade.

In the present embodiment, an output signal would be produced by the light receiver. The output signal would correspond to the quantum of light received or be generated as a fixed constant while a specified threshold of light is being received. A fiber optic sensor may be employed.

As best shown in FIG. 3 of the drawing, to adjust the vertical elevation of the handle section 26 for controlling the horizontal pitch of an object key disposed on the transparent section of the means for supporting an object key, the horizontal control means actuates a motor drive 44 to lower the handle section 26, whereby, an object key having a handle thickness larger than its blade thickness which is disposed on the transparent section of the means for supporting an object key may be aligned with a horizontal plane by lowering the handle section on which the handle of the object key is supported in finite steps in response to the output signal generated by the horizontal light receiver 39.

Alternatively, a means to raise the blade section coupled with a like movement of the horizontal light generator and receiver could be utilized to coordinate a face to face relationship between the blade section and the blade of the object key. Such an alternative system could alternatively require an adjustment of the coordinates for the imaging process. This alternative embodiment is not reflected in the drawing.

In a preferred embodiment of the automatic key making device, as shown in FIGS. 2 and 3, the means for adjusting the vertical elevation of the handle section 26 of the means for supporting an object key comprises a stepper linear actuator 44 having a shaft physically connected to the handle section 26 and at least one linear slide 40 disposed vertically for sliding support of the moving section. Servo actuators can likewise be employed. A stepper linear actuator is preferred because it can move the handle down in 0.25 mm (0.010 inch) increments.

One preferred process for automatically making keys comprises the sequential steps: a. receiving an object key on a rotatable means for supporting an object key having a transparent section; b. backlighting the object key by passing light through the transparent section of the supporting means and projecting an image; c. receiving at least one object image of the object key; d. determining from the object image the position of the longitudinal centerline of the object key in a horizontal plane relative to a light stripe projected on to the object key by a light stripe generator; e. producing an output signal corresponding to the determination; f. rotating the means for supporting an object key for alignment with a line perpendicular to a light stripe which may be projected on to the object key by a light stripe generator in relation to the output signal; g. projecting a generally horizontal beam of light immediately above the means for supporting an object key and transverse to a blade of an object key supported on the transparent section thereof, the transparent section having a blade section and an adjacent handle section for a blade and handle, respectively, of the object key; h. receiving the horizontal beam of light that is not obstructed by the blade of an object key disposed on the blade section of the means for supporting an object key and producing at least one output signal; i. incrementally lowering the vertical elevation of the handle section of the means for supporting an object key in relation to the output signal; and j. repeating sequential steps g, h, and i until the light received no longer exceeds a minimum threshold, indicating that the blade of the object key is disposed flatly on the blade section.

Operation from the customer's perspective, the customer places a key (the "object key") through an access door and on to an illuminated pedestal in accordance with the monitor's instructions. The customer may be required to close the access door (or initiate its operation by pressing a button or depositing money), which turns off an overhead light creating a small "dark room" for the key. Furthermore, closing the door trips a mechanical switch that activates the apparatus to begin the following events: a backlight 48 is turned on and an image of the object key is captured to determine the position of its longitudinal centerline and the object key is rotated a few degrees, if necessary, to be in proper alignment for a light stripe picture.

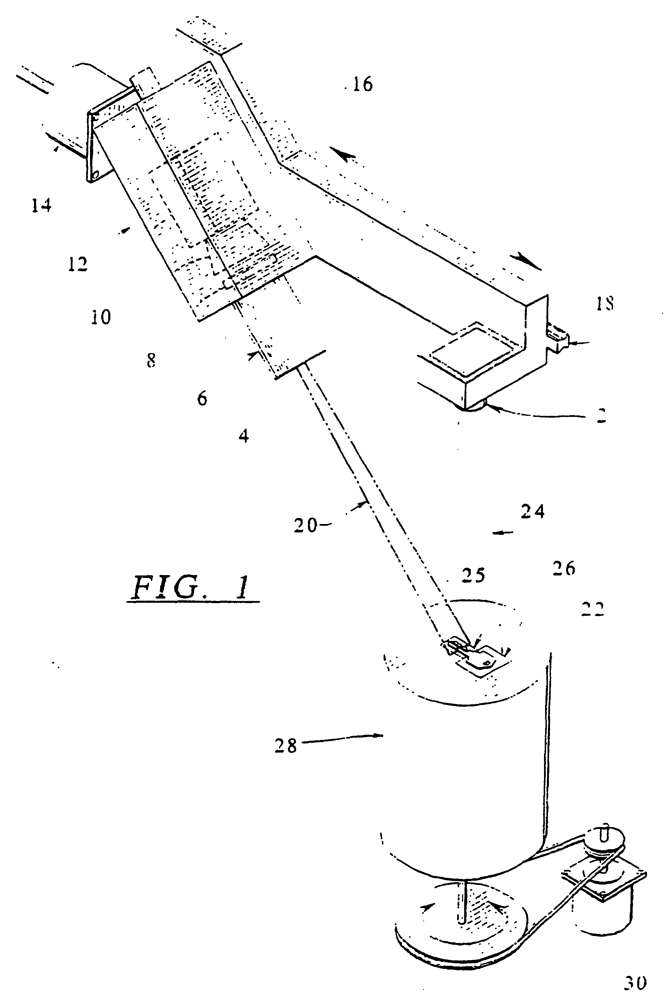

As best shown in FIG. 1 and 4 of the drawing, the present invention provides that the means for receiving an object image comprises at least one camera, the camera 2 being a pixel device for oriented fiber optic arrays. The preferred camera is available from a number of manufacturers and is a 256 grey scale CCD high resolution camera and a 4/40 lens. Signal output of the camera is sent to a frame grabber installed in the computing means. A standard 486 PC may act as the computing means.

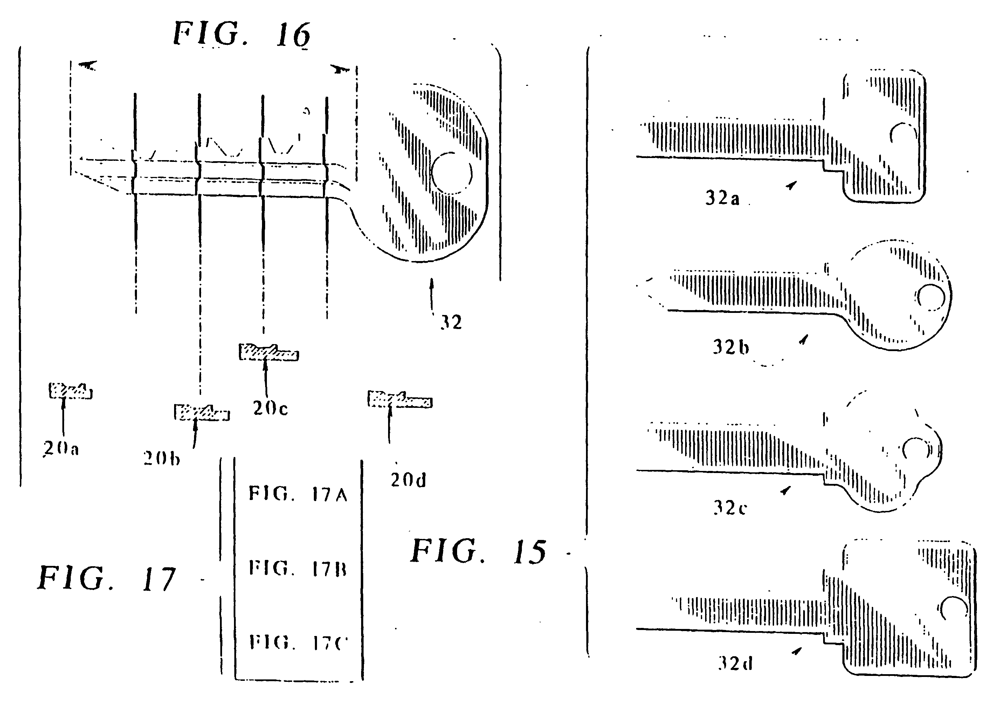

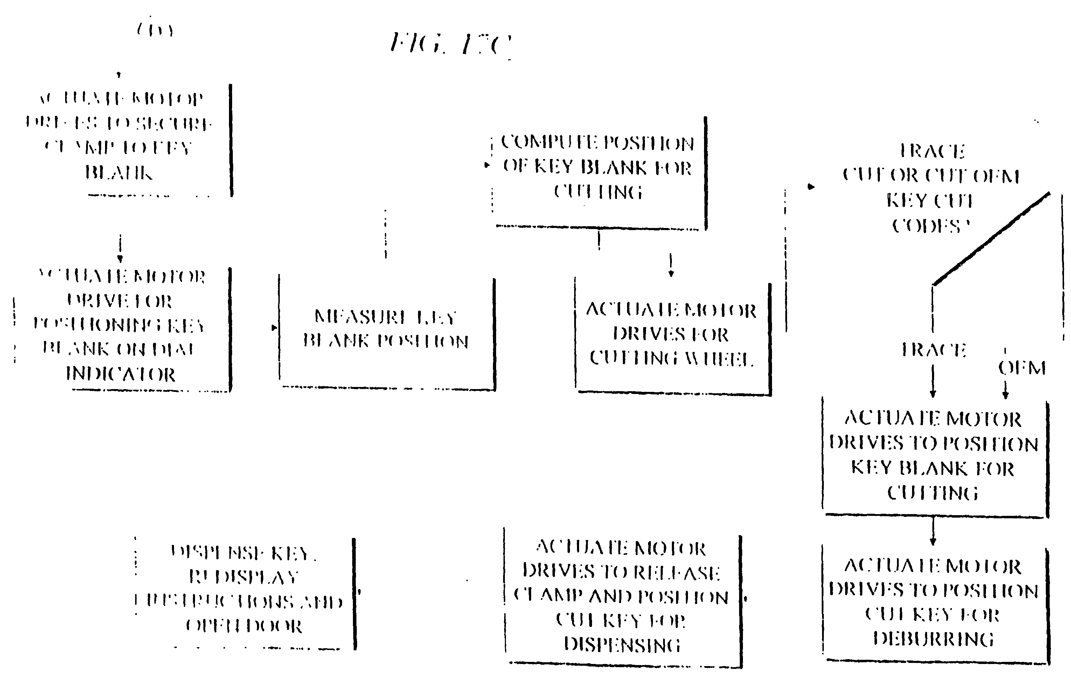

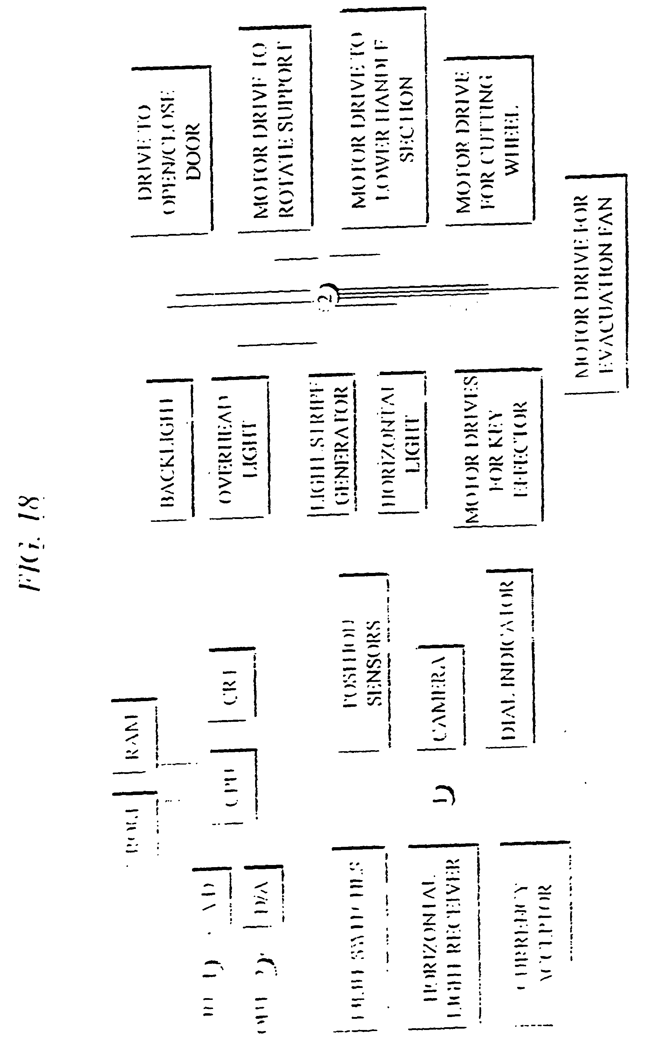

Some of the identifying attributes of an object key are disposed on its silhouette. These laterally exposed attributes may include the outer shape, see FIG. 15, and the exposed key cuts, as shown on the object key 32 of FIG. 16. Other identifying attributes of an object key cannot be seen on the silhouette.
Such laterally protected attributes may include groove characteristics 116 extending longitudinally along the blade of an object key or as laterally protected key cuts 114 or recessed dimples 112, as shown in FIG. 19. Additionally, the silhouette view provides information about the location of the handle and the blade of the object key, so that the light stripe generator can be positioned to project a light stripe on to the object key where its grooves begin.

The instant invention teaches a means to extract the laterally exposed attributes using backlighting and a means to extract the laterally protected attributes using a light stripe which is illustrated in FIG. 1.

In an embodiment of this invention, as shown in FIGS. 1 and 4, an object key may be placed on a transparent section (25, 26) of a pedestal 28 and backlighted by a light source 48 through a lens 46 positioned below the object key so that light passes through the transparent section (25, 26) and projects an image of the object key. The transparent section of the pedestal 28 may lie in a generally horizontal plane. A suitable camera 2 is positioned to receive the image and produce an output signal which can be supplied to a computer as a means for identifying the laterally exposed attributes of the object key.

Then the backlight 48 is turned on and about five (5) pictures are taken, the camera 2 is then moved in three quarter (3/4) inch increments across a distance of about four (4) inches and the five (5) pictures are repeated at each location; these pictures are then digitalized and electronically gathered together to form one silhouette of the key in the form of a polyline; information about the shape, depth of cut, location of cuts, and location of the shoulder, etc. are extracted and stored in memory (RAM). The number of pictures taken will obviously depend on the quality and capability of the camera.

The extracted silhouette of the object key information is compared to silhouette information of known manufacturers' keys that are stored in memory (ROM), whereby, a matching key blank may be identified.

Another process for automatically making keys comprises receiving an object key on a transparent section of a means for supporting an object key, backlighting the object key by passing light through the transparent section of the supporting means and projecting an object image, receiving at least one object image of the object key, producing an output signal, and identifying laterally exposed attributes of the object key responsive to the output signal. Additionally, a comparison can be made where each master code signal defining traits of a master pixel pattern limited to the laterally exposed attributes of a selected manufacturer's key.

From such identified laterally exposed attributes, a corresponding key blank and associated key cut codes may be determined. However, this procedure is not as reliable as the multi-recognition process herein described.

With the object image captured by the camera and processed by the computer through an analog/digital converter, the attributes of an object key may be identified. The computer provides a pattern recognition means for recognizing a pixel pattern from an object image of the object key, and for producing a series of code signals with respect to each target pixel from the result of the recognition. The code signals define traits of the recognized pixel pattern for each target pixel, where the pixel patterns define attributes of the object key. Moreover, the computer is programmed to discriminate between various pixel patterns. A pattern memory in which a set of predetermined master patterns is stored in the ROM of the computer. Each predetermined master pattern is a plurality of master code signals. The master code signals define traits of a master pixel pattern, where the master pixel pattern defines attributes of a selected manufacturer's key. The computer is programmed to compare the code signals from the pattern recognition means with a corresponding master code signal and to produce an identifying signal, which defines a corresponding key blank with a predetermined master pattern having master code signals that match code signals from the result of the recognition of the pixel pattern of the object key. This process allows a corresponding key blank matching attributes of a known manufacturer's key to be determined.

In a preferred embodiment, the pattern recognition means recognizes laterally exposed attributes represented on a polyline of a silhouette of the object key. The laterally exposed attributes may include the outer shape of an object key, as illustrated in FIG. 15, or the laterally exposed key cuts, as shown on the cut key 32 of FIG. 16. When the laterally exposed attributes of an object key are recognized and compared to the master pattern memory, a corresponding key blank matching the outer shape of a known manufacturer's key may be determined.

Moreover, a plurality of discrete object images of the object key may be produced and captured, and gathered together to form an integrated pixel pattern which may be processed for recognition. In such embodiment, the code signals define traits of the recognized pixel pattern for each target pixel, where the integrated pixel pattern defines attributes of the object key.

The apparatus for making keys may backlight the object key, capture its image, repositioning the camera, and repeat the process, producing a series of backlit images which can be gathering together for an integrated image and corresponding output signal.

In addition, the referenced master pattern memory for comparison with the results of the recognition of the light stripe image may be limited to those having master code signals corresponding to the previously determined manufacturer's keys as determined from the previous match.

If there are no matches, an "expert" rejection mode is initiated wherein the backlight is turned off and an overhead light (not shown in the drawing) is turned on and at least one, but preferably five (5), pictures are taken across the four (4) inches. These pictures are gathered together and stored on the hard drive (RAM) of the computer. This type of picture, when brought upon the monitor, looks just like a "picture" of the key and can be viewed at a later time by a resident locksmith to determine exactly what kind of key it is. If it is a key that the machine should have been able to identify, but could not because the handle or some other feature of the key was slightly different, then this new information about this particular key may be added to the master memory of key silhouettes so that the next time it can be recognized. In this way, the machine will get "smarter and smarter" with use. Lastly, as the access door opens, the monitor will instruct the customer that our key making apparatus cannot currently make a duplicate of the object key and that it should be taken to a locksmith.

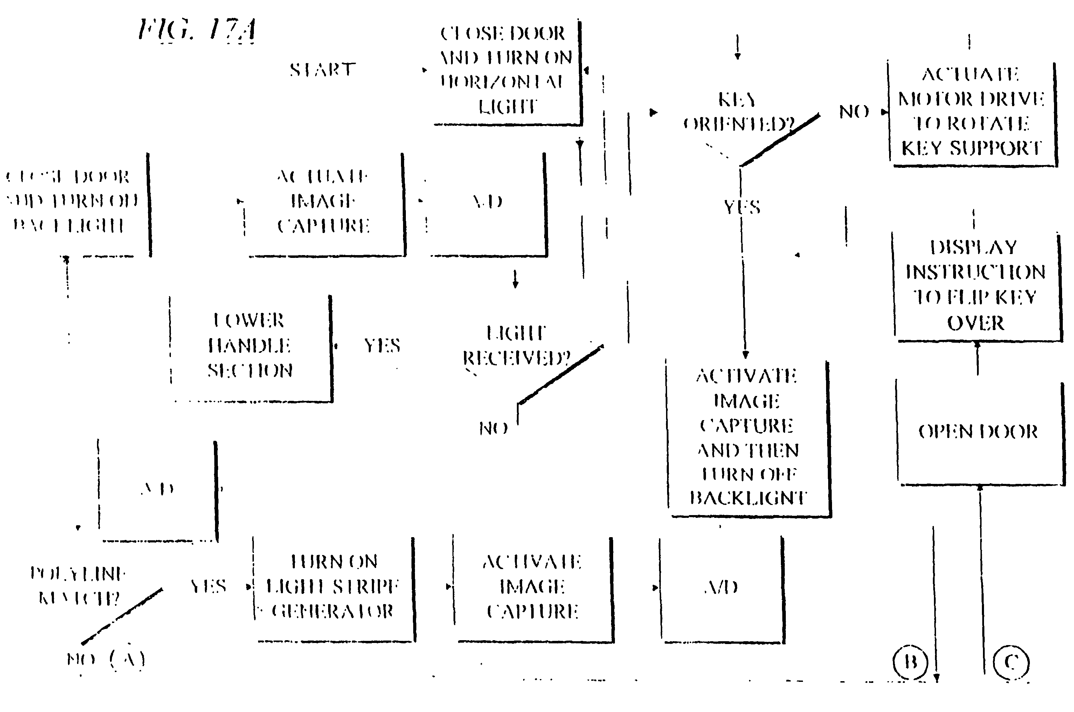

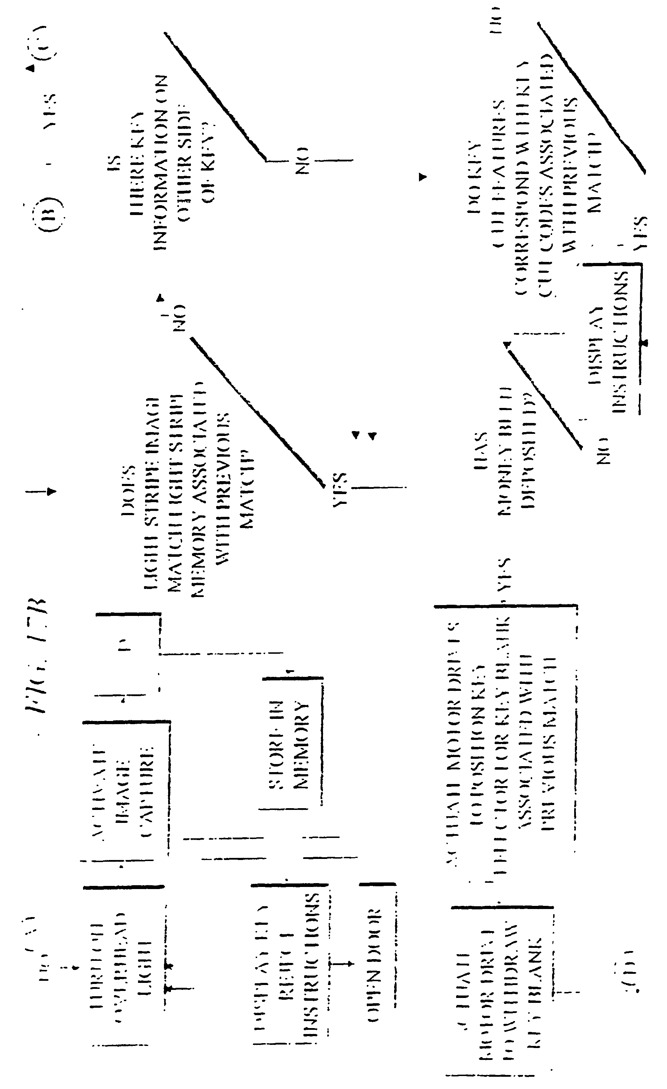

In the currently contemplated best mode of the invention, the automatic key making apparatus has a CRT video monitor which displays advertisement material and a variety of instructions. See FIG. 18 for an relational view of the electronically actuated components of the disclosed invention.

An initial rejection process is initiated when there is a lack of master code signals matching the primary code signals from the result of the recognition of the pixel pattern of the object key. In response to the rejection signal, an overhead light is turned on illuminating the object key and a picture taken of the illuminated object key. The attribute information from the picture is stored in memory.

A means is provided for storing memory data of rejected object keys. These object keys are rejected because they do not have corresponding master code signals matching the code signals from the result of said recognition of the pixel pattern of the object key. By storing memory data of rejected object keys, the key making apparatus may acquire additional information about keys that are not as yet available in its master pattern memory. This can serve to assist in the expansion of the memory database.

Additional rejection signals may be generated during the process as is more fully discussed hereinafter. See FIG. 17 for a preferred method of the processes described herein.

Referring to FIG. 4, the invented apparatus comprises a light stripe generator 12 which produces and projects a light stripe (see FIG. 16). The instant apparatus requires that the object key be aligned such that the light stripe projected on to the object key is precisely perpendicular to the longitudinal centerline of the object key. As shown in FIG. 16, a light stripe projected obliquely on to an object key reflect a two dimensional pattern (illustrated as 20a, 20b, 20c, and 20d) which can be used to interpret the three dimensional characteristics of the key from the respective light stripes.

The preferred embodiments depicted in FIGS. 1 and 4 of the drawing include a light stripe generator 12 arranged and adapted to project at least one light stripe obliquely on to the object key 32 and a means for receiving an image of the projected light stripe reflected from the object key.

The light stripe generator 12 may be comprised of a collimated light source, i.e. a bulb 10, a disk having a slit 6, and an convex lens 4, where the disk 6 is positioned between the light source 10 and the lens 4 to project a light stripe. The light stripe generator 12 uses a 1.6/75 lens to produce a pattern light source with a 25 watt halogen light source. A preferred embodiment provides for the light of the of the light stripe generator to pass through a slit of 0.13 mm (0.005 inches) giving a 0.38 mm (.015 inch) wide light stripe at the object key.

Alternatively, a laser adapted to produce an array which forms a line may be applied.

Furthermore, the light stripe method functions to recognize laterally protected attributes of the object key which result from capturing the image of at least one light stripe being projected obliquely on to the blade thereof.

A preferred process involves the following steps: projecting at least one light stripe obliquely on to an object key; receiving an object image of the light stripe of laterally protected attributes of the object key, recognizing a pixel pattern from the object image, producing a series of code signals that define traits of the recognized pixel pattern for each target pixel from the result of the recognition, comparing the code signals with master code signals from a master pattern memory, the master code signals defining traits of a master pixel pattern of a selected manufacturer's key, and producing an identifying signal from such comparison, the identifying signal defining a corresponding key blank with a predetermined master pattern having master code signals that match code signals from the result of the recognition of the pixel pattern of the object key. In addition, key cut codes may also be identified utilizing this method.

In another application of the foregoing method the steps may be taken in the sequence presented.

If the silhouette matches, then we match the light stripe with the master light stripes of one or more keys with the same silhouette in memory.

To insure optimum image capture of the object key, the camera 2 may be moved along the rail 18 and a series of camera pictures taken and then gathered together to form a composite picture as to the light stripe, as best shown in FIGS. 1 and 4. It is preferred that the movement of the assembly be made in increments of about 1.3 mm (.050 inches). Furthermore, by varying the exposure factors, reflectivity variations which may result from object key wear and dirt, may be corrected when the plurality of sequential images of the light stripe taken along an object key are gathered together and aberrant images are discarded.

The light stripe generator 12 is actuated to project a light stripe on to the blade of the object key (the object key may be rotated 90 degrees, if necessary, to align its longitudinal centerline at a right angle with the light stripe). In a preferred embodiment, the camera 2 takes about five (5) light stripe pictures over a distance of about 12.7 mm (one-half (1/2) inch), so a picture is taken every 2.5 mm (one-tenth (1/10) of an inch) at five (5) different locations, with the first being taken near the shoulder where grooves begin. At each light stripe location, a number of pictures are taken at different exposure times to compensate for surface reflectivity.

The exposure times start fast and finish slow. Time factors are 2, 4, 8, 16, 32, 64, 128, etc., with pictures taken until either the last picture is overexposed or the maximum time limit is reached, at which point the camera moves to the next light stripe location and begins the next set of pictures at increasing exposure times. The optimum picture at a specific location is selected for comparison using the best exposure times and the best picture location.

A method for automatically making keys comprises: a. backlighting an object key and projecting an image; b. receiving at least one backlit object image of the object key; c. recognizing a pixel pattern from the backlit object image; d. producing a series of primary code signals that define traits of the recognized pixel pattern for each target pixel from the result of the recognition, the target pixels defining a polyline of laterally exposed attributes of the object key; e. comparing the primary code signals relating to the outline shape of the polyline with corresponding master code signals from a master pattern memory, each master code signal defining traits of a master pixel pattern of the shape of a selected manufacturer's key; f. producing a first rejection signal from such comparison, the rejection signal defining a lack of corresponding master code signals matching the primary code signals from the result of the recognition of the pixel pattern of the object key; and, in response to the first rejection signal: g. turning on an overhead light and illuminating the object key; h. receiving at least one object image of the illuminated object key and producing first memory signal; and i. storing the first memory signal.

As best shown in FIG. 1 of the drawing, the present invention provides a preferred embodiment of the invention where the light stripe generator 12 and the camera 2 are in a fixed positional relationship with each other and may be repositioned in tandem. This is accomplished by affixing the generator 12 and camera 2 to a holding bracket 16 which is movable linearly along a rail 18 that is parallel to the longitudinal centerline of the object key as it is positioned to have the light stripe projected on to it. The best mode contemplated is for the light stripe generator 12 to be positioned at a 45 degree angle from the plane of the top 22 of the pedestal 28.

As shown in FIG. 1 of the drawing, the present invention provides an elongated horizontal rail 18 having its longitudinal axis lying perpendicular to the light stripe. A bracket 16 slidingly supported by the rail 18, with the bracket 16 supporting the light stripe generator 12 and the camera 2 for receiving an image 24 of the light stripe. The camera 2 and the light stripe generator 12 are attached to the bracket 16 and in fixed positional relationship with each other. A motor 14 moves the bracket 16 along the rail 18, whereby, the light stripe generator 12 and the camera 2 can be moved in tandem along the rail 18 and images 24 of the light stripe projected along an object key may be extracted.

It should be readily understood that the process of varying the exposure for the light stripe images and the process of repositioning the imaging assembly are complementary and may therefore be used separately or together.

As best shown in flow diagram, FIG. 17 of the drawing, the present invention provides that if the light stripe information fails to match, then an inquiry mode is initiated to determine whether there may be information on another side of the object key from information in the master pattern memory relating to the previously selected manufacturer's key, if there is, then the monitor instructs the customer to "turn the key over" and "close the door", and the entire process to this point is repeated. This time the light stripe information is taken from the other side of the key in an attempt to identify the key with this additional information. If there is no additional useful information on the other side of the object key as determined from the master memory or from looking at the other side, then the "expert" rejection mode is initiated.

An inquiry process to determine whether additional attribute information is disposed on the underside of an object key includes: a. backlighting an object key and projecting an image; b. receiving at least one backlit object image of the object key; c. recognizing a pixel pattern from the backlit object image; d. producing a series of primary code signals that define traits of the recognized pixel pattern for each target pixel from the result of the recognition, the target pixels defining a polyline of laterally exposed attributes of the object key; e. comparing the primary code signals relating to outline shape of the polyline with corresponding master code signals from a master pattern memory, each master code signal defining traits of a master pixel pattern relating to the shape of a selected manufacturer's key; f. producing a first identifying signal from such comparison, the first identifying signal defining a corresponding key blank with a predetermined master pattern having master code signals that match code signals from the result of the recognition of the pixel pattern of the object key, whereby, a corresponding selected manufacturer's key and a corresponding key blank responsive to the first identifying signal may be determined; g. projecting at least one light stripe on to an object key; h. receiving an object image of the light stripe of laterally protected attributes of the object key; i. recognizing a pixel pattern from the object image of the light stripe of the laterally protected attributes of the object key; j. producing a series of secondary code signals that define traits of the recognized pixel pattern for each target pixel from the result of the recognition, the target pixels defining a light stripe of the laterally protected attributes of the object key; k. comparing each of the secondary code signals with corresponding master code signals from a master pattern memory, each master code signal defining traits of a master pixel pattern of the laterally protected attributes of the selected manufacturer's key; l. producing an inquiry signal from such comparison, the inquiry signal defining a lack of corresponding master code signals matching the secondary code signals from the result of the recognition of the pixel pattern of the object key; and, in response to the inquiry signal: m. determining whether there may be information on another side of the object key from the master pattern memory relating to the selected manufacturer's key, and producing a rejection signal, the rejection signal defining a lack of information on another side of the object key; and, in response to the rejection signal: n. turning on an overhead light and illuminating the object key; o. receiving at least one object image of the illuminated object key and producing a memory signal; and p. storing the memory signal.

The key cut attributes of the object key are extracted by the backlighting method previously discussed. If the key cut codes of an identified key blank fail to match up, then the "expert" rejection mode is initiated.

A method for automatically making keys comprises: a. projecting a light stripe from a light stripe generator obliquely on to an object key; b. receiving an object image of the light stripe of the object key; c. repositioning an assembly of the light stripe generator and the object image receiver which are in fixed positional relationship with each other; d. repeating steps a, b, and c; e. gathering together the plurality of object images and producing an integrated object image; f. recognizing a pixel pattern from the integrated object image; g. producing a series of code signals that define traits of the recognized pixel pattern for each target pixel from the result of the recognition; h. comparing the code signals with corresponding master code signals from a master pattern memory, each master code signal defining traits of a master pixel pattern of laterally protected attributes of a selected manufacturer's key; and i. producing an identifying signal from such comparison, the identifying signal defining a corresponding key blank with a predetermined master pattern having master code signals that match code signals from the result of the recognition of the pixel pattern of the object key.

A preferred multi-recognition process, illustrated in part in the flow diagram, FIG. 17 (but excluding the inquiry and rejection steps of the diagram), comprises: a. receiving an object key having a blade and a handle on a rotatable means for supporting an object key having a transparent section with a fixed blade section adjacent to a movable handle section; b. backlighting the object key by passing light through the transparent section of the supporting means and projecting an image; c. receiving at least one object image of the object key; d. determining from the object image the position of the longitudinal centerline of the object key relative to a light stripe which may be projected on to the object key by a light stripe generator; e. producing a first output signal corresponding to the determination; f. rotating the means for supporting an object key for alignment with a line perpendicular to a light stripe which may be projected on to the object key by a light stripe generator in relation to the first output signal; g. projecting a generally horizontal beam of light immediately above the means for supporting an object key and transverse to the blade of the object key supported thereon; h. receiving the light of the horizontal beam that is not obstructed by the blade of an object key disposed on the blade section of the means for supporting an object key and producing at least one second output signal; i. incrementally lowering the vertical elevation of the handle section of the means for supporting an object key in relation to the second output signal; and j. repeating sequential steps g, h, and i until the light received no longer exceeds a minimum threshold, indicating that the blade of the object key is disposed flatly on the blade section; k. continuing to backlight the object key by passing light through the transparent section of the supporting means and projecting an image; l. receiving at least one backlit object image of the object key; m. recognizing a pixel pattern from the backlit object image; n. producing a series of primary code signals that define traits of the recognized pixel pattern for each target pixel from the result of the recognition, the target pixels defining a polyline of laterally exposed attributes of the object key; o. comparing the primary code signals relating to outline shape of the polyline with corresponding master code signals from a master pattern memory, each master code signal defining traits of a master pixel pattern relating to the shape of a selected manufacturer's key; p. producing a first identifying signal from such comparison, the first identifying signal defining a corresponding key blank with a predetermined master pattern having master code signals that match code signals from the result of the recognition of the pixel pattern of the object key, whereby, a corresponding selected manufacturer's key and a corresponding key blank responsive to the first identifying signal may be determined; q. projecting at least one light stripe obliquely on to an object key disposed on the transparent section, thereby creating an image of laterally protected attributes of the object key; r. receiving an object image of the light stripe of the laterally protected attributes of the object key; s. recognizing a pixel pattern from the object image of the light stripe of the laterally protected attributes of the object key; t. producing a series of secondary code signals that define traits of the recognized pixel pattern for each target pixel from the result of the recognition, the target pixels defining a light stripe of the laterally protected attributes of the object key; u. comparing each of the secondary code signals with a corresponding master code signal from the master pattern memory, the master code signals defining traits of a master pixel pattern relating to the laterally protected attributes of the selected manufacturer's key; v. producing a second identifying signal from such comparison, the second identifying signal defining that the corresponding key blank with a predetermined master pattern having master code signals matches the secondary code signals from the result of the recognition of the pixel pattern of the laterally protected attributes of the object key; w. comparing the primary code signals relating to laterally exposed key cut features of the polyline with the master code signal from the master pattern memory, the master code signals defining traits of a master pixel pattern of key cut codes of the selected manufacturer's key; x. producing a third identifying signal from such comparison, the third identifying signal defining a key cut code of the selected manufacturer's key with a predetermined master pattern having master code signals that match the primary code signals from the result of the recognition of the pixel pattern of the laterally exposed attributes of the object key, whereby, the key cut code of the object key is identified and the corresponding key blank is confirmed, in response to the third identifying signal; y. selecting the corresponding key blank from a plurality of key blanks from the identifying signal; z. grasping the key blank; aa. positioning the key blank for cutting; and ab. cutting key cut features into the key blank to create a new key.

A composite light stripe is stored in memory. This light stripe information is compared to master pattern memory relating to the previously identified key blank. If the light stripe information matches, then the apparatus continues by attempting to match the key codes: i.e. depths, spaces and distances with all the master codes of the key blank previously identified by the outer shape of the silhouette and by light stripe.

In instance during the preferred multi-recognition process there may arise a lack of correspondence between a. outer shape image recognition and the master pattern memory; b. the light stripe image recognition and the master pattern memory corresponding the key blank identified with the outer shape image recognition; or c. the key cut feature image recognition and the master pattern memory corresponding the key blank identified with the outer shape image recognition which was verified with the light stripe image recognition. In such instances, a rejection signal will be initiated turning on an overhead light and illuminating the object key, receiving at least one object image of the illuminated object key and producing a memory signal, and storing the memory signal. See FIG. 17. If required because of the configuration of the components relative to the access door of the apparatus, the pedestal 28 is then reverse rotated to place it in its starting position, the light stripe generator 12 is turned off, and the overhead light is turned on and the access door automatically opens permitting the customer to remove the object key.

If the automatic key making apparatus has successfully identified a corresponding key blank, the key cuts and the corresponding key cut codes, and the corresponding key blank is in the machines' inventory, then the monitor gives the customer instructions on how to enter a number of copies of keys desired to be made and how much money to put in a currency acceptor. The timing of this step may easily be advanced.

If we do get all three matches, then the automatic key making apparatus selects the appropriate key blank and cuts it by reference to the original manufacturer's key cut code specifications (OEM) contained in memory. The apparatus could trace cut the key. Alternatively, cuts could be a combination of the OEM and trace cutting.

The most reliable identification method involves obtaining all three matches. It is to be understood that a lesser number of matches, with a lesser standard of reliability, could be employed as well.

Additionally, the methods for automatically making keys described above may further comprise the following additional steps: a. selecting a key blank corresponding to the identifying signal from a plurality of key blanks; b. grasping the key blank; c. positioning the key blank for cutting; d. cutting key cut features into the corresponding key blank to create a new key; e. deburring the new key; and f. dispensing the new key. As shown in FIG. 18, an evacuation fan or similar device may be employed to gather burrs.

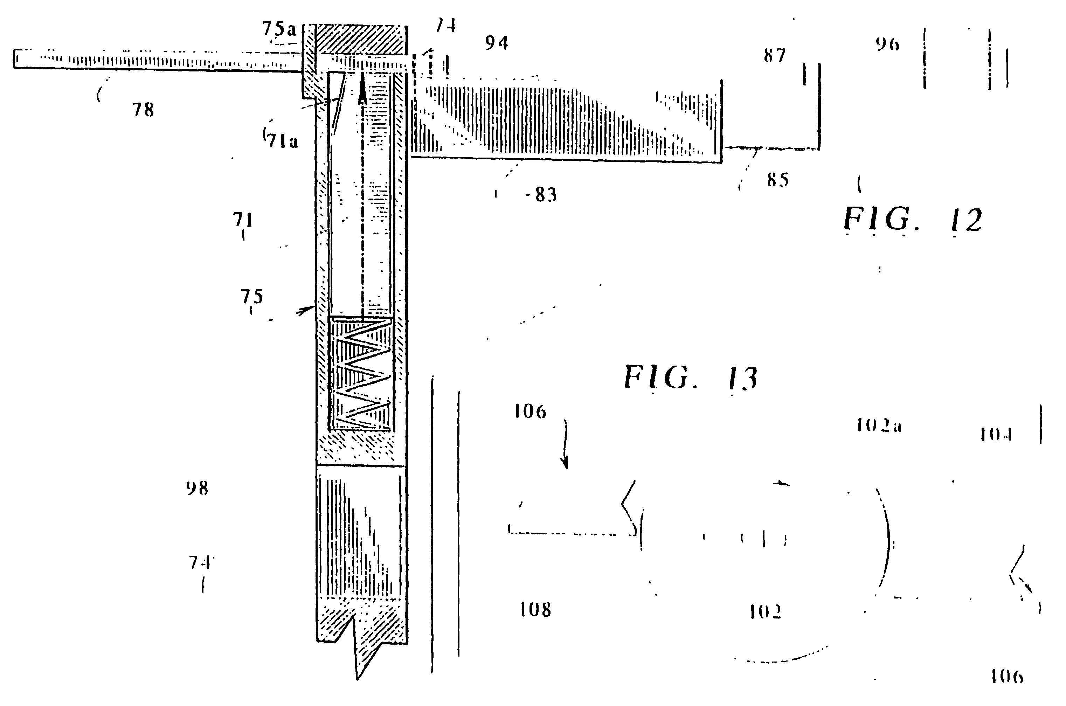

As best shown in FIG. 12, the key making apparatus comprises a means for grasping a key blank 78 while leaving the blade thereof free of constraint for cutting. Notably, a preferred embodiment of the invention allows a blade that has at least one longitudinal cuttable side edge to be cut while the side of the blade opposite the cuttable side edge is free of restriction.

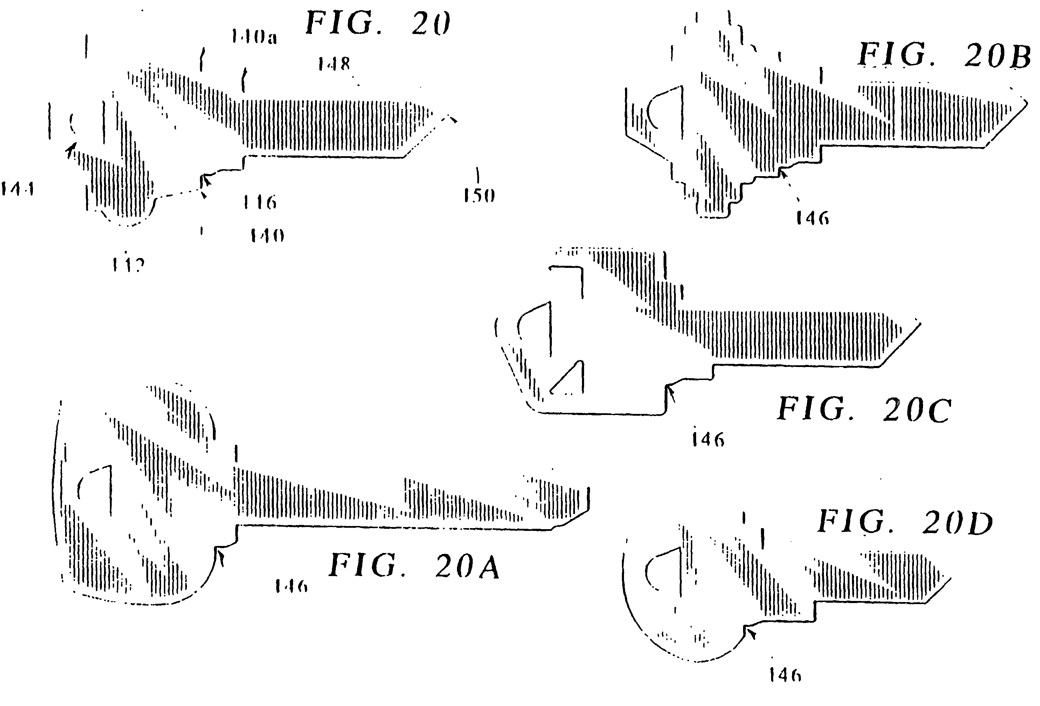

As shown in FIG. 20, a key blank comprises a blade with a tip 150 on the distal end and which terminates at the shoulder 148 on its proximate end, a shank extending longitudinally from the shoulder 148 to the hip 140 and a handle 142 having a hole 144 centrally disposed in the handle. As shown on FIG. 12, a preferred embodiment of the means for grasping is a key effector which engages a section of the key blank consisting of its handle and its shank, while leaving the opposite side of said blade free of constraint. Alternatively, the section of the key blank so engaged may be the solely the handle or solely the shank.

The key effector may be positioned to place the key blank in operative relationship with a means for cutting the longitudinal cuttable side edge thereof. FIG. 13 shows a rotary cutting wheel that may be employed to make key cuts in the blade of a key blank. A key blank having a blade with two longitudinal cuttable side edges may be grasped by a means for grasping, such as the key effector, and a first longitudinal cuttable side edge of the blade thereof placed in a face to face cutting relationship with a first side of the rotary cutting wheel, whereby cuts are made in the first cuttable side edge of the key blank. After which the means for grasping and the key blank engaged thereto may be moved in a direction which is perpendicular to longitudinal centerline of the key blank and which passes through a line extending from the axis of the rotary cutting wheel to position a second longitudinal cuttable side edge of the key blank for cutting. The means for grasping and the key blank engaged thereto may then be moved to promote a face to face cutting relationship between the second longitudinal cuttable side edge of the key blank and the opposite side of the cutting wheel, whereby cuts are made in the second longitudinal cuttable side edge of the key blank.

As is evident from the foregoing disclosure, a method for automatically making keys may comprise grasping a key blank having a blade and making cuts in the blade while leaving the blade free of constraint.

Additionally, where the blade of the key blank has at least one longitudinal cuttable side edge, a process for making keys automatically may involve making cuts in a longitudinal cuttable side edge of the blade while leaving the opposite side of the blade free of constraint.

Such processes may additionally include grasping a key blank having a blade with at least one longitudinal cuttable side edge and a handle, by its handle, by its shank, or by a section of the key blank comprising its handle and its shank.

Alternatively, in connection with a key blank having a blade with two longitudinal cuttable side edges, a method for automatically making keys may comprise cutting, with a first side of a rotary cutting wheel, a first longitudinal cuttable side edge of the key blank while leaving the opposite side of said blade free of constraint, and cutting the other longitudinal cuttable side edge of the key blank from the opposite side of the cutting wheel while leaving the opposite side of said blade free of constraint. The opposite (or other) side of the cutting wheel being a locality relative to the cutting wheel that is approximately 180 degrees from the first side of the rotary cutting wheel, that is, the locality relative to the cutting wheel where the key blank engages the cutting wheel during cutting of the first longitudinal cuttable side edge of the key blank.

Furthermore, a preferred method for automatically making keys comprises cutting, with a first side of a rotary cutting wheel, a longitudinal cuttable side edge of a key blank having a blade with two longitudinal cuttable side edges while leaving the opposite side of the blade free of constraint, moving the key blank in a direction which is perpendicular to its longitudinal centerline and which passes through a line extending from the axis of the rotary cutting wheel to position a second longitudinal cuttable side edge in a face to face relationship with the opposite side of the rotary cutting wheel for cutting, and cutting, with the opposite side of the rotary cutting wheel, the second longitudinal cuttable side edge of the key blank while leaving the opposite side of said blade free of constraint.

Additionally, a method for automatically making keys comprises grasping a key blank having a blade with two longitudinal cuttable side edges, a shank and a handle, by the section of the key blank consisting of its handle and its shank, cutting, with a first side of a rotary cutting wheel, a first longitudinal cuttable side edge of a key blank while leaving the opposite side of said blade free of constraint, moving the key blank to position a second longitudinal cuttable side edge in a face to face relationship with the opposite side of the cutting wheel, and cutting, with the opposite side of the cutting wheel, the second longitudinal cuttable side edge of the key blank while leaving the opposite side of said blade free of constraint. Movement of the key blank from the position where the first longitudinal cuttable side edge is cut to the position where the second longitudinal cuttable side edge is cut can be accomplished most efficiently by moving the key blank in a direction which is perpendicular to its longitudinal centerline and which passes through a line extending from the axis of the rotary cutting wheel. Other movements which achieve the same end result are easily cognizable.

Furthermore, another embodiment of the means for cutting (not shown in the drawing) comprises two rotary cutting wheels. One arrangement of such rotary cutting wheels is to dispose each wheel in a common plane, in a side by side relationship, for example, at a sufficient distance from one another to allow the blade of a key blank to be positioned therebetween for cutting. In such an arrangement, each longitudinal cuttable cutting side edge may be cut by one of the rotary cutting wheels.

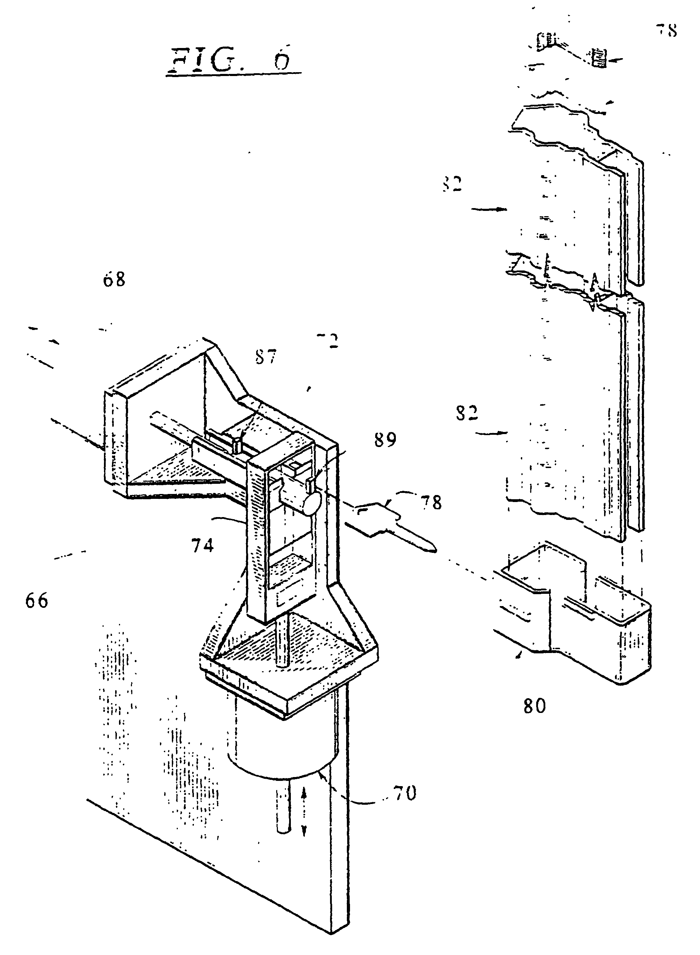

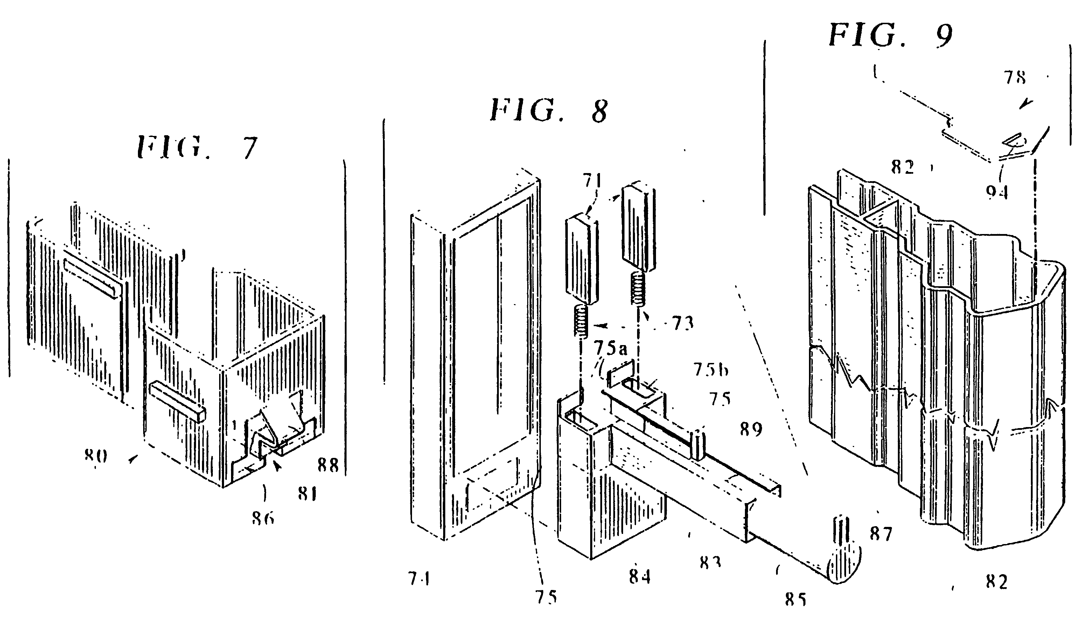

As best shown in FIGS. 7 and 9 of the drawing, the present invention provides a preferred embodiment having a means for storing a plurality of key blanks 78. Such means includes a plurality of key holding containers 82, each for holding a stack of like key blanks 78 and a dispenser cup 80 disposed at the bottom of each key holding container 78, as shown in FIG. 6, each of the dispenser cups having an opening at the top suitably sized and adapted to receive a key holding container and having a proximate front wall with a passage 86 disposed therein and a bottom wall, having at least one upwardly extending nub 92 rising more than one key blank thickness on which a key holding container 78 may be disposed, with a slot 81 centrally disposed along a portion thereof extending continuously from the passage disposed in the front wall through which a key blank may be withdrawn, as shown in FIG. 7. Each of the dispenser cups having its opening aligned in a like direction.

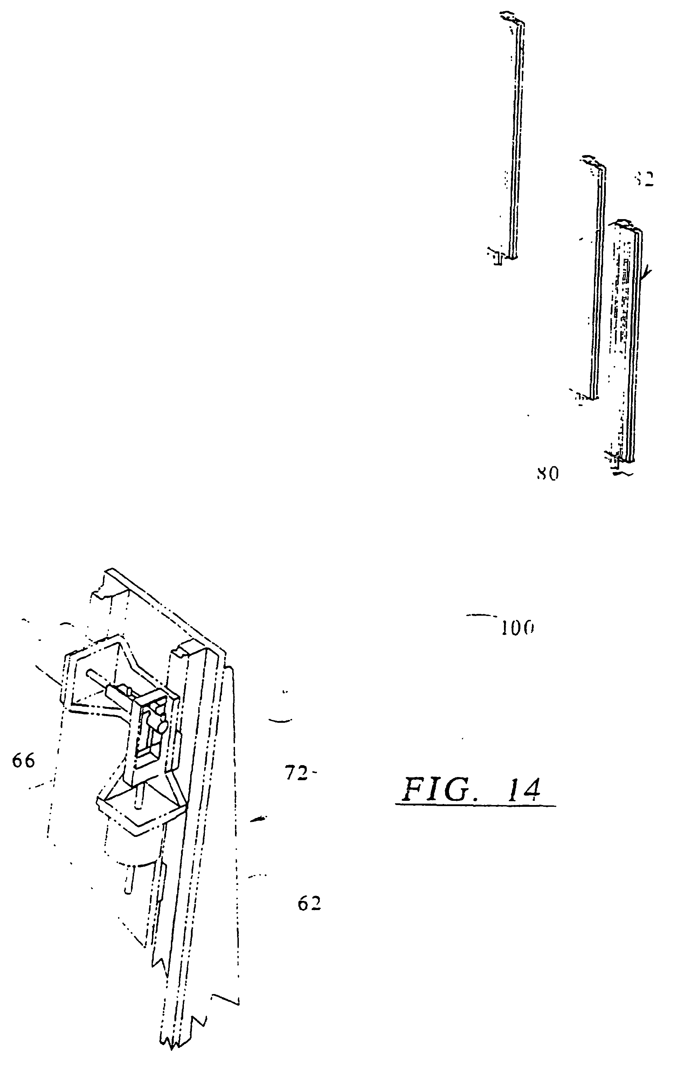

As best shown in FIG. 14 of the drawing, the present invention provides that the dispenser cups 80 are disposed in a spatial array 100 of columns and rows, wherein the columns and rows are arranged orthogonally with each dispenser cup in a row being disposed at a like elevation and with the rows being generally parallel to the proximate front walls thereof. Each row of dispenser cups 80 has a vertically spaced distance from the dispenser cups of an adjacent row, forming a generally uniform stepped relationship therebetween with the dispenser cups of a row facing the proximate front walls of the dispenser cups in an adjacent row being at a elevated spaced distance relative thereto. The spaced distance is sufficient to allow the means for grasping to access a key blank from any dispenser cup and to remove same.

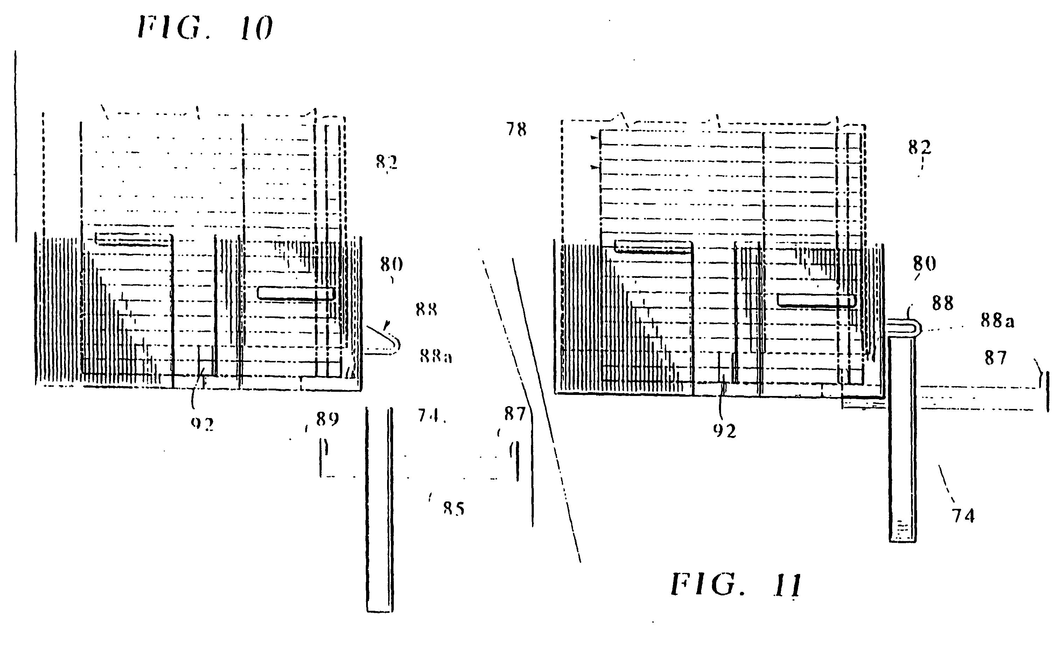

A preferred embodiment of the invention has at least one key holding container 82 having an opening at the bottom and an opening at the top and a generally uniform vertical cavity disposed therein. The cavity is suitably sized and adapted to hold a stack of horizontally positioned key blanks 78. There is a dispenser cup for each key holding container. The dispenser cups each have an opening at the top suitably sized and adapted to receive a key holding container and a proximate front wall with a passage 86 disposed therein and a bottom wall with a slot 81 centrally disposed along a portion thereof extending continuously from the passage 86 disposed in the front wall. The passage 86 is suitably sized to allow a key blank 78 to be withdrawn horizontally therethrough and has an overhead door 88 disposed thereon. As best shown in FIG. 10 of the drawing, the door 88 has a outwardly projecting contour with a live hinge pivot means 88a and it is arranged and adapted to move between a generally closed position (as shown in FIG. 10) and an open position in which the live hinge pivot means 88a is compressed leaving the passage 86 sufficiently open to permit a key blank 78 to be withdrawn therefrom (as shown in FIG. 11). This unique hinged door 88 permits a key blank positioned at the bottom of the stack to be withdrawn and the key blank positioned immediately above the bottom key blank is effectively blocked from moving horizontally by the position of the door 88.

To complete the key making process the identified corresponding key blank 78 is grasped by a key effector 72 and positioned for cutting. As shown in FIG. 13, key cut features are then cut into the key blank using a rotary cutting wheel 102 which allows cuts to be easily made to both edges of the blade, if that is required.

A preferred embodiment of a means for grasping a corresponding key blank comprises a key effector 72 having a base 56, a moveable pin positioning assembly having a pin which is suitably sized and adapted to extend into a hole 94 in the handle of a key blank 78, and a means for clamping.

As best shown in FIG. 8 of the drawing, the present invention provides the pin positioning assembly comprising a footing 84, a pair of upwardly disposed opposing collar members 75, a sleeve 83, and a rod 85 having the pin 89 uprightly and radially disposed on a distal end thereof, each of the opposing collar members 75 comprises: a bottom surface arranged and adapted to be supported on top of the footing 84 and to support the sleeve 83 disposed laterally therebetween, an inwardly directed flange extending from and parallel to its upper surface at a spaced distance from each other, each of the flanges extends over the supported sleeve 83 to limit the sleeve from independent upward movement, a proximate side wall, a distal side wall, an interior side wall, and an exterior side wall, each of the side walls having its bottom edge connected to the side edges of a bottom wall and its top edge connected to the side edges of a top surface, respectively. Each of the exterior side wall is co-planar with a lateral side surface of the footing 84, the bottom wall of each of the collar members 75 and its top surface each lie in a horizontal plane, and its side walls each lie in a vertical plane, the interior side wall is arranged and adapted to engage a side exterior wall of the sleeve 83 to limit lateral movement of same. A recess 75b forming an opening in its upper surface suitably sized and adapted to receive a spring 73 and a block 71, and an upwardly extending lip 75a on the distal end of its upper surface, each of the lips 75a on each of the respective collar members lies in a vertical plane and has a space therebetween greater than the lateral width of any of said plurality of key blanks taken across its shoulder and less than the lateral width of any of said plurality of key blanks 78 taken across its handle, a spring 73 and a spring biased block 71 normally exposed from the recess 75b in the upper surface thereof with the top of the block 71 extending higher than the vertical lips 75a and which may be compressed therein by the clamping means. As shown in FIG. 12, each block 71 may have a sloped face 71a on the distal side wall to facilitate downward movement of the block 71 when laterally contacted by a key blank 78 being withdrawn. As will be understood by those skilled in the art, the vertical lips 75a shown in the drawing as being flat and both lying in the same vertical plane, may be upraised vertical poles or flat uprising surfaces that are not necessarily co-planar. The one common feature of all such embodiments is the distance between the lips for it is at this proximate area that the lips will contact a selected key blank.

In combination with the key making apparatus described, at least one key blank (see FIG. 20 et al.) having a means for registering adapted to support the key blank against the upwardly extending lips 75a of the key effector 72 is provided. By supporting the means for registering against the upwardly extending lips 75a, the key blank can be uniformly secured to the key effector 72.

As shown in FIG. 20, the means for registering comprises a hip 140 disposed longitudinally between the shoulder 148 and the handle 142 of the key blank. The hip 140 has an upper nub 140a and a mirror image lower nub disposed symmetrically about the longitudinal centerline of the key blank, each nub having a uniform contour with adjacent longitudinal and transverse contact surfaces, said longitudinal contact surface 146 extends generally longitudinally from the transverse contact surface toward the shoulder and said transverse contact surface emanates in a plane that is perpendicular to the longitudinal centerline of said key blank, each of said longitudinal contact surfaces 146 is disposed at a lateral distance from the longitudinal centerline that is greater than one half of the lateral width of the key blank taken across its shoulder 148. Alternatively, each of the contact surfaces 146 may be disposed at a lateral distance from the longitudinal centerline of the key blank sufficient to allow each of the contact surfaces to simultaneously engage an upwardly extending lip 75a of the respective collar members of the key effector 72. The hip 140 of the key blank is adapted to register the key blank by uniformly supporting it against the upwardly extending lips 75a of the key effector 72.

As shown in FIGS. 20, 20A, 20B, 20C, and 20D, the key blanks disclosed herein are improved key blanks, for use with an automatic key making apparatus having a key effector with upwardly extending lips for grasping a key blank, of the type in which a key blank of generally planar configuration having an elongated blade with a blade tip 150 on one end and a blade butt on the other end, a shoulder 148 extending laterally from the blade butt, a handle 142, and a shank between the shoulder 148 and the handle 142, wherein the improvement comprises a means for registering adapted to support the key blank against the upwardly extending lips of the key effector.

The means for registering of the improved key blank includes a hip 140 disposed longitudinally between the shoulder and the handle of the key blank. The hip 140 has an upper nub 140a and a mirror image lower nub disposed symmetrically about the longitudinal centerline of the key blank. Each nub having a uniform contour with adjacent longitudinal and transverse contact surfaces, said longitudinal contact surface extends generally longitudinally from the transverse contact surface toward the shoulder and said transverse contact surface emanates in a plane that is perpendicular to the longitudinal centerline of said key blank, and each of said longitudinal contact surfaces is disposed at a lateral distance from the longitudinal centerline that is greater than one half of the lateral width of the key blank taken across its shoulder. Note that the improvements disclosed can be employed with any kind of handle and any kind of blade, only the hip 140 criteria must be uniform.

In another preferred embodiment, the means for registering comprises a hip 140 disposed longitudinally between the shoulder 148 and the handle 142 of the key blank, where the hip 140 has an upper nub 140a and a mirror image lower nub disposed symmetrically about the longitudinal centerline of the key blank. Each nub has a uniform contour with a contact surface emanating from a plane that is perpendicular to the longitudinal centerline of the key blank, and each of the contact surfaces is disposed at a lateral distance from the longitudinal centerline of the key blank sufficient to allow each of the contact surfaces 146 to simultaneously engage an upwardly extending lip 75a of the respective collar members 75 of the key effector. In this way, the hip 140 of the key blank is adapted to register the key blank by uniformly supporting it against the upwardly extending lips 75a of the key effector 72.

The sleeve 83 has a generally elongated shape with a cylindrical cavity extending longitudinally therein forming openings on each end thereof and a cavity surface arranged and adapted to slidingly secure the rod 85 which may move axially therein. As best shown in FIG. 8, the sleeve 83 further has a slot centrally disposed longitudinally along its upper surface whereby the rod 85 may move axially within the sleeve 83 without the upwardly extending pin 89 being impeded.

Referring also to FIG. 6, the rod 85 is axially connected at its proximate end to a first actuable means 68 for providing axial movement and having a diameter slightly smaller than the diameter of the cylindrical cavity of the sleeve 83 so that it may slidingly move axially therein. The top of the upwardly extending pin 89 extending higher than the top of normally exposed spring biased blocks 71. The springs 73 serve to temporarily hold a key blank 78 in key pressing position prior to clamping and further providing potential energy to discharge the key blank following cutting and the removal of the means for clamping.

Referring again to FIG. 8, the footing 84 has the shape of a square prism with a horizontal upper surface, two lateral side walls, and a proximate side wall and a distal side wall and the sleeve is supported by and positioned between the upwardly disposed opposing collar members 75. The upwardly disposed opposing collar members 75 are supported by and attached to the upper surface of the footing 84.

As shown in FIG. 6, the means for clamping comprises a clamp 74, connected to a second actuable means 70 for providing vertical movement, having a bottom wall, two parallel side walls, and a top wall, and having a rectangular aperture 98 bounded by the bottom surface of the top wall, the top surface of the bottom wall and the interior surface of each side wall. The rectangular aperture 98 of the clamp 74 is suitably sized and adapted to encompass the footing 84 and collar members 75 of the pin positioning assembly and move vertically with respect thereto between a first position, in which the bottom surface of the top wall is at,a spaced distance above the upwardly extending pin 89, and a second position, in which the lower surface of the top wall is below the upper edge of the upwardly extending lips 75a of the collar members 75 and in operative association with the upper surface of the collar members 75.

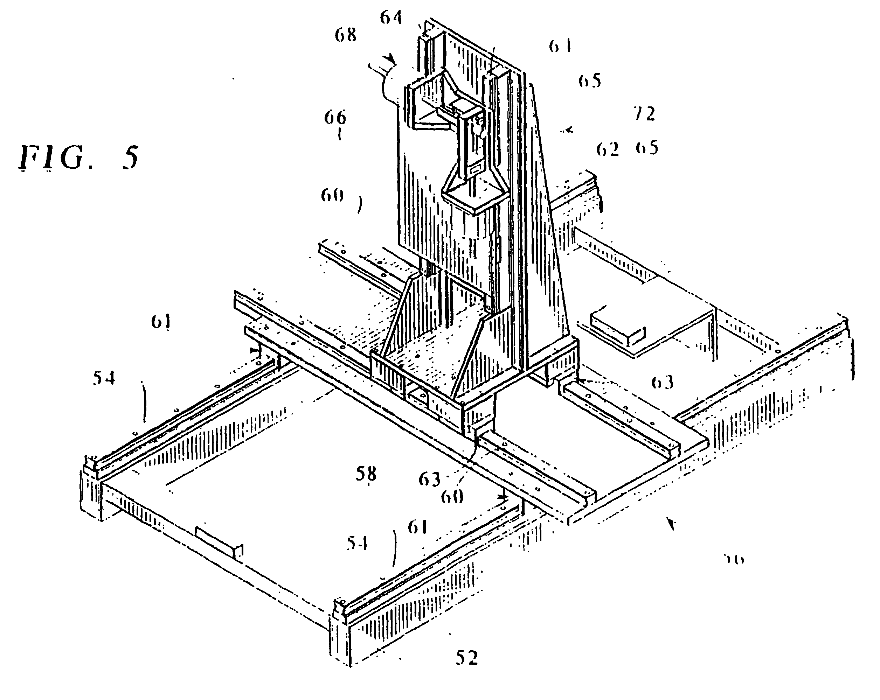

As shown in FIG. 5, the base 56 has four subbases including a first subbase 52 having a fixed position and a first system of linear slide motion guides, comprised of at least one linear rail 54 and associated slide 61, disposed thereon, a second subbase 58 engaged to the first system of linear slide motion guides and moveable thereon and having a second system of linear slide motion guides, comprised of at least one linear rail 60 and associated slide 63, disposed thereon, a third subbase 62 engaged to the second system of linear slide motion guides and moveable thereon and having a third system of linear slide motion guides, comprised of at least one linear rail 64 and associated slide 65, disposed thereon, and a fourth subbase 66 engaged to the third system of linear slide motion guides and moveable thereon and having the key effector 72 attached thereto.

The second subbase 58 has a first subbase motor means (not shown in the drawing) to move it along the first system of linear slide motion guides engaging it to the first subbase 52, the third subbase 62 has a second subbase motor means (not shown in the drawing) to move it along the second system of linear slide motion guides engaging it to the second subbase 58, the fourth subbase 66 has a third subbase motor means (not shown in the drawing) to move it along the third system of linear slide motion guides engaging it to the third subbase 62. The respective systems of linear slide motion guides are arranged mutually perpendicular, whereby, each of the subbase motor means moves the key effector 72 linearly in a direction perpendicular to the movement effected by the other subbase motor means.

Referring to the illustration in FIG. 6 and details shown in FIGS. 10 and 11, the key effector 72 operably withdraws a key blank 78 from the key dispenser cup 80 by positioning the upwardly extending pin 89 at a spaced distance below and in alignment with a hole 94 in the handle of a corresponding key blank 78 and with the clamp 74 disposed in the first position, as shown in FIG. 10. The key effector 72 is moved up to a point where the pin 89 enters the hole 94 of the bottom key blank 78 in the stack. As the key effector 72 is moved upwardly placing the pin 89 into engagement with the hole 94 in the handle of the corresponding key blank 78, the upper surface of the top wall of the clamp 74 push against the hinged door 88 of the dispenser cup 80 opening the door 88 to allow access for withdrawing the key blank 78, as shown in FIG. 11.

A preferred method comprises actuating at least one subbase motor drive to position a key effector in operative association with a corresponding key blank in response to an identifying signal, actuating a first actuable means 68 to cause the key effector to withdraw the corresponding key blank 78 from a holding means, actuating a second actuable means 70 to secure the corresponding key blank 78 with a clamping means, actuating at least one subbase motor drive for the means for cutting, actuating at least one subbase motor drive to position the key effector and the secured corresponding key blank in operative association with the means for cutting to cut a new key, actuating the second actuable means to release the clamping means, and actuating at least one subbase motor drive to position the new key for dispensing.

The key effector 72 has a control means operatively connected to each of the subbase motor means and to the first and second actuable means (68 and 70, respectively) for withdrawing the corresponding key blank 78 from the dispenser cup 80 and restraining the movement of the corresponding key blank 78 with the clamp 74.

A method for automatically grasping and cutting during the key making process comprises actuating at least one subbase motor drive, each of said subbase motor drives being arranged and adapted to move one of the moveable subbases, to position a key effector 82 having a moveable rod 85 with an upwardly extending pin 89 in operative association with a corresponding key blank 78 in response to an identifying signal, actuating the first actuable means 68 to horizontally move the rod 85 axially to position the upwardly extending pin 89 at a spaced distance below and in alignment with a hole 94 in the handle of the corresponding key blank 78, actuating a motor drive to vertically position the pin 89 of the key effector 72 into the hole 94 in the handle of the corresponding key blank 78, actuating the first actuable means 68 to horizontally draw in the rod 85 axially to withdraw the corresponding key blank 78 from a holding means, actuating the second actuable means 70 to secure the corresponding key blank 78 with a clamping means, actuating a means for cutting, actuating at least one subbase motor drive to position the key effector and the secured corresponding key blank in operative association with the means for cutting to cut a new key, actuating the second actuable means 70 to release the clamping means, and actuating at least one subbase motor drive to position the new key for dispensing.

As the key effector pin 89 is pulled back, the key handle passes over the upwardly extending lips 75a of the collar members 75, the clamp 74 is moved 95% down and the pin 89 is moved forward pushing the handle of the key blank 78 forward causing the front of the key handle to engage the upwardly extending lips and a pressure is applied, as shown in FIG. 12.
Approximately fifty pound per square inch of pressure is preferred. Then, the clamp 74 is moved down further until approximately fifty pound per square inch of pressure is exerted on the key blank handle. The key blank 78 is now securely clamped.

As shown in FIG. 12, the rod 85 may have a second upwardly extending pin 87 to activate a limit switch 96, which shown in phantom.

To insure accuracy in the key cutting operation, a means for indicating the actual position of the key blank relative to the key effector is provided to correct misalignments that may occur.

The foregoing method comprises the steps of actuating at least one subbase motor drive to position the key effector and the secured corresponding key blank in operative association with a position indicator to determine the actual position of the key blank relative to the key effector, and producing a positioning signal for correcting alignment between the cutting wheel and the misaligned key blank. The secured key blank is moved over to a position indicator where its is measured at two points. One point near the tip of the key blank and the other near the handle. This information is stored and processed so that when the cuts are made in the key blank 78, the exact alignment of the secured key blank is taken into account. If the key blank is skewed a little, then the cuts can be correspondingly corrected. One such position indicator with a reading range from 0 to 25 millimeters distributed as Fowler Ultra-Digit Mark IV indicator is preferred.

The motors that finitely move the various components of the apparatus preferably range from 2 amp to 8 amp and can be servo or stepper motors similar to those manufactured by Anaheim. The motors may be controlled by a motion control board installed on the PC such as those manufactured by NuLOGIC.

As best shown in FIG. 13 of the drawing, the present invention provides a means for cutting key cut features into the corresponding key blank comprises a key cutting wheel 102 rotatable in at least one direction and having at least one anvil 106 adjacent thereto for each rotatable cutting direction. Each anvil 106 has a flat contact surface (104 and 108, respectively) lying in a plane that is perpendicular to a tangent line of the cutting wheel 102. Additionally, the anvil 106 serves to brace the blade of a corresponding key blank 78 disposed flatly on the flat contact surface (104 or 108) thereof by the key effector 72 for cutting and to block movement of the key blank 78 caused by the tangential forces generated by the key cutting wheel 102. As illustrated in FIG. 18, the key effector control means selectively actuates each of the subbase motor means to dispose the blade of the corresponding key blank 78 grasped by the key effector 72 flatly on the flat contact surface (104 or 108) of the anvil 106 and to place selected portions of the key blank 78 in operative cutting relation to the key cutting wheel 102 in response to the identifying signal, whereby key cut features are cut into the key blank 78.

The key making apparatus preferably cuts key cut features into the key blank in accordance with the selected lock manufacturer's original key cut codes. These manufacturer original key cut codes are stored in the master pattern memory.

Alternatively, although not the preferred method since it may copy worn, dirty, or damaged aspects of an object key, the identifying signal may further define key cut features of the object key that can be cut into a new key blank.

After cutting the cut key is moved over to a deburring means (basically a knife edge) and the newly cut portion of the key is dragged across the knife edge scrapping off any burrs.

For deburring, the key effector control means selectively actuates each of the subbase motor means to place the key effector in position to deburr - to make physical contact with an object whereby burrs are removed.

After the cutting operation is complete, the key effector control means selectively actuates each of the subbase motor means to place the key effector in position to dispense the new key. In such position the second actuable means is actuated to raise the clamp and the first actuable means is actuated to move the rod proximately to release the new key from contact with the upwardly extending lips.

By means of a computing means (see FIG. 18), the required object key positioning can be controlled. A computer comprising a first ROM for storing a program controlling the operation of said components and said controlling means, RAM for storing extracted attributes and the position of the object key and various data associated with operation, and a CPU for executing said program and a second ROM for storing the plurality specific key manufacturers' data representing at least master patterns for the plurality of selected key blanks disposed in the key blank dispensers.

In the foregoing disclosure, a preferred means for identifying attributes of an object key, for determining the position of the longitudinal centerline of the object key relative to a light stripe, for controlling the horizontal leveling, for recognizing the object key attributes, for storing such information about the object keys and the plurality of key blanks (master pattern memory), for comparing, and for selecting a corresponding key blank and associated key cut codes, a computing means having an analog/digital signal converter is preferred.

While the current best mode contemplates the use of one computer to serve all controlling and processing functions, individual controllers could easily be employed. A positioning control means is operably connected and responsive to the output signal from the means for determining the position of the object key and is operably connected to a means for rotating the transparent section of the pedestal. In this mode, the longitudinal centerline of an object key can be aligned perpendicular to a light stripe projected on to the object key by a light stripe generator and the light stripe generator can be positioned to project a light stripe on to the object key at the location where the grooves begin.

In another preferred embodiment of the invention for automatically making keys a non-contact means for extracting attributes of an object key comprises a light stripe generator which is arranged and adapted to project at least one light stripe obliquely on to an object key and a light receiver is arranged and adapted to receive an image of the projected light stripe reflected from the object key, and a means for identifying attributes relating to key cut codes of an object key that is operably connected and responsive to the output signal from the means for receiving an object image.

It will be obvious to one skilled in the art of image recognition that other methods employing optical character recognition, magnetic resonance imaging, or hologramatic imaging could be utilized. Moreover, an apparatus employing other known light generators and light receivers, could easily be employed.

## Claims

1. A key making apparatus utilizing attributes of an object key (32) having a longitudinal axis comprising:
means for extracting attributes of an object key (32); and
means (28) for supporting the object key (32) for establishing an operative positional relationship between the object key (32) and the attribute extracting means;
**characterised in that** said supporting means supports the object key (32) in an unconstrained manner, is rotatable and has a transparent section (25, 26) on which the object key may be placed;
said attribute extracting means having backlighting means (48) arranged and adapted to pass light through the transparent section (25, 26) of the supporting means (28) and project an image of the object key (32) positioned thereon, means (2) for receiving the object image of the object key (32) and producing an output signal, means for determining the position of the longitudinal axis of the object key relative to a light stripe (20) which may be projected on to the object key (32) by a light stripe generator (12) responsive to the output signal produced by the receiving means (2), means (30) for rotating the supporting means (28), an object key positioning control means that is operably connected and responsive to an output signal from the means for determining the position of the object key and that is operably connected to the means (30) for rotating the supporting means (28),
whereby, the longitudinal axis of an object key can be aligned perpendicular to the light stripe projected on to the object key (32) by the light stripe generator (12).

2. A key making apparatus according to claim 1, further comprising:
a means for determining the initial relative orientation of the object key as loosely supported on a surface;
a non-contact means for extracting laterally exposed key cuts and attributes of the outer shape of the object key, whereby key cut codes of the object key can be recognized.

3. A key making apparatus of any preceding claim, wherein the means for extracting attributes of an object key further comprises:
a means for determining the initial relative orientation of the object key as loosely supported on a surface;
a means (2) for receiving at least one object image of the laterally exposed key cut attributes of the object key (32) positioned on said transparent section (25,26) and producing an output signal correlated to said key cuts; and
a means for identifying laterally exposed attributes of the object key (32) that is operably connected and responsive to the output signal correlated to said key cut attributes of the object key of the means for receiving an object image of the object key,
whereby, a key blank and key cut codes from which the object key is made can be identified.

4. A key making apparatus of any preceding claim, wherein the non-contact means for extracting attributes of an object key comprises:
means for extracting laterally protected attributes including longitudinal grooves (116) of an object key (32) having:
a. the light stripe generator (12) arranged and adapted to project at least one light stripe obliquely on to the object key; and
b. a means for receiving an object image is arranged and adapted to receive an image of the projected light stripe reflected from the object key,
whereby, the laterally protected attributes including longitudinal grooves of the object key can be extracted.

5. A key making apparatus of any preceding claim, wherein the means for identifying attributes of an object key comprises:
a. a pattern recognition means for recognizing a pixel pattern from an object image of the object key, and for producing a series of code signals with respect to each target pixel from the result of said recognition, said code signals defining traits of the recognized pixel pattern for each target pixel, said pixel patterns defining attributes of the object key; and
b. a discrimination means having a pattern memory in which a set of predetermined master patterns is store d, said predetermined master patterns being a plurality of master code signals, said master code signals defining traits of a master pixel pattern, said master pixel pattern defining attributes of a selected manufacturer's key, for comparing the code signals from the pattern recognition means with a corresponding master code signal, and for producing an identifying signal,
said identifying signal defining a corresponding key blank having a hole in the handle thereof with a predetermined master pattern having master code signals that match code signals from the result of the recognition of the pixel pattern of the object key,
whereby, a corresponding key blank matching attributes of a known manufacturer's key may be determined.

6. A key making apparatus according to claim 5, wherein the pattern recognition means recognizes an integrated pixel pattern from a plurality of discrete object images of the object key.

7. A key making apparatus of any preceding claim, wherein the means for identifying attributes of an object key comprises:
a. a pattern recognition means for recognizing at least one object image of the object key, and for producing a series of code signals with respect to each target pixel from the result of said recognition, said code signals defining traits of the recognized pixel pattern for each target pixel, said pixel patterns defining laterally exposed attributes represented on a polyline of a silhouette of the object key; and
b. a discrimination means having a pattern memory in which a set of predetermined master patterns is stored, said predetermined master patterns being a plurality of master code signals, said master code signals defining traits of a master pixel pattern, said master pixel pattern defining laterally exposed attributes of a selected manufacturer's key, for comparing the code signals from the pattern recognition means with a corresponding master code signal, and for producing an identifying signal,
said identifying signal defines a corresponding key blank having a hole in the handle thereof with a predetermined master pattern having master code signals that match code signals from the result of the recognition of the pixel pattern of the object key,
whereby, a corresponding key blank matching the outer shape of a known manufacturer's key may be determined.

8. A key making apparatus of any of claims 5 to 7, wherein the identifying signal further defines a key cut code identified with the corresponding key blank (78),
whereby, key cuts conforming to the key cut codes of a known manufacturer's key may be determined.

9. A key making apparatus of any of claims 5 to 7, wherein the identifying signal further defines key cut features of the object key (32) that correspond generally with key cut codes identified with the corresponding key blank (78),
whereby, the key cut features of the object key may be determined for use with the corresponding key blank (78).

10. A key making apparatus of any of claims 5 to 7, comprising a means (82) for storing a plurality of key blanks, a means for selecting a corresponding key blank from the plurality of key blanks in response to said identifying signal, and a means (72) for grasping a corresponding key blank.

11. A key making apparatus of claim 10, wherein the means for storing a plurality of key blanks comprises:
a. a plurality of key holding containers (82), each for holding a stack of like key blanks (78); and
b. a dispenser cup (80) disposed at the bottom of each key holding container (82),
each of said dispenser cups (80) having an opening at the top suitably sized and adapted to receive a key holding container (82) and having a proximate front wall with a passage (86) disposed therein and a bottom wall with a slot (81) centrally disposed along a portion thereof extending continuously from the passage disposed in said front wall through which a key blank (78) may be withdrawn,
each of said dispenser cups having its opening aligned in a like direction,
said dispenser cups (80) being disposed in a spatial array of columns and rows, said columns and rows being arranged orthogonally,
each dispenser cup (80) in a row being disposed at a like elevation, said row being generally parallel to the proximate front walls thereof,
each row of dispenser cups having a vertically spaced distance from the dispenser cups of an adjacent row and forming a generally uniform stepped relationship therebetween with the dispenser cups of a row facing the proximate front walls of the dispenser cups in an adjacent row being at a elevated spaced distance relative thereto, said spaced distance being sufficient to allow the means for grasping to access a key blank (78) and to remove same.

12. A key making apparatus of claim 10, wherein the means for storing a plurality of key blanks comprises:
a. at least one key holding container (82) having an opening at the bottom and an opening at the top and a generally uniform vertical cavity disposed therein, said cavity being suitably sized and adapted to hold a stack of horizontally positioned key blanks (78); and
b. a dispenser cup (80) for each key holding container (82), said dispenser cup (80) having a opening at the top suitably sized and adapted to receive a key holding container (82) and having a proximate front wall with a passage (86) disposed therein and a bottom wall with a slot (81) centrally disposed along a portion thereof extending continuously from the passage disposed in said front wall,
said passage being suitably sized to allow a key blank (78) to be withdrawn horizontally therethrough and having an overhead door (88) disposed thereon,
said door (88) having a outwardly projecting contour with a live hinge pivot means (82a) and being arranged and adapted to move between a generally closed position and an open position in which the live hinge pivot means (82a) is compressed leaving the passage sufficiently open to permit a key to be withdrawn therefrom,
whereby, a key blank positioned at the bottom of the stack may be withdrawn and the key blank positioned immediately above the bottom key blank is effectively blocked from moving horizontally by said door.

13. A key making apparatus of claim 10, wherein the means for grasping comprises a key effector (72) having a base (56), a moveable pin positioning assembly having a pin which is suitably sized and adapted to extend into a hole in the handle of a key blank, and a means for clamping,
a. said pin positioning assembly comprising a footing (84), a pair of upwardly disposed opposing collar members (75), a sleeve (83), and a rod (85) having the pin (89) uprightly and radially disposed on a distal end thereof,
(1) each of the opposing collar members (75) comprising:
a bottom surface arranged and adapted to be supported on top of the footing (84) and to support the sleeve (83) disposed laterally therebetween, an inwardly directed flange extending from and parallel to its upper surface at a spaced distance from each other, each of said flanges extends over the supported sleeve (83) to limit the sleeve from independent upward movement,
a proximate side wall, a distal side wall, an interior side wall, and an exterior side wall, each of the side walls having its bottom edge connected to the side edges of a bottom wall and its top edge connected to the side edges of a top surface, respectively, each of the exterior side wall being co-planar with a lateral side surface of the footing (84),
the bottom wall of each of the collar members (75) and its top surface each lying in a horizontal plane, and its side walls each lying in a vertical plane,
the interior side wall being arranged and adapted to engage a side exterior wall of the sleeve (83) to limit lateral movement of same,
a recess (75b) forming an opening in its upper surface suitably sized and adapted to receive a spring (73) and a block (71), and
an upwardly extending lip (75c) on the distal end of its upper surface, each of said lips (75a) on each of the respective collar members (75) lying in a vertical plane and having a space therebetween greater than the lateral width of any of said plurality of key blanks taken across its shoulder and less than the lateral width of any of said plurality of key blanks taken across its handle,
the spring (73) and the spring biased block (71) being normally exposed from the recess (75b) in the upper surface thereof with the top of said block extending higher than the vertical lips and which may be compressed therein by the clamping means;
(2) the sleeve (83) has a generally elongated shape with a cylindrical cavity extending longitudinally therein forming openings on each end thereof and a cavity surface arranged and adapted to slidingly secure the rod (85) which may move axially therein,
said sleeve (83) further has a slot centrally disposed longitudinally along its upper surface whereby the rod (85) may move axially within the sleeve without the upwardly extending pin (87) being impeded;
(3) said rod (86) being axially connected at its proximate end to a first actuable means for providing axial movement and having a diameter slightly smaller than the diameter of the cylindrical cavity of the sleeve (83) so that it may slidingly move axially therein;
(4) the top of said upwardly extending pin (87) extending higher than the top of normally exposed spring biased blocks (71);
(5) said footing (84) having the shape of a square prism with a horizontal upper surface, two lateral side walls, and a proximate side wall and a distal side wall,
said sleeve (83) being supported by and positioned between the upwardly disposed opposing collar members (75), the upwardly disposed opposing collar members (75) being supported by and attached to the upper surface of the footing (84),
b. the means for clamping comprises a clamp (74) being connected to a second actuable means (70) for providing vertical movement and having a bottom wall, two parallel side walls, and a top wall; and having a rectangular aperture (98) bounded by the bottom surface of the top wall, the top surface of the bottom wall and the interior surface of each side wall,
said rectangular aperture (98) is suitably sized and adapted to encompass the footing and collar members (75) of the pin positioning assembly and move vertically with respect thereto between a first position, in which the bottom surface of the top wall is at a spaced distance above the upwardly extending pin, and a second position, in which the lower surface of the top wall is below the upper edge of the upwardly extending lips of the collar members (75) and in operative association with the upper surface of the collar members (75);
c. said base (56) having four subbases including a first subbase (52) having a fixed position and a first system of linear slide motion guides (54,61) disposed thereon, a second subbase (58) engaged to the first system of linear slide motion guides (54,61) and moveable thereon and having a second system of linear slide motion guides (60,63) disposed thereon, a third subbase (62) engaged to the second system of linear slide motion guides(60,63) and moveable thereon and having a third system of linear slide motion guides (64,65) disposed thereon, and a fourth subbase (66) engaged to the third system of linear slide motion guides and moveable thereon and having the key effector (72) attached thereto,
the second subbase (58) has a first subbase motor means to move the subbase along the linear slide motion guides (54,61) engaging it to the first subbase (52), the third subbase (62) has a second subbase motor means to move the subbase (62) along the linear slide motion guides (60,63) engaging it to the second subbase (58), the fourth subbase (66) has a third subbase motor means to move the subbase (66) along the linear slide motion guides (64,65) engaging it to the third subbase (62), the respective linear slide motion guides are arranged mutually perpendicular, whereby, each of said subbase motor means moves the key effector linearly in a direction perpendicular to the movement effected by the other subbase motor means; and
d. said key effector (72) further having control means operatively connected to each of said subbase motor means and to said first and second actuable means for withdrawing the corresponding key blank from the dispenser cup and restraining the movement of said corresponding key blank with the clamping means.

14. A key making apparatus of claim 13, wherein the key effector (72) with the upwardly extending pin (87) at a spaced distance below and in alignment with a hole (94) in the handle of the corresponding key blank (78) and the clamping means disposed in the first position is arranged and adapted to move the pin (87) into engagement with the hole (94) in the handle of the corresponding key blank (78) as the upper surface of the top wall of the clamping means push against the hinged door of the dispenser cup (80) opening said door (88) to allow access for withdrawing said key blank.

15. A key making apparatus on any of claims 5 to 14, further comprising a means for cutting key cut features into the corresponding key blank to produce a new key.

16. A key making apparatus of claim 15, wherein the means for cutting key cut features into the corresponding key blank comprises a key cutting wheel (102) rotatable in at least one direction and having at least one anvil (106) adjacent thereto for each rotatable cutting direction, each anvil (106) having a flat contact surface (104,108) lying in a plane that is perpendicular to a tangent line of said cutting wheel (102) and said anvil (106) further being arranged and adapted to brace the blade of a corresponding key blank disposed flatly on the flat contact surface thereof by the key effector for cutting and to block movement of the key blank (78) caused by the tangential forces generated by the key cutting wheel (102); and
the key effector control means selectively actuates each of said subbase motor means to dispose the blade of the corresponding key blank (78) grasped by the key effector (72) flatly on the flat contact surface of the anvil (106) and to place selected portions of said key blank in operative cutting relation to said key cutting wheel (102) in response to the identifying signal, whereby key cut features are cut into said key blank.

17. A key making apparatus of any of claims 5 to 7, wherein the non-contact means for extracting attributes of an object key comprises:
a. a means for storing memory data of rejected object keys that do not have corresponding master code signals matching the code signals from the result of said recognition of the pixel pattern of the object key,
whereby, a key making apparatus may acquire additional information about keys that are not as yet available in its master pattern memory.

18. A key making apparatus of claim 13 suitable for, including at least one key blank (78) having a means for registering adapted to support the key blank against the upwardly extending lips of the key effector (72), whereby the key blank can be uniformly secured to said key effector.

19. A key making apparatus of claim 18, wherein the means for registering comprises a hip disposed longitudinally between the shoulder and the handle of the key blank (78) , said hip having an upper nub and a mirror image lower nub disposed symmetrically about the longitudinal centerline of the key blank, each nub having a uniform contour with adjacent longitudinal and transverse contact surfaces, said longitudinal contact surface extends generally longitudinally from the transverse contact surface toward the shoulder and said transverse contact surface emanates in a plane that is perpendicular to the longitudinal centerline of said key blank, each of said longitudinal contact surfaces is disposed at a lateral distance from the longitudinal centerline that is greater than one half of the lateral width of the key blank taken across its shoulder,
whereby the hip of the key blank is adapted to register the key blank by uniformly supporting it against the upwardly extending lips of the key effector.

20. A key making apparatus of claim 18, wherein the means for registering comprises a hip disposed longitudinally between the shoulder and the handle of the key blank (78), said hip having an upper nub and a mirror image lower nub disposed symmetrically about the longitudinal centerline of the key blank (78), each nub having a uniform contour with adjacent longitudinal and transverse contact surfaces, said longitudinal contact surface extends generally longitudinally from the transverse contact surface toward the shoulder and said transverse contact surface emanates in a plane that is perpendicular to the longitudinal centerline of said key blank, each of said longitudinal contact surfaces is disposed at a lateral distance from the longitudinal centerline of the key blank sufficient to allow each of said contact surfaces to simultaneously engage an upwardly extending lip of the respective collar members of the key effector,
whereby the hip of the key blank is adapted to register the key blank by uniformly supporting it against the upwardly extending lips of the key effector.

21. A key making apparatus of any of the preceding claims, further comprising a
means for grasping a key blank having a blade while leaving the blade free of constraint for cutting.

22. A key making apparatus of claim 21, wherein the blade (36) has at least one longitudinal cuttable side edge and the side of the blade opposite the cuttable side edge is free of constraint.

23. A key making apparatus of claim 22, wherein the key blank (78) further comprises a shank and a handle (34), and the means for grasping engages a section of the key blank (78) and positions the key blank in operative relationship with a means for cutting the longitudinal cuttable side edge thereof, said section consisting of its handle and its shank, while leaving the opposite side of said blade free of constraint.

24. A key making apparatus of claim 22, wherein the key blank (78) further comprises a handle (34), and the means for grasping engages the handle and positions the key blank (78) in operative relationship with a means for cutting a longitudinal cuttable side edge thereof, while leaving the opposite side of said blade (36) free of constraint.

25. A key making apparatus of any of claims 5 to 14 and 17 to 20, further comprising:
a. a means for grasping a key blank having a blade (36) with two longitudinal cuttable side edges while leaving the blade free of constraint for cutting;
b. a rotary cutting wheel (102); and
c. a means for moving the means for grasping and the key blank (78) engaged thereto in a face to face cutting relationship between a first longitudinal cuttable side edge of the key blank (78) and a first side of the cutting wheel, whereby cuts are made in the first cuttable side edge of the key blank, for moving the means for grasping and the key blank engaged thereto to position a second longitudinal cuttable side edge of the key blank for cutting, and for moving the means for grasping and the key blank engaged thereto in a face to face cutting relationship between the second longitudinal cuttable side edge of the key blank and the opposite side of the cutting wheel, whereby cuts are made in the second longitudinal cuttable side edge of the key blank.

26. A method of automatically making keys utilizing attributes of an object key (32) having a longitudinal axis which comprising the steps of:
a. unconstrainedly supporting the object key (32) on a transparent section (25,26) of a surface (22);
b. backlighting the object key by passing light through the transparent section in order to identify the attributes of the object key;
c. projecting a light stripe on to the object key and rotating the surface (22) to establish an operative positional relationship between the longitudinal axis of the unconstrainedly supported object key (32) and a means (2) for extracting attributes of the loosely supported object key; and
d. extracting attributes of the unconstrainedly supported object key including laterally exposed key cuts, independent of physical contact whereby, key cut codes of the object key can be recognized.

27. A method of automatically making keys of claim 26, which further comprises:
a. receiving at least one object image of the object key projected by said backlighting;
b. producing an output signal; and
c. identifying laterally exposed attributes of the object key responsive to the output signal.

28. A method of automatically making keys of claim 26, wherein extracting attributes of the loosely supported object key comprises:
a. projecting at least one light stripe obliquely on to the object key;
b. receiving an object image of the light stripe of laterally protected attributes of the object key;
c. recognizing a pixel pattern from said object image;
d. producing a series of code signals that define traits of the recognized pixel pattern for each target pixel from the result of said recognition;
e. comparing the code signals with master code signals from a master pattern memory, said master code signals defining traits of a master pixel pattern of a selected manufacturer's key; and
f. producing an identifying signal from such comparison, said identifying signal defining a corresponding key blank with a predetermined master pattern having master code signals that match code signals from the result of the recognition of the pixel pattern of the object key.

29. A method of automatically making keys of claim 26, wherein extracting attributes of the loosely supported object key comprises:
a. projecting at least one light stripe obliquely on to the object key;
b. receiving an object image of the light stripe of laterally protected attributes of the object key;
c. recognizing a pixel pattern from said object image;
d. producing a series of code signals that define traits of the recognized pixel pattern for each target pixel from the result of said recognition;
e. comparing the code signals with master code signals from a master pattern memory, said master code signals defining traits of master pixel patterns which define laterally protected attributes of a selected manufacturer's key; and
f. producing an identifying signal from such comparison, said identifying signal defining key cut codes with a predetermined master pattern having master code signals that match code signals from the result of the recognition of the pixel pattern of the object key,
whereby, key cuts conforming to the key cut codes may be cut in to a corresponding key blank.

30. A method of automatically making keys of claim 26, wherein extracting attributes of the loosely supported object key comprises the sequential steps:
a. projecting at least one light stripe obliquely on to the object key;
b. receiving an object image of the light stripe of laterally protected attributes of the object key;
c. recognizing a pixel pattern from said object image;
d. producing a series of code signals that define traits of the recognized pixel pattern for each target pixel from the result of said recognition;
e. comparing the code signals with corresponding master code signals from a master pattern memory, said master code signals defining traits of a master pixel pattern of laterally protected attributes of a selected manufacturer's key; and
f. producing an identifying signal from such comparison, said identifying signal defining a corresponding key blank with a predetermined master pattern having master code signals that match code signals from the result of the recognition of the pixel pattern of the object key.

31. A method of automatically making keys of claim 26, which further comprises:
a. receiving at least one object image of the object key projected by said backlighting;
b. recognizing a pixel pattern from said object image;
c. producing a series of code signals that define traits of the recognized pixel pattern for each target pixel from the result of said recognition,
said target pixels defining a polyline of laterally exposed attributes of the object key;
d. comparing the code signals with corresponding master code signals from a master pattern memory, each master code signal defining traits of a master pixel pattern of laterally exposed attributes of a selected manufacturer's key;
e. producing an identifying signal from such comparison; and
f. identifying laterally exposed attributes of the object key responsive to the output signal.

32. A method of automatically making keys as in any one of claims 28 - 31, comprising the following additional steps:
a. selecting a key blank corresponding to said identifying signal from a plurality of key blanks;
b. grasping said key blank;
c. positioning said key blank for cutting;
d. cutting key cut features into said corresponding key blank to create a new key;
e. deburring said new key; and
f. dispensing said new key.

33. A method of automatically making keys of claim 26, which further comprises:
a. selecting a corresponding key blank (78) from a plurality of key blanks in response to an identifying signal;
b. grasping said key blank;
c. positioning said key blank for cutting; and
d. cutting key cut features into said key blank in accordance with the lock manufacturer's original key cut features to create a new key.

34. A method of automatically making keys of claim 26, wherein extracting attributes of the loosely supported object key comprises:
a. receiving at least one object image of the object key (32) projected by said backlighting;
b. recognizing a pixel pattern from said object image;
c. producing a series of code signals that define traits of the recognized pixel pattern for each target pixel from the result of said recognition, said target pixels defining attributes of the object key;
d. comparing the primary code signals with corresponding master code signals from a master pattern memory, each master code signal defining traits of a master pixel pattern of attributes of a selected manufacturer's key;
e. producing a rejection signal from such comparison, said rejection signal defining a lack of master code signals matching the primary code signals from the result of said recognition of the pixel pattern of the object key; and, in response to said rejection signal:
f. turning on an overhead light and illuminating the object key;
g. receiving at least one object image of the illuminated object key and producing a memory signal; and
h. storing said memory signal.

35. A method of automatically making keys of claim 26, wherein extracting attributes of the loosely supported object key comprises:
a. receiving at least one backlit object image of the object key;
b. recognizing a pixel pattern from said backlit object image;
c. producing a series of primary code signals that define traits of the recognized pixel pattern for each target pixel from the result of said recognition, said target pixels defining a polyline of laterally exposed attributes of the object key;
d. comparing the primary code signals relating to the outline shape of the polyline with corresponding master code signals from a master pattern memory, each master code signal defining traits of a master pixel pattern of the shape of a selected manufacturer's key;
e. producing a first rejection signal from such comparison, said rejection signal defining a lack of corresponding master code signals matching the primary code signals from the result of said recognition of the pixel pattern of the object key; and, in response to said first rejection signal:
f. turning on an overhead light and illuminating the object key;
g. receiving at least one object image of the illuminated object key and producing first memory signal; and
h. storing said first memory signal.

36. A method of automatically making keys of claim 26, wherein extracting attributes of the loosely supported object key comprises:
a. receiving at least one backlit object image of the object key;
b. recognizing a pixel pattern from said backlit object image;
c. producing a series of primary code signals that define traits of the recognized pixel pattern for each target pixel from the result of said recognition, said target pixels defining a polyline of laterally exposed attributes of the object key;
d. comparing the primary code signals relating to outline shape of the polyline with corresponding master code signals from a master pattern memory, each master code signal defining traits of a master pixel pattern relating to the shape of a selected manufacturer's key;
e. producing a first identifying signal from such comparison,
said first identifying signal defining a corresponding key blank with a predetermined master pattern having master code signals that match code signals from the result of the recognition of the pixel pattern of the object key, whereby, a corresponding selected manufacturer's key and a corresponding key blank responsive to the first identifying signal may be determined;
f. projecting at least one light stripe on to an object key;
g. receiving an object image of the light stripe of laterally protected attributes of the object key;
h. recognizing a pixel pattern from said object image of the light stripe of the laterally protected attributes of the object key;
i. producing a series of secondary code signals that define traits of the recognized pixel pattern for each target pixel from the result of said recognition, said target pixels defining a light stripe of the laterally protected attributes of the object key;
j. comparing each of the secondary code signals with corresponding master code signals from a master pattern memory, each master code signal defining traits of a master pixel pattern of the laterally protected attributes of the selected manufacturer's key;
k. producing an inquiry signal from such comparison, said inquiry signal defining a lack of corresponding master code signals matching the secondary code signals from the result of said recognition of the pixel pattern of the object key; and, in response to said inquiry signal:
l. determining whether there may be information on another side of the object key from the master pattern memory relating to the selected manufacturer's key, and producing a rejection signal, said rejection signal defining a lack of information on another side of the object key; and, in response to said rejection signal:
m. turning on an overhead light and illuminating the object key;
n. receiving at least one object image of the illuminated object key and producing a memory signal; and
o. storing said memory signal.

37. A method of automatically making keys of claim 26, wherein extracting attributes of the loosely supported object key comprises:
a. receiving at least one backlit object image of the object key;
b. recognizing a pixel pattern from said backlit object image;
c. producing a series of primary code signals that define traits of the recognized pixel pattern for each target pixel from the result of said recognition, said target pixels defining a polyline of laterally exposed attributes of the object key;
d. comparing the primary code signals relating to an outline shape of the polyline with corresponding master code signals from a master pattern memory, each master code signal defining traits of a master pixel pattern of the shape of a selected manufacturer's key;
e. producing a first identifying signal from such comparison, said first identifying signal defining a corresponding key blank with a predetermined master pattern having master code signals that match code signals from the result of the recognition of the pixel pattern of the object key, whereby, a corresponding selected manufacturer's key and a corresponding key blank responsive to the first identifying signal may be determined; and
f. projecting at least one light stripe on to an object key;
g. receiving an object image of the light stripe of laterally protected attributes of the object key;
h. recognizing a pixel pattern from said object image of the light stripe of the laterally protected attributes of the object key;
i. producing a series of secondary code signals that define traits of the recognized pixel pattern for each target pixel from the result of said recognition of the pixel pattern from said object image of the light stripe of the laterally protected attributes of the object key;
j. comparing each of the secondary code signals with corresponding master code signals from a master pattern memory, each master code signal defining traits of a master pixel pattern of the laterally protected attributes of the selected manufacturer's key;
k. producing an inquiry signal from such comparison, said inquiry signal defining corresponding master code signals matching the secondary code signals from the result of said recognition of the pixel pattern of the object key; and, in response to said inquiry signal:
l. determining whether there may be information on another side of the object key from the master pattern memory relating to the selected manufacturer's key, and producing a restart signal, said restart signal defining further information on another side of the object key; and, in response to said restart signal:
m. providing instructions to flip over the object key; and
n. repeating steps a through k.

38. A method of automatically making keys any of claims 26 to 37, which further comprises:
a. actuating at least one subbase motor drive to position a key effector having a moveable rod with an upwardly extending pin in operative association with a corresponding key blank in response to an identifying signal;
b. actuating a first actuable means to horizontally move the rod axially to position the upwardly extending pin at a spaced distance below and in alignment with a hole in the handle of the corresponding key blank;
c. actuating a motor drive to position the pin of the key effector vertically into the hole in the handle of the corresponding key blank;
d. actuating the first actuable means to horizontally draw in the rod axially to withdraw the corresponding key blank from a holding means;
e. actuating a second actuable means to secure the corresponding key blank with a clamping means;
f. actuating a means for cutting;
g. actuating at least one subbase motor drive to position the key effector and the secured corresponding key blank in operative association with the means for cutting to cut a new key;
h. actuating the second actuable means to release the clamping means; and
i. actuating at least one subbase motor drive to position the new key for dispensing.

39. A method of automatically making keys any of claims 26 to 37, which further comprises:
a. projecting a generally horizontal beam of light immediately above a means for supporting an object key and transverse to the blade of the object key supported thereon;
b. receiving the light of the horizontal beam that is not obstructed by the blade of an object key disposed on the blade section of the means for supporting an object key and producing at least one output signal;
c. incrementally lowering the vertical elevation of the handle section of the means for supporting an object key in relation to said second output signal; and
d. repeating sequential steps a, b, and c, a specified number of times;
e. producing a non-existent key rejection signal from such specified number of repetitions, said non-existent key rejection signal defining a lack of an object key blocking the light reception, indicating that the object key was not disposed on the supporting means; and, in response to said non-existent key rejection signal:
f. turning on an overhead light, displaying instructions, and opening an access door.

40. A method of automatically making keys of claim 28, which comprises grasping a key blank having a blade with at least one longitudinal cuttable side edge and a handle that matches the corresponding key blank, by its handle and making cuts in a longitudinal cuttable side edge thereof while leaving the opposite side of said blade free of constraint.

41. A method of automatically making keys of claim 40, which comprises:
a. cutting, with a first side of a rotary cutting wheel, a first longitudinal cuttable side edge of a key blank having a blade with two longitudinal cuttable side edges while leaving the opposite side of said blade free of constraint;
b. moving the key blank to position a second longitudinal cuttable side edge in a face to face relationship with the opposite side of the rotary cutting wheel for cutting; and
c. cutting, with the opposite side of the rotary cutting wheel, the second longitudinal cuttable side edge of the key blank while leaving the opposite side of said blade free of constraint.

## Patentansprüche

1. Schlüsselherstellvorrichtung, die Attribute eines Objektschlüssels (32) mit einer Längsachse verwendet und Folgendes umfasst:
Mittel zum Gewinnen von Attributen eines Objektschlüssels (32); und
Mittel (28) zum Tragen des Objektschlüssels (32), um eine funktionelle Positionsbeziehung zwischen dem Objektschlüssel (32) und dem Attributgewinnungsmittel herzustellen;
**dadurch gekennzeichnet, dass** das genannte Tragmittel den Objektschlüssel (32) in einer uneingezwängten Weise trägt, drehbar ist und einen transparenten Abschnitt (25, 26) aufweist, auf den der Objektschlüssel gelegt werden kann;
wobei das genannte Attributgewinnungsmittel Folgendes umfasst: Hinterlichtbeleuchtungsmittel (48), die so angeordnet und gestaltet sind, dass sie Licht durch den transparenten Abschnitt (25, 26) des Tragmittels (28) leiten und ein Bild des darauf positionierten Objektschlüssels (32) projizieren, Mittel (2) zum Empfangen des Objektbildes des Objektschlüssels (32) und zum Produzieren eines Ausgangssignals, Mittel zum Ermitteln der Position der Längsachse des Objektschlüssels relativ zu einem Lichtstreifen (20), der von einem Lichtstreifengenerator (12), der auf das vom Empfangsmittel (2) produzierte Ausgangssignal anspricht, auf den Objektschlüssel (32) projiziert werden kann, Mittel (30) zum Drehen des Tragmittels (28), ein Objektschlüssel-Positionssteuermittel, das funktionell angeschlossen ist und auf ein Ausgangssignal von dem Mittel zum Ermitteln der Position des Objektschlüssels anspricht und das funktionell mit dem Mittel (30) zum Drehen des Tragmittels (28) verbunden ist,
wobei die Längsachse eines Objektschlüssels lotrecht zu dem vom Lichtstreifengenerator (12) auf den Objektschlüssel (32) projizierten Lichtstreifen ausgerichtet werden kann.

2. Schlüsselherstellvorrichtung nach Anspruch 1, die ferner Folgendes umfasst:
ein Mittel zum Ermitteln der relativen Anfangsausrichtung des Objektschlüssels, wenn er lose auf einer Oberfläche liegt;
ein kontaktloses Mittel zum Gewinnen von lateral exponierten Schlüsselprofilen und Attributen der Außenform des Objektschlüssels, so dass Schlüsselprofilcodes des Objektschlüssels erkannt werden können.

3. Schlüsselherstellvorrichtung nach einem der vorherigen Ansprüche, wobei das Mittel zum Gewinnen von Attributen eines Objektschlüssels ferner Folgendes umfasst:
ein Mittel zum Ermitteln der relativen Anfangsausrichtung des Objektschlüssels, wenn er lose auf einer Oberfläche liegt;
ein Mittel (2) zum Empfangen von wenigstens einem Objektbild der lateral exponierten Schlüsselprofilattribute des auf dem genannten transparenten Abschnitt (25, 26) positionierten Objektschlüssels (32) und zum Produzieren eines Ausgangssignals, das auf die genannten Schlüsselprofile bezogen ist; und
ein Mittel zum Identifizieren der lateral exponierten Attribute des Objektschlüssels (32), das funktionell mit dem Ausgangssignal verbunden ist und darauf anspricht, das auf die genannten Schlüsselprofilattribute des Objektschlüssels des Mittels zum Empfangen eines Objektbildes des Objektschlüssels bezogen ist,
so dass ein Schlüsselrohling und Schlüsselprofilcodes, von dem/denen der Objektschlüssel hergestellt wird, identifiziert werden können.

4. Schlüsselherstellvorrichtung nach einem der vorherigen Ansprüche, wobei das kontaktlose Mittel zum Gewinnen von Attributen eines Objektschlüssels Folgendes umfasst:
Mittel zum Gewinnen von lateral geschützten Attributen einschließlich Längsrillen (116) eines Objektschlüssels (32), wobei:
a. der Lichtstreifengenerator (12) so angeordnet und gestaltet ist, dass er wenigstens einen Lichtstreifen schräg auf den Objektschlüssel projiziert; und
b. ein Mittel zum Empfangen eines Objektbildes so angeordnet und gestaltet ist, dass es ein von dem Objektschlüssel reflektiertes Bild des projizierten Lichtstreifens empfängt,
so dass die lateral geschützten Attribute einschließlich Längsrillen des Objektschlüssels gewonnen werden können.

5. Schlüsselherstellvorrichtung nach einem der vorherigen Ansprüche, wobei das Mittel zum Identifizieren von Attributen eines Objektschlüssels Folgendes umfasst:
a. ein Mustererkennungsmittel zum Erkennen eines Pixelmusters von einem Objektbild des Objektschlüssels und zum Produzieren einer Reihe von Codesignalen mit Bezug auf jedes Zielpixel vom Ergebnis der genannten Erkennung, wobei die genannten Codesignale Eigenschaften des erkannten Pixelmusters für jedes Zielpixel definieren, wobei die genannten Pixelmuster Attribute des Objektschlüssels definieren; und
b. ein Unterscheidungsmittel mit einem Musterspeicher, in dem ein Satz von vorbestimmten Kopiervorlagemustern gespeichert ist, wobei die genannten vorbestimmten Kopiervorlagemuster eine Mehrzahl von Kopiervorlage-Codesignalen sind, wobei die genannten Kopiervorlage-Codesignale Eigenschaften eines Kopiervorlage-Pixelmusters definieren, wobei das genannte Kopiervorlagepixelmuster Attribute eines gewählten Schlüsselfabrikats zum Vergleichen der Codesignale von dem Mustererkennungsmittel mit einem entsprechenden Kopiervorlage-Codesignal und zum Produzieren eines Identifikationssignals definieren,
wobei das genannte Identifikationssignal vom Ergebnis der Erkennung des Pixelmusters des Objektschlüssels einen entsprechenden Schlüsselrohling mit einem Loch in seinem Griff mit einem vorbestimmten Kopiervorlagemuster mit Kopiervorlage-Codesignalen definiert, die mit Codesignalen übereinstimmen,
so dass ein entsprechender Schlüsselrohling ermittelt werden kann, der mit Attributen eines bekannten Schlüsselfabrikats übereinstimmt.

6. Schlüsselherstellvorrichtung nach Anspruch 5, wobei das Mustererkennungsmittel ein integriertes Pixelmuster von einer Mehrzahl von diskreten Objektbildern des Objektschlüssels erkennt.

7. Schlüsselherstellvorrichtung nach einem der vorherigen Ansprüche, wobei das Mittel zum Identifizieren von Attributen eines Objektschlüssels Folgendes umfasst:
a. ein Mustererkennungsmittel zum Erkennen von wenigstens einem Objektbild des Objektschlüssels und zum Produzieren einer Reihe von Codesignalen mit Bezug auf jedes Zielpixel vom Ergebnis der genannten Erkennung, wobei die genannten Codesignale Eigenschaften des erkannten Pixelmusters für jedes Zielpixel definieren, wobei die genannten Pixelmuster lateral exponierte Attribute definieren, die auf einer Polylinie einer Silhouette des Objektschlüssels dargestellt werden; und
b. ein Unterscheidungsmittel mit einem Musterspeicher, in dem ein Satz von vorbestimmten Kopiervorlagemustern gespeichert ist, wobei die genannten vorbestimmten Kopiervorlagemuster eine Mehrzahl von Kopiervorlage-Codesignalen sind, wobei die genannten Kopiervorlage-Codesignale Eigenschaften eines Kopiervorlage-Pixelmusters definieren, wobei das genannte Kopiervorlage-Pixelmuster lateral exponierte Attribute eines gewählten Schlüsselfabrikats zum Vergleichen der Codesignale von dem Mustererkennungsmittel mit einem entsprechenden Master-Codesignal und zum Produzieren eines Identifikationssignals definiert,
wobei das genannte Identifikationssignal vom Ergebnis der Erkennung des Pixelmusters des Objektschlüssels einen entsprechenden Schlüsselrohling mit einem Loch im Griff davon mit einem vorbestimmten Kopiervorlagemuster mit Kopiervorlage-Codesignale definiert, die mit Codesignalen übereinstimmen,
so dass ein entsprechender Schlüsselrohling ermittelt werden kann, der mit der Außenform eines bekannten Schlüsselfabrikats übereinstimmt.

8. Schlüsselherstellvorrichtung nach einem der Ansprüche 5 bis 7, wobei das Identifikationssignal einen mit dem entsprechenden Schlüsselrohling (78) identifizierten Schlüsselprofilcode definiert,
so dass Schlüsselprofile, die den Schlüsselprofilcodes eines bekannten Schlüsselfabrikats entsprechen, ermittelt werden können.

9. Schlüsselherstellvorrichtung nach einem der Ansprüche 5 bis 7, wobei das Identifikationssignal ferner Schlüsselprofilmerkmale des Objektschlüssels (32) definiert, die allgemein den mit dem entsprechenden Schlüsselrohling (78) identifizierten Schlüsselprofilcodes entsprechen,
so dass die Schlüsselprofilmerkmale des Objektschlüssels für die Verwendung mit dem entsprechenden Schlüsselrohling (78) ermittelt werden können.

10. Schlüsselherstellvorrichtung nach einem der Ansprüche 5 bis 7, umfassend ein Mittel (82) zum Speichern einer Mehrzahl von Schlüsselrohlingen, ein Mittel zum Auswählen eines entsprechenden Schlüsselrohlings aus der Mehrzahl von Schlüsselrohlingen als Reaktion auf das genannte Identifikationssignal und ein Mittel (72) zum Ergreifen eines entsprechenden Schlüsselrohlings.

11. Schlüsselherstellvorrichtung nach Anspruch 10, wobei das Mittel zum Speichern einer Mehrzahl von Schlüsselrohlingen Folgendes umfasst:
a. eine Mehrzahl von Schlüsselmagazinen (82) jeweils zum Halten eines Stapels von gleichen Schlüsselrohlingen (78); und
b. einen Ausgabebecher (80) am Boden jedes Schlüsselmagazins (82),
wobei jeder der genannten Ausgabebecher (80) eine Öffnung an der Oberseite, die so dimensioniert und gestaltet ist, dass sie ein Schlüsselmagazin (82) aufnimmt, eine proximale Frontwand mit einem darin angeordneten Kanal (86) und eine Bodenwand mit einem Schlitz (81) aufweist, der mittig entlang einem Abschnitt davon angeordnet ist, der sich fortlaufend von dem Kanal in der genannten Frontwand erstreckt, durch den ein Schlüsselrohling (78) entnommen werden kann,
wobei die Öffnung jedes der genannten Ausgabebecher in derselben Richtung ausgerichtet ist,
wobei die genannten Ausgabebecher (80) in einer räumlichen Anordnung von Spalten und Reihen angeordnet sind, wobei die genannten Spalten und Reihen orthogonal angeordnet sind,
wobei alle Ausgabebecher (80) in einer Reihe in derselben Höhe angeordnet sind, wobei die genannte Reihe allgemein parallel zu den proximalen Frontwänden davon ist,
wobei jede Reihe von Ausgabebechern einen vertikalen Abstand von den Ausgabebechern einer benachbarten Reihe hat und eine allgemein gleichförmige gestufte Beziehung dazwischen bildet, wobei die Ausgabebecher einer Reihe den proximalen Frontwänden der Ausgabebecher in einer benachbarten Reihe zugewandt sind, die sich in einem erhöhten Abstand relativ dazu befinden, wobei der genannte Abstand ausreicht, damit das Ergreifmittel Zugang zu einem Schlüsselrohling (78) hat und einen solchen entnehmen kann.

12. Schlüsselherstellvorrichtung nach Anspruch 10, wobei das Mittel zum Speichern einer Mehrzahl von Schlüsselrohlingen Folgendes umfasst:
a. wenigstens ein Schlüsselmagazin (82) mit einer Öffnung am Boden und einer Öffnung an der Oberseite und einem allgemein gleichförmigen vertikalen Hohlraum darin, wobei der genannte Hohlraum so dimensioniert und gestaltet ist, dass er einen Stapel von horizontal positionierten Schlüsselrohlingen (78) aufnehmen kann; und
b. einen Ausgabebecher (80) für jedes Schlüsselmagazin (82), wobei der genannte Ausgabebecher (80) eine Öffnung an der Oberseite, die so dimensioniert und gestaltet ist, dass sie ein Schlüsselmagazin (82) aufnimmt, eine proximale Frontwand mit einem Kanal (86) darin und eine Bodenwand mit einem Schlitz (81) aufweist, der mittig entlang eines Abschnitts davon verläuft, der sich fortlaufend vom Kanal in der genannten Frontwand erstreckt,
wobei der genannte Kanal so dimensioniert ist, dass ein Schlüsselrohling (78) horizontal dadurch entnommen werden kann, und wobei eine Überkopfklappe (88) daran angeordnet ist,
wobei die genannte Klappe (88) eine nach außen vorstehende Kontur mit einem Scharnierbandschwenkmittel (82a) hat und so angeordnet und gestaltet ist, dass sie sich zwischen einer allgemein geschlossenen Position und einer offenen Position bewegt, in der das Scharnierbandschwenkmittel (82a) zusammengedrückt wird und den Kanal so weit offen lässt, dass ein Schlüssel daraus entnommen werden kann,
so dass ein am Boden des Stapels positionierter Schlüsselrohling entnommen und effektiv verhindert wird, dass der unmittelbar über dem unteren Schlüsselrohling befindliche Schlüsselrohling von der genannten Klappe horizontal bewegt wird.

13. Schlüsselherstellvorrichtung nach Anspruch 10, wobei das Ergreifmittel Folgendes umfasst: einen Schlüsseleffektor (72) mit einer Basis (56), einer beweglichen Bolzenpositionierungsbaugruppe mit einem Bolzen, der so dimensioniert und gestaltet ist, dass er in ein Loch im Griff eines Schlüsselrohlings reicht, und ein Einspannmittel,
a. wobei die genannte Bolzenpositionierungsbaugruppe einen Sockel (84), ein Paar darüber angeordneter, einander gegenüber liegender Kragenelemente (75), eine Hülse (83) und einen Stab (85) umfasst, an dem der Bolzen (89) aufrecht und radial an einem distalen Ende angeordnet ist,
(1) wobei jedes der einander gegenüber liegenden Kragenelemente (75) Folgendes umfasst:
eine Bodenfläche, die so angeordnet und gestaltet ist, dass sie auf dem Sockel (84) aufliegt und die lateral dazwischen angeordnete Hülse (83) trägt, einen einwärts gerichteten Flansch, der von seiner Oberseite in einem Abstand voneinander ausgeht und parallel dazu verläuft, wobei jeder der genannten Flansche über die getragene Hülse (83) verläuft, um eine unabhängige Aufwärtsbewegung der Hülse zu begrenzen,
eine proximale Seitenwand, eine distale Seitenwand, eine innere Seitenwand und eine äußere Seitenwand, wobei der untere Rand jeder der Seitenwände mit den seitlichen Rändern einer Bodenwand und der obere Rand mit den Seitenrändern einer Oberseite verbunden sind, wobei jeweils die äußere Seitenwand koplanar zu einer lateralen Seitenfläche des Sockels (84) ist, wobei die Bodenwand jedes der Kragenelemente (75) und ihre Oberseite jeweils in einer horizontalen Ebene und ihre Seitenwände jeweils in einer vertikalen Ebene liegen,
wobei die innere Seitenwand so angeordnet und gestaltet ist, dass sie in eine äußere Seitenwand der Hülse (83) eingreift, um deren laterale Bewegung zu begrenzen,
wobei eine Aussparung (75b) eine Öffnung in ihrer Oberseite bildet, die so dimensioniert und gestaltet ist, dass sie eine Feder (73) und einen Block (71) aufnimmt, und
eine nach oben verlaufende Lippe (75c) am distalen Ende ihrer Oberseite, wobei jede der genannten Lippen (75a) auf jedem der jeweiligen Kragenelemente (75) in einer vertikalen Ebene liegt und einen Raum dazwischen aufweist, der größer als die laterale Breite eines beliebigen aus der genannten Mehrzahl von Schlüsselrohlingen über seine Schulter und geringer als die laterale Breite eines beliebigen aus der genannten Mehrzahl von Schlüsselrohlingen über seinen Griff ist,
wobei die Feder (73) und der gefederte Block (71) normalerweise von der Aussparung (75b) in deren Oberseite exponiert ist, wobei die Oberseite des genannten Blocks höher reicht als die vertikalen Lippen und durch die Einspannmittel darin zusammengedrückt werden kann;
(2) die Hülse (83) hat eine allgemein längliche Gestalt mit einem zylindrischen Hohlraum, der longitudinal darin verläuft und Öffnungen an jedem Ende davon sowie eine Hohlraumfläche bildet, die so angeordnet und gestaltet ist, dass sie den Stab (85) gleitend sichert, der axial darin beweglich ist,
wobei die genannte Hülse (83) ferner einen Schlitz aufweist, der mittig in Längsrichtung entlang ihrer Oberseite angeordnet ist, so dass der Stab (85) axial in der Hülse beweglich ist, ohne dass der nach oben verlaufende Bolzen (87) behindert wird;
(3) wobei der genannte Stab (86) an seinem proximalen Ende axial mit einem ersten zu betätigenden Mittel verbunden ist, um eine axiale Bewegung zu erzeugen, und einen Durchmesser hat, der etwas geringer ist als der Durchmesser des zylindrischen Hohlraums der Hülse (83), so dass er axial darin gleiten kann;
(4) wobei die Oberseite des genannten nach oben verlaufenden Bolzens (87) höher reicht als die Oberseite der normalerweise exponierten gefederten Blöcke (71);
(5) wobei der genannte Sockel (84) die Form eines quadratischen Prismas mit einer horizontalen Oberseite, zwei lateralen Seitenwänden und einer proximalen Seitenwand und einer distalen Seitenwand hat, wobei die genannte Hülse (83) von den oberhalb angeordneten, einander gegenüber liegenden Kragenelementen (75) getragen wird und dazwischen positioniert ist, wobei die oberhalb angeordneten, einander gegenüber liegenden Kragenelemente (75) von der Oberseite des Sockels (84) getragen und daran befestigt werden,
b. wobei das Einspannmittel eine Klammer (74) umfasst, die mit einem zweiten zu betätigenden Mittel (70) verbunden ist, um eine vertikale Bewegung zu erzeugen, und eine Bodenwand, zwei parallele Seitenwände und eine Deckenwand sowie ein rechteckiges Loch (98) aufweist, das von der Bodenseite der oberen Wand, der Oberseite der Bodenwand und der Innenseite jeder Seitenwand begrenzt wird,
wobei das genannte rechteckige Loch (98) so dimensioniert und gestaltet ist, dass es den Sockel und die Kragenelemente (75) der Bolzenpositionierungsbaugruppe umgibt und sich vertikal mit Bezug darauf zwischen einer ersten Position, in der die Bodenseite der Deckenwand einen Abstand über dem nach oben verlaufenden Bolzen hat, und einer zweiten Position bewegen kann, in der die Unterseite der Deckenwand unterhalb des oberen Randes der nach oben verlaufenden Lippen der Kragenelemente (75) und in funktioneller Assoziation mit der Oberseite der Kragenelemente (75) ist;
c. wobei die genannte Basis (56) vier Grundschlitten hat, einschließlich einem ersten Grundschlitten (52) mit einer festen Position und einem darauf angeordneten ersten System von linearen Gleitbewegungsführungen (54, 61), einem zweiten Grundschlitten (58), der mit dem ersten System von linearen Gleitbewegungsführungen (54, 61) im Eingriff und darauf beweglich ist, und mit einem darauf angeordneten zweiten System von linearen Gleitbewegungsführungen (60, 63), einem dritten Grundschlitten (62), der mit dem zweiten System von linearen Gleitbewegungsführungen (60, 63) im Eingriff und darauf beweglich ist, und mit einem darauf angeordneten dritten System von linearen Gleitbewegungsführungen (64, 65), und einem vierten Grundschlitten (66), der mit dem dritten System von linearen Gleitbewegungsführungen im Eingriff und darauf beweglich ist und an dem der Schlüsseleffektor (72) befestigt ist,
wobei der zweite Grundschlitten (58) ein erstes Grundschlittenantriebsmittel zum Bewegen des Grundschlittens über die linearen Gleitbewegungsführungen (54, 61) hat, um ihn mit dem ersten Grundschlitten (52) in Eingriff zu bringen, wobei der dritte Grundschlitten (62) ein zweites Grundschlittenantriebsmittel zum Bewegen des Grundschlittens (62) über die linearen Gleitbewegungsführungen (60, 63) hat, um ihn mit dem zweiten Grundschlitten (58) in Eingriff zu bringen, wobei der vierte Grundschlitten (66) ein drittes Grundschlittenantriebsmittel zum Bewegen des Grundschlittens (66) über die linearen Gleitbewegungsführungen (64, 65) hat, um ihn mit dem dritten Grundschlitten (62) in Eingriff zu bringen,
wobei die jeweiligen linearen Gleitbewegungsführungen lotrecht zueinander angeordnet sind, so dass jedes der genannten Grundschlittenantriebsmittel den Schlüsseleffektor linear in einer Richtung lotrecht zu der Bewegung bewegt, die von dem anderen Grundschlittenantriebsmittel bewirkt wird; und
d. wobei der genannte Schlüsseleffektor (72) ferner ein Steuermittel aufweist, das funktionell mit jedem der genannten Grundschlittenantriebsmittel sowie mit dem genannten ersten und zweiten zu betätigenden Mittel verbunden ist, um den entsprechenden Schlüsselrohling aus dem Ausgabebecher zu entnehmen und den genannten entsprechenden Schlüsselrohling mit dem Einspannmittel an einer Bewegung zu hindern.

14. Schlüsselherstellvorrichtung nach Anspruch 13, wobei der Schlüsseleffektor (72) mit dem nach oben verlaufenden Bolzen (87) in einem Abstand darunter und in Ausrichtung mit einem Loch (94) im Griff des entsprechenden Schlüsselrohlings (78) und dem in der ersten Position angeordneten Einspannmmittel so angeordnet und gestaltet ist, dass der Bolzen (87) in Eingriff mit dem Loch (94) im Griff des entsprechenden Schlüsselrohlings (78) bewegt wird, während die Oberseite der Deckenwand des Einspannmittels gegen die angelenkte Klappe des Ausgabebechers (88) gedrückt wird, um die genannte Klappe (88) zu öffnen, um Zugang zum Entnehmen des genannten Schlüsselrohlings zu gewähren.

15. Schlüsselherstellvorrichtung nach einem der Ansprüche 5 bis 14, ferner umfassend ein Mittel zum Fräsen von Schlüsselprofilmerkmalen in den entsprechenden Schlüsselrohling zum Erzeugen eines neuen Schlüssels.

16. Schlüsselherstellvorrichtung nach Anspruch 15, wobei das Mittel zum Schneiden von Schlüsselprofilmerkmalen in den entsprechenden Schlüsselrohling ein Schlüsselschneidrad (102) umfasst, das in wenigstens einer Richtung gedreht werden kann und das wenigstens einen Amboss (106) daneben für jede drehbare Schneidrichtung aufweist, wobei jeder Amboss (106) eine flache Kontaktfläche (104, 108) aufweist, die in einer Ebene liegt, die lotrecht zu einer Tangentiallinie des genannten Schneidrads (102) ist, und wobei der genannte Amboss (106) ferner so angeordnet und gestaltet ist, dass er den Bart eines entsprechenden Schlüsselrohlings abstützt, der vom Schlüsseleffektor flach auf der flachen Kontaktfläche davon zum Schneiden angeordnet wird, und um die Bewegung des Schlüsselrohlings (78) zu blockieren, die durch die vom Schlüsselschneidrad (102) erzeugten Tangentialkräfte erzeugt wird; und
wobei das Schlüsseleffektor-Steuermittel selektiv jedes der genannten Grundschlittenantriebsmittel betätigt, um den Bart des entsprechenden vom Schlüsseleffektor (72) ergriffenen Schlüsselrohlings (78) flach auf der flachen Kontaktfläche des Ambosses (106) anzuordnen und gewählte Abschnitte des genannten Schlüsselrohlings in funktioneller Schneidbeziehung zu dem genannten Schlüsselschneidrad (102) als Reaktion auf das Identifikationssignal zu platzieren, so dass die Schlüsselprofilmerkmale in den genannten Schlüsselrohling geschnitten werden.

17. Schlüsselherstellvorrichtung nach einem der Ansprüche 5 bis 7, wobei das kontaktlose Mittel zum Gewinnen von Attributen eines Objektschlüssels Folgendes umfasst:
a. ein Mittel zum Speichern von Speicherdaten von zurückgewiesenen Objektschlüsseln, die keine entsprechenden Kopiervorlage-Codesignale haben, die mit den Codesignalen vom Ergebnis der genannten Erkennung des Pixelmusters des Objektschlüssels übereinstimmen,
so dass eine Schlüsselherstellvorrichtung zusätzliche Informationen über Schlüssel erfassen kann, die in ihrem Kopiervorlagemusterspeicher bisher noch nicht vorhanden sind.

18. Schlüsselherstellvorrichtung nach Anspruch 13, die wenigstens einen Schlüsselrohling (78) mit einem Mittel zum Ausrichten aufweist, um den Schlüsselrohling an den nach oben verlaufenden Lippen des Schlüsseleffektors (72) anzulegen, so dass der Schlüsselrohling gleichmäßig an dem genannten Schlüsseleffektor befestigt werden kann.

19. Schlüsselherstellvorrichtung nach Anspruch 18, wobei das Mittel zum Ausrichten einen Absatz umfasst, der in Längsrichtung zwischen der Schulter und dem Griff des Schlüsselrohlings (78) angeordnet ist, wobei der genannte Absatz eine obere Noppe und eine spiegelbildliche untere Noppe aufweist, die symmetrisch um die longitudinale Mittellinie des Schlüsselrohlings angeordnet sind, wobei jede Noppe eine gleichförmige Kontur mit benachbarten longitudinalen und transversalen Kontaktflächen hat, wobei die genannte longitudinale Kontaktfläche allgemein longitudinal von der transversalen Kontaktfläche in Richtung auf die Schulter verläuft und die genannte transversale Kontaktfläche in einer Ebene verläuft, die lotrecht zur longitudinalen Mittellinie des genannten Schlüsselrohlings ist, wobei jede der genannten longitudinalen Kontaktflächen in einem lateralen Abstand von der longitudinalen Mittellinie angeordnet ist, der größer ist als die Hälfte der lateralen Breite des Schlüsselrohlings über seine Schulter,
wobei der Absatz des Schlüsselrohlings so gestaltet ist, dass er den Schlüsselrohling ausrichtet, indem er ihn gleichmäßig an den nach oben verlaufenden Lippen des Schlüsseleffektors anlegt.

20. Schlüsselherstellvorrichtung nach Anspruch 18, wobei das Mittel zum Ausrichten einen longitudinal zwischen der Schulter und dem Griff des Schlüsselrohlings (78) angeordneten Absatz umfasst, wobei der genannte Absatz eine obere Noppe und eine spiegelbildliche untere Noppe aufweist, die symmetrisch um die longitudinale Mittellinie des Schlüsselrohlings (78) angeordnet sind, wobei jede Noppe eine gleichförmige Kontur mit benachbarten longitudinalen und transversalen Kontaktflächen hat, wobei die genannte longitudinale Kontaktfläche allgemein longitudinal von der transversalen Kontaktfläche in Richtung auf die Schulter verläuft und die genannte transversale Kontaktfläche in einer Ebene emaniert, die lotrecht zur longitudinalen Mittellinie des genannten Schlüsselrohlings verläuft, wobei jede der genannten longitudinalen Kontaktflächen in einem lateralen Abstand von der longitudinalen Mittellinie des Schlüsselrohlings angeordnet ist, so dass jede der genannten Kontaktflächen gleichzeitig in eine nach oben verlaufende Lippe der jeweiligen Kragenelemente des Schlüsseleffektors eingreifen kann,
wobei der Absatz des Schlüsselrohlings so gestaltet ist, dass er auf den Schlüsselrohling ausgerichtet wird, indem er gleichmäßig an den nach oben verlaufenden Lippen des Schlüsseleffektors angelegt wird.

21. Schlüsselherstellvorrichtung nach einem der vorherigen Ansprüche, ferner umfassend ein Mittel zum Ergreifen eines Schlüsselrohlings mit einem Bart, während der Bart zum Schneiden uneingezwängt bleibt.

22. Schlüsselherstellvorrichtung nach Anspruch 21, wobei der Bart (36) wenigstens einen longitudinalen schneidbaren Seitenrand hat und die Seite des Bartes gegenüber dem schneidbaren Seitenrand uneingezwängt ist.

23. Schlüsselherstellvorrichtung nach Anspruch 22, wobei der Schlüsselrohling (78) ferner einen Schaft und einen Griff (34) umfasst und das Ergreifmittel in einen Abschnitt des Schlüsselrohlings (78) eingreift und den Schlüsselrohling in Funktionsbeziehung mit einem Mittel zum Schneiden des longitudinalen schneidbaren Seitenrandes davon bringt, wobei der genannte Abschnitt aus seinem Griff und seinem Schaft besteht, während die gegenüberliegende Seite des genannten Bartes uneingezwängt bleibt.

24. Schlüsselherstellvorrichtung nach Anspruch 22, wobei der Schlüsselrohling (78) ferner einen Griff (34) umfasst, und wobei das Ergreifmittel in den Griff eingreift und den Schlüsselrohling (78) in Funktionsbeziehung mit einem Mittel zum Schneiden eines longitudinalen schneidbaren Seitenrandes davon bringt, während die gegenüberliegende Seite des genannten Bartes (36) uneingezwängt bleibt.

25. Schlüsselherstellvorrichtung nach einem der Ansprüche 5 bis 14 und 17 bis 20, die ferner Folgendes umfasst:
a. ein Mittel zum Ergreifen eines Schlüsselrohlings mit einem Bart (36) mit zwei longitudinalen schneidbaren Seitenrändern, während der Bart zum Schneiden uneingezwängt bleibt;
b. ein rotierendes Schneidrad (102); und
c. ein Mittel zum Bewegen des Ergreifmittels und des damit im Eingriff befindlichen Schlüsselrohlings (78) in eine Fläche-an-Fläche-Schneidbeziehung zwischen einem ersten longitudinalen schneidbaren Seitenrand des Schlüsselrohlings (78) und einer ersten Seite des Schneidrades, so dass Schnitte in dem ersten schneidbaren Seitenrand des Schlüsselrohlings vorgenommen werden, um das Ergreifmittel und den damit im Eingriff befindlichen Schlüsselrohling zu bewegen, um einen zweiten longitudinalen schneidbaren Seitenrand des Schlüsselrohlings zum Schneiden zu positionieren und um das Ergreifmittel und den damit im Eingriff befindlichen Schlüsselrohling in eine Fläche-an-Fläche-Schneidbeziehung zwischen dem zweiten longitudinalen schneidbaren Seitenrand des Schlüsselrohlings und der gegenüberliegenden Seite des Schneidrads zu bewegen, so dass Schnitte in dem zweiten longitudinalen schneidbaren Seitenrand des Schlüsselrohlings vorgenommen werden.

26. Verfahren zum automatischen Herstellen von Schlüsseln unter Verwendung von Attributen eines Objektschlüssels (32) mit einer Längsachse, umfassend die folgenden Schritte:
a. uneingezwängtes Tragen des Objektschlüssels (32) auf einem transparenten Abschnitt (25, 26) einer Oberfläche (22) ;
b. Hinterlichtbeleuchten des Objektschlüssels durch Leiten von Licht durch den transparenten Abschnitt, um die Attribute des Objektschlüssels zu identifizieren;
c. Projizieren eines Lichtstreifens auf den Objektschlüssel und Drehen der Oberfläche (22), um eine funktionelle Positionsbeziehung zwischen der Längsachse des uneingezwängt getragenen Objektschlüssels (32) und einem Mittel (2) zum Gewinnen von Attributen von dem lose gehaltenen Objektschlüssel herzustellen; und
d. Gewinnen von Attributen des uneingezwängt getragenen Objektschlüssels einschließlich lateral exponierter Schlüsselprofile unabhängig von einem physischen Kontakt, so dass Schlüsselprofilcodes des Objektschlüssels erkannt werden können.

27. Verfahren zum automatischen Herstellen von Schlüsseln nach Anspruch 26, ferner umfassend die folgenden Schritte:
a. Empfangen von wenigstens einem Objektbild des von der genannten Hinterlichtbeleuchtung projizierten Objektschlüssels;
b. Produzieren eines Ausgangssignals; und
c. Identifizieren von lateral exponierten Attributen des Objektschlüssels als Reaktion auf das Ausgangssignal.

28. Verfahren zum automatischen Herstellen von Schlüsseln nach Anspruch 26, wobei das Gewinnen von Attributen des lose getragenen Objektschlüssels Folgendes umfasst:
a. Projizieren von wenigstens einem Lichtstreifen schräg auf den Objektschlüssel;
b. Empfangen eines Objektbildes des Lichtstreifens von lateral geschützten Attributen des Objektschlüssels;
c. Erkennen eines Pixelmusters von dem genannten Objektbild;
d. Produzieren einer Reihe von Codesignalen, die Eigenschaften des erkannten Pixelmusters jedes Zielpixels vom Ergebnis der genannten Erkennung definieren;
e. Vergleichen der Codesignale mit Kopiervorlage-Codesignalen aus einem Kopiervorlagemusterspeicher, wobei die genannten Kopiervorlage-Codesignale Eigenschaften eines Kopiervorlage-Pixelmusters eines gewählten Schlüsselfabrikats definieren; und
f. Produzieren eines Identifikationssignals von einem solchen Vergleich, wobei das genannte Identifikationssignal vom Ergebnis der Erkennung des Pixelmusters des Objektschlüssels einen entsprechenden Schlüsselrohling mit einem vorbestimmten Kopiervorlagemuster mit Kopiervorlage-Codesignalen definiert, die Codesignalen entsprechen.

29. Verfahren zum automatischen Herstellen von Schlüsseln nach Anspruch 26, wobei das Gewinnen von Attributen des lose getragenen Objektschlüssels Folgendes umfasst:
a. Projizieren von wenigstens einem Lichtstreifen schräg auf den Objektschlüssel;
b. Empfangen eines Objektbildes des Lichtstreifens von lateral geschützten Attributen des Objektschlüssels;
c. Erkennen eines Pixelmusters von dem genannten Objektbild;
d. Produzieren einer Serie von Codesignalen, die Eigenschaften des erkannten Pixelmusters für jedes Zielpixel vom Ergebnis der genannten Erkennung definieren;
e. Vergleichen der Codesignale mit Kopiervorlage-Codesignalen von einem Kopiervorlagemusterspeicher, wobei die genannten Kopiervorlage-Codesignale Eigenschaften der Kopiervorlage-Pixelmuster definieren, die lateral geschützte Attribute eines gewählten Schlüsselfabrikats definieren; und
f. Produzieren eines Identifikationssignals von einem solchen Vergleich, wobei das genannte Identifikationssignal vom Ergebnis der Erkennung des Pixelmusters des Objektschlüssels Schlüsselprofilcodes mit einem vorbestimmten Kopiervorlagemuster mit Kopiervorlage-Codesignalen definiert, die mit Codesignalen übereinstimmen,
so dass Schlüsselprofile, die den Schlüsselprofilcodes entsprechen, in einen entsprechenden Schlüsselrohling geschnitten werden können.

30. Verfahren zum automatischen Herstellen von Schlüsseln nach Anspruch 26, wobei das Gewinnen von Attributen des lose getragenen Objektschlüssels die folgenden sequentiellen Schritte umfasst:
a. Projizieren von wenigstens einem Lichtstreifen schräg auf den Objektschlüssel;
b. Empfangen eines Objektbildes des Lichtstreifens von lateral geschützten Attributen des Objektschlüssels;
c. Erkennen eines Pixelmusters von dem genannten Objektbild;
d. Produzieren einer Serie von Codesignalen, die Eigenschaften des erkannten Pixelmusters für jedes Zielpixel vom Ergebnis der genannten Erkennung definieren;
e. Vergleichen der Codesignale mit entsprechenden Kopiervorlage-Codesignalen von einem Kopiervorlagemusterspeicher, wobei die genannten Kopiervorlage-Codesignale Eigenschaften eines Kopiervorlage-Pixelmusters von lateral geschützten Attributen eines gewählten Schlüsselfabrikats definieren; und
f. Produzieren eines Identifikationssignals von einem solchen Vergleich, wobei das genannte Identifikationssignal vom Ergebnis der Erkennung des Pixelmusters des Objektschlüssels einen entsprechenden Schlüsselrohling mit einem vorbestimmten Kopiervorlagemuster mit Kopiervorlage-Codesignalen definiert, die mit Codesignalen übereinstimmen.

31. Verfahren zum automatischen Herstellen von Schlüsseln nach Anspruch 26, ferner umfassend die folgenden Schritte:
a. Empfangen von wenigstens einem Objektbild des von der genannten Hinterlichtbeleuchtung projizierten Objektschlüssels;
b. Erkennen eines Pixelmusters von dem genannten Objektbild;
c. Produzieren einer Serie von Codesignalen, die Eigenschaften des erkannten Pixelmusters für jedes Zielpixel definieren, vom Ergebnis der genannten Erkennung, wobei die genannten Zielpixel eine Polylinie von lateral exponierten Attributen des Objektschlüssels definieren;
d. Vergleichen der Codesignale mit entsprechenden Kopiervorlage-Codesignalen von einem Kopiervorlagemusterspeicher, wobei jedes Kopiervorlage-Codesignal Eigenschaften eines Kopiervorlage-Pixelmusters von lateral exponierten Attributen eines gewählten Schlüsselfabrikats definiert;
e. Erzeugen eines Identifikationssignals von einem solchen Vergleich; und
f. Identifizieren von lateral exponierten Attributen des Objektschlüssels als Reaktion auf das Ausgangssignal.

32. Verfahren zum automatischen Herstellen von Schlüsseln nach einem der Ansprüche 28 - 31, umfassend die folgenden zusätzlichen Schritte:
a. Auswählen eines Schlüsselrohlings, der dem genannten Identifikationssignal entspricht, aus einer Mehrzahl von Schlüsselrohlingen;
b. Ergreifen des genannten Schlüsselrohlings;
c. Positionieren des genannten Schlüsselrohlings zum Schneiden;
d. Schneiden von Schlüsselprofilmerkmalen in den genannten entsprechenden Schlüsselrohling zum Erzeugen eines neuen Schlüssels;
e. Entgraten des genannten neuen Schlüssels; und
f. Ausgeben des genannten neuen Schlüssels.

33. Verfahren zum automatischen Herstellen von Schlüsseln nach Anspruch 26, das ferner Folgendes umfasst:
a. Auswählen eines entsprechenden Schlüsselrohlings (78) aus einer Mehrzahl von Schlüsselrohlingen als Reaktion auf ein Identifikationssignal;
b. Ergreifen des genannten Schlüsselrohlings;
c. Positionieren des genannten Schlüsselrohlings zum Schneiden; und
d. Schneiden von Schlüsselprofilmerkmalen in den genannten Schlüsselrohling gemäß den ursprünglichen Schlüsselprofilmerkmalen des Schlossherstellers, um einen neuen Schlüssel zu erzeugen.

34. Verfahren zum automatischen Herstellen von Schlüsseln nach Anspruch 26, wobei das Gewinnen von Attributen des lose getragenen Objektschlüssels Folgendes umfasst:
a. Empfangen von wenigstens einem Objektbild des von der genannten Hinterlichtbeleuchtung projizierten Objektschlüssels (32);
b. Erkennen eines Pixelmusters von dem genannten Objektbild;
c. Produzieren einer Serie von Codesignalen, die Eigenschaften des erkannten Pixelmusters von jedem Zielpixel vom Ergebnis der genannten Erkennung definieren, wobei die genannten Zielpixel Attribute des Objektschlüssels definieren;
d. Vergleichen der primären Codesignale mit entsprechenden Kopiervorlage-Codesignalen von einem Kopiervorlagemusterspeicher, wobei jedes Kopiervorlage-Codesignal Eigenschaften eines Kopiervorlage-Pixelmusters von Attributen eines gewählten Schlüsselfabrikats definiert;
e. Produzieren eines Rückweisungssignals von einem solchen Vergleich, wobei das genannte Rückweisungssignal vom Ergebnis der genannten Erkennung des Pixelmusters des Objektschlüssels und als Reaktion auf das genannte Rückweisungssignal ein Fehlen von Kopiervorlage-Codesignalen definiert, die mit den primären Codesignalen übereinstimmen;
f. Einschalten einer Überkopflampe und Beleuchten des Objektschlüssels;
g. Empfangen von wenigstens einem Objektbild des beleuchteten Objektschlüssels und Produzieren eines Speichersignals; und
h. Speichern des genannten Speichersignals.

35. Verfahren zum automatischen Herstellen von Schlüsseln nach Anspruch 26, wobei das Gewinnen von Attributen des lose getragenen Objektschlüssels Folgendes umfasst:
a. Empfangen von wenigstens einem hinterlichtbeleuchteten Objektbild des Objektschlüssels;
b. Erkennen eines Pixelmusters von dem genannten hinterlichtbeleuchteten Objektbild;
c. Produzieren einer Serie von primären Codesignalen, die Eigenschaften des erkannten Pixelmusters für jedes Zielpixel vom Ergebnis der genannten Erkennung definieren, wobei die genannten Zielpixel eine Polylinie von lateral exponierten Attributen des Objektschlüssels definieren;
d. Vergleichen der primären Codesignale in Bezug auf die Umrissgestalt der Polylinie mit entsprechenden Kopiervorlage-Codesignalen von einem Kopiervorlagemusterspeicher, wobei jedes Kopiervorlage-Codesignal Eigenschaften eines Kopiervorlage-Pixelmusters der Gestalt eines gewählten Schlüsselfabrikats definiert;
e. Produzieren eines ersten Rückweisungssignals von einem solchen Vergleich, wobei das genannte Rückweisungssignal vom Ergebnis der genannten Erkennung des Pixelmusters des Objektschlüssels ein Fehlen entsprechender Kopiervorlage-Codesignale definiert, die mit den primären Codesignalen übereinstimmen; und als Reaktion auf das genannte erste Rückweisungssignal:
f. Einschalten einer Überkopflampe und Beleuchten des Objektschlüssels;
g. Empfangen von wenigstens einem Objektbild des beleuchteten Objektschlüssels und Produzieren des ersten Speichersignals; und
h. Speichern des genannten ersten Speichersignals.

36. Verfahren zum automatischen Herstellen von Schlüsseln nach Anspruch 26, wobei das Gewinnen von Attributen des lose getragenen Objektschlüssels Folgendes umfasst:
a. Empfangen von wenigstens einem hinterlichtbeleuchteten Objektbild des Objektschlüssels;
b. Erkennen eines Pixelmusters von dem genannten hinterlichtbeleuchteten Objektbild;
c. Produzieren einer Serie von primären Codesignalen, die Eigenschaften des erkannten Pixelmusters für jedes Zielpixel vom Ergebnis der genannten Erkennung definieren, wobei die genannten Zielpixel eine Polylinie von lateral exponierten Attributen des Objektschlüssels definieren;
d. Vergleichen der primären Codesignale in Bezug auf die Umrissgestalt der Polylinie mit entsprechenden Kopiervorlage-Codesignalen von einem Kopiervorlagemusterspeicher, wobei jedes Kopiervorlage-Codesignal Eigenschaften eines Kopiervorlage-Pixelmusters in Bezug auf die Form eines gewählten Schlüsselfabrikats definiert;
e. Produzieren eines ersten Identifikationssignals von einem solchen Vergleich, wobei das genannte erste Identifikationssignal vom Ergebnis der Erkennung des Pixelmusters des Objektschlüssels einen entsprechenden Schlüsselrohling mit einem vorbestimmten Kopiervorlagemuster mit Kopiervorlage-Codesignalen definiert, die mit Codesignalen übereinstimmen, so dass ein entsprechendes gewähltes Schlüsselfabrikat und entsprechender Schlüsselrohling als Reaktion auf das erste Identifikationssignal ermittelt werden können;
f. Projizieren von wenigstens einem Lichtstreifen auf einen Objektschlüssel;
g. Empfangen eines Objektbildes des Lichtstreifens von lateral geschützten Attributen des Objektschlüssels;
h. Erkennen eines Pixelmusters von dem genannten Objektbild des Lichtstreifens der lateral geschützten Attribute des Objektschlüssels;
i. Produzieren einer Reihe von sekundären Codesignalen, die Eigenschaften des erkannten Pixelmusters für jedes Zielpixel vom Ergebnis der genannten Erkennung definieren, wobei die genannten Zielpixel einen Lichtstreifen der lateral geschützten Attribute des Objektschlüssels definieren;
j. Vergleichen jedes der sekundären Codesignale mit entsprechenden Kopiervorlage-Codesignalen aus einem Kopiervorlagemusterspeicher, wobei jedes Kopiervorlage-Codesignal Eigenschaften eines Kopiervorlage-Pixelmusters der lateral geschützten Attribute des gewählten Schlüsselfabrikats definiert;
k. Produzieren eines Anfragesignals von einem solchen Vergleich, wobei das genannte Anfragesignal vom Ergebnis der genannten Erkennung des Pixelmusters des Objektschlüssels ein Fehlen entsprechender Kopiervorlage-Codesignalen definiert, die mit den sekundären Codesignalen übereinstimmen; und als Reaktion auf das genannte Anfragesignal:
l. Ermitteln, ob es Informationen über eine andere Seite des Objektschlüssels von dem Kopiervorlagemusterspeicher in Bezug auf das gewählte Schlüsselfabrikat geben kann, und Produzieren eines Rückweisungssignals, wobei das genannte Rückweisungssignal ein Fehlen von Informationen über eine andere Seite des Objektschlüssels definiert; und als Reaktion auf das genannte Rückweisungssignal:
m. Einschalten einer Überkopflampe und Beleuchten des Objektschlüssels;
n. Empfangen von wenigstens einem Objektbild des beleuchteten Objektschlüssels und Produzieren eines Speichersignals; und
o. Speichern des genannten Speichersignals.

37. Verfahren zum automatischen Herstellen von Schlüsseln nach Anspruch 26, wobei das Gewinnen von Attributen des lose getragenen Objektschlüssels Folgendes umfasst:
a. Empfangen von wenigstens einem hinterlichtbeleuchteten Objektbild des Objektschlüssels;
b. Erkennen eines Pixelmusters von dem genannten hinterlichtbeleuchteten Objektbild;
c. Produzieren einer Serie von primären Codesignalen, die Eigenschaften des erkannten Pixelmusters für jedes Zielpixel vom Ergebnis der genannten Erkennung definieren, wobei die genannten Zielpixel eine Polylinie von lateral exponierten Attributen des Objektschlüssels definieren;
d. Vergleichen der primären Codesignale in Bezug auf eine Umrissgestalt der Polylinie mit entsprechenden Kopiervorlage-Codesignalen von einem Kopiervorlagemusterspeicher, wobei jedes Kopiervorlage-Codesignal Eigenschaften eines Kopiervorlage-Pixelmusters der Gestalt eines gewählten Schlüsselfabrikats definiert;
e. Produzieren eines ersten Identifikationssignals von einem solchen Vergleich, wobei das genannte erste Identifikationssignal vom Ergebnis der Erkennung des Pixelmusters des Objektschlüssels einen entsprechenden Schlüsselrohling mit einem vorbestimmten Kopiervorlagemuster mit Kopiervorlage-Codesignalen definiert, die mit Codesignalen übereinstimmen, so dass ein entsprechendes gewähltes Schlüsselfabrikat und ein entsprechender Schlüsselrohling als Reaktion auf das erste Identifikationssignal ermittelt werden können; und
f. Projizieren von wenigstens einem Lichtstreifen auf einen Objektschlüssel;
g. Empfangen eines Objektbildes des Lichtstreifens von lateral geschützten Attributen des Objektschlüssels;
h. Erkennen eines Pixelmusters von dem genannten Objektbild des Lichtstreifens der lateral geschützten Attribute des Objektschlüssels;
i. Produzieren einer Reihe von sekundären Codesignalen, die Eigenschaften des erkannten Pixelmusters für jedes Zielpixel definieren, vom Ergebnis der genannten Erkennung des Pixelmusters von dem genannten Objektbild des Lichtstreifens der lateral geschützten Attribute des Objektschlüssels;
j. Vergleichen jedes der sekundären Codesignale mit entsprechenden Kopiervorlage-Codesignalen von einem Kopiervorlagemusterspeicher, wobei jedes Kopiervorlage-Codesignal Eigenschaften eines Kopiervorlage-Pixelmusters der lateral geschützten Attribute des gewählten Schlüsselfabikats definiert;
k. Produzieren eines Anfragesignals von einem solchen Vergleich, wobei das genannte Anfragesignal vom Ergebnis der genannten Erkennung des Pixelmusters des Objektschlüssels entsprechende Kopiervorlage-Codesignale definiert, die mit den sekundären Codesignalen übereinstimmen; und als Reaktion auf das genannte Anfragesignal:
l. Ermitteln, ob es Informationen über eine andere Seite des Objektschlüssels von dem Kopiervorlagemusterspeicher in Bezug auf das gewählte Schlüsselfabrikat geben kann, und Produzieren eines Neustartsignals, wobei das genannte Neustartsignal weitere Informationen über eine andere Seite des Objektschlüssels definiert; und als Reaktion auf das genannte Neustartsignal:
m. Bereitstellen von Anweisungen zum Umdrehen des Objektschlüssels; und
n. Wiederholen der Schritte a bis k.

38. Verfahren zum automatischen Herstellen von Schlüsseln nach einem der Ansprüche 26 bis 37, ferner umfassend die folgenden Schritte:
a. Betätigen von wenigstens einem Grundschlittenantriebsmotor zum Positionieren eines Schlüsseleffektors mit einem beweglichen Stab mit einem nach oben verlaufenden Bolzen in funktioneller Assoziation mit einem entsprechenden Schlüsselrohling als Reaktion auf ein Identifikationssignal;
b. Betätigen eines ersten zu betätigenden Mittels zum horizontalen Bewegen des Stabes axial zum Positionieren des nach oben verlaufenden Bolzens in einem Abstand unter und in Ausrichtung mit einem Loch im Griff des entsprechenden Schlüsselrohlings;
c. Betätigen eines Antriebsmotors zum Positionieren des Bolzens des Schlüsseleffektors vertikal in das Loch in dem Griff des entsprechenden Schlüsselrohlings;
d. Betätigen des ersten zu betätigenden Mittels, um den Stab axial horizontal einzuziehen, um den entsprechenden Schlüsselrohling aus einem Haltemittel zu entnehmen;
e. Betätigen eines zweiten zu betätigenden Mittels zum Sichern des entsprechenden Schlüsselrohlings mit einem Einspannmittel;
f. Betätigen eines Mittels zum Schneiden;
g. Betätigen von wenigstens einem Grundschlittenantriebsmotor, um den Schlüsseleffektor und den gesicherten entsprechenden Schlüsselrohling in eine funktionelle Assoziation mit dem Mittel zum Schneiden zu positionieren, um einen neuen Schlüssel zu schneiden;
h. Betätigen des zweiten zu betätigenden Mittels zum Lösen des Einspannmittels; und
i. Betätigen von wenigstens einem Grundschlittenantriebsmotor, um den neuen Schlüssel zur Ausgabe zu positionieren.

39. Verfahren zum automatischen Herstellen von Schlüsseln nach einem der Ansprüche 26 bis 37, ferner umfassend die folgenden Schritte:
a. Projizieren eines allgemein horizontalen Lichtstrahls unmittelbar oberhalb eines Mittels zum Tragen eines Objektschlüssels und transversal zum Bart des darauf liegenden Objektschlüssels;
b. Empfangen des Lichts des horizontalen Strahls, das nicht vom Bart eines auf dem Bartabschnitt des Mittels zum Tragen eines Objektschlüssels angeordneten Objektschlüssels blockiert wird, und Produzieren von wenigstens einem Ausgangssignal;
c. inkrementales Verringern der vertikalen Höhe des Griffabschnitts des Mittels zum Tragen eines Objektschlüssels in Bezug auf das genannte zweite Ausgangssignal; und
d. Wiederholen der sequentiellen Schritte a, b und c mit einer vorbestimmten Häufigkeit;
e. Produzieren eines nicht existierenden Schlüsselrückweisungssignals von einer solchen vorgegebenen Anzahl von Wiederholungen, wobei das genannte nicht existierende Schlüsselrückweisungssignal ein Fehlen eines den Lichtempfang blockierenden Objektschlüssels definiert, was bedeutet, dass der Objektschlüssel nicht auf dem Tragmittel angeordnet war; und als Reaktion auf das genannte nicht existierende Schlüsselrückweisungssignal:
f. Einschalten einer Überkopflampe, Anzeigen von Anweisungen und Öffnen einer Zugangsklappe.

40. Verfahren zum automatischen Herstellen von Schlüsseln nach Anspruch 28, umfassend das Ergreifen eines Schlüsselrohlings mit einem Bart mit wenigstens einem longitudinalen schneidbaren Seitenrand und einem Griff, der mit dem entsprechenden Schlüsselrohling übereinstimmt, an seinem Griff und Durchführen von Schnitten in einem longitudinalen schneidbaren Seitenrand davon, während die gegenüberliegende Seite des genannten Bartes uneingezwängt gelassen wird.

41. Verfahren zum automatischen Herstellen von Schlüsseln nach Anspruch 40, umfassend die folgenden Schritte:
a. Schneiden, mit einer ersten Seite eines Drehschneidrades, eines ersten longitudinalen schneidbaren Seitenrandes eines Schlüsselrohlings mit einem Bart mit zwei longitudinalen schneidbaren Seitenrändern, während die gegenüberliegende Seite des genannten Bartes uneingezwängt gelassen wird;
b. Bewegen des Schlüsselrohlings, um einen zweiten longitudinalen schneidbaren Seitenrand in einer Fläche-an-Fläche-Beziehung mit der gegenüberliegenden Seite des Drehschneidrads zum Schneiden zu positionieren; und
c. Schneiden, mit der gegenüberliegenden Seite des Drehschneidrades, des zweiten longitudinalen schneidbaren Seitenrandes des Schlüsselrohlings, während die gegenüberliegende Seite des Bartes uneingezwängt gelassen wird.

## Revendications

1. Appareil de fabrication de clés utilisant les attributs d'une clé objet (32) ayant un axe longitudinal, comprenant :
un moyen d'extraction des attributs d'une clé objet (32) ; et
un moyen (28) de support de la clé objet (32) pour établir une relation positionnelle de fonctionnement entre la clé objet (32) et le moyen d'extraction des attributs ;
**caractérisé en ce que** ledit moyen de support supporte la clé objet (32) d'une manière exempte de contrainte, est rotatif et a une partie transparente (25, 26) sur laquelle la clé objet peut être placée ;
ledit moyen d'extraction des attributs ayant un moyen de rétro-éclairage (48) agencé et adapté pour faire passer la lumière par la partie transparente (25, 26) du moyen de support (28) et projeter une image de la clé objet (32) positionnée dessus, un moyen (2) pour recevoir l'image objet de la clé objet (32) et produire un signal de sortie, un moyen pour déterminer la position de l'axe longitudinal de la clé objet par rapport à une bande de lumière (20) qui peut être projetée sur la clé objet (32) par un générateur de bande de lumière (12) réagissant au signal de sortie produit par le moyen de réception (2), un moyen (30) pour faire pivoter le moyen de support (28), un moyen de commande de position de la clé objet qui est relié de manière fonctionnelle et réagit à un signal de sortie du moyen de détermination de la position de la clé objet et qui est relié de manière fonctionnelle au moyen (30) de rotation du moyen de support (28),
grâce à quoi l'axe longitudinal d'une clé objet peut être aligné perpendiculairement à la bande de lumière projetée sur la clé objet (32) par le générateur de bande de lumière (12).

2. Appareil de fabrication de clés selon la revendication 1, comprenant en outre :
un moyen pour déterminer l'orientation relative initiale de la clé objet supportée sans contrainte sur une surface ;
un moyen sans contact pour extraire les encoches et attributs exposés latéralement de la forme extérieure de la clé objet, grâce à quoi les codes d'encoches de la clé objet peuvent être reconnus.

3. Appareil de fabrication de clés selon l'une quelconque des revendications précédentes, dans lequel le moyen d'extraction des attributs d'une clé objet comprend en outre :
un moyen pour déterminer l'orientation relative initiale de la clé objet supportée sans contrainte sur une surface ;
un moyen (2) pour recevoir au moins une image objet des attributs d'encoches exposés latéralement de la clé objet (32) positionnée sur ladite partie transparente (25, 26) et produire un signal de sortie corrélé auxdites encoches ; et
un moyen pour identifier les attributs exposés latéralement de la clé objet (32) qui est relié de manière fonctionnelle et réagit au signal de sortie corrélé auxdits attributs d'encoches de la clé objet du moyen de réception d'une image objet de la clé objet,
grâce à quoi une clé brute et les codes d'encoches à partir desquels est fabriquée la clé objet peuvent être identifiés.

4. Appareil de fabrication de clés selon l'une quelconque des revendications précédentes, dans lequel le moyen sans contact d'extraction des attributs d'une clé objet comprend :
un moyen d'extraction des attributs protégés latéralement comprenant les rainures longitudinales (116) d'une clé objet (32) ayant :
a. le générateur de bande de lumière (12) agencé et adapté pour projeter au moins une bande de lumière obliquement sur la clé objet ; et
b. un moyen pour recevoir une image objet agencé et adapté pour recevoir une image de la bande de lumière projetée reflétée par la clé objet,
grâce à quoi les attributs protégés latéralement, y compris les rainures longitudinales de la clé objet, peuvent être extraits.

5. Appareil de fabrication de clés selon l'une quelconque des revendications précédentes, dans lequel le moyen d'identification des attributs d'une clé objet comprend :
a. un moyen de reconnaissance des formes pour reconnaître une forme de pixel à partir d'une image objet de la clé objet, et pour produire une série de signaux de codes par rapport à chaque pixel cible résultant de ladite reconnaissance, lesdits signaux de codes définissant les caractéristiques de la forme de pixel reconnue pour chaque pixel cible, lesdites formes de pixels définissant les attributs de la clé objet ; et
b. un moyen de discrimination ayant une mémoire de formes dans laquelle un ensemble de formes types prédéterminées est enregistré, lesdites formes types prédéterminées étant une pluralité de signaux de codes types, lesdits signaux de codes types définissant les caractéristiques d'une forme de pixel type, ladite forme de pixel type définissant les attributs d'une clé d'un fabricant sélectionné, pour comparer les signaux de codes provenant du moyen de reconnaissance des formes avec un signal de code type correspondant, et pour produire un signal d'identification,
ledit signal d'identification définissant une clé brute correspondante ayant un trou dans son anneau et une forme type prédéterminée ayant des signaux de codes types correspondant aux signaux de codes résultant de la reconnaissance de la forme de pixel de la clé objet,
grâce à quoi les attributs correspondants d'une clé brute correspondante d'un fabricant connu peuvent être déterminés.

6. Appareil de fabrication de clés selon la revendication 5, dans lequel le moyen de reconnaissance des formes reconnaît une forme de pixel intégrée à partir d'une pluralité d'images objets discrètes de la clé objet.

7. Appareil de fabrication de clés selon l'une quelconque des revendications précédentes, dans lequel le moyen d'identification des attributs d'une clé objet comprend :
a. un moyen de reconnaissance des formes pour reconnaître au moins une image objet de la clé objet, et pour produire une série de signaux de codes correspondant à chaque pixel cible résultant de ladite reconnaissance, lesdits signaux de codes définissant les caractéristiques de la forme de pixel reconnue pour chaque pixel cible, lesdites formes de pixels définissant les attributs exposés latéralement représentés sur une polyligne d'une silhouette de la clé objet ; et
b. un moyen de discrimination ayant une mémoire des formes, dans lequel un ensemble de formes types prédéterminées est enregistré, lesdites formes types prédéterminées étant une pluralité de signaux de codes types, lesdits signaux de codes types définissant les caractéristiques d'une forme de pixel type, ladite forme de pixel type définissant les attributs exposés latéralement d'une clé d'un fabricant sélectionné, pour comparer les signaux de codes provenant du moyen de reconnaissance des formes avec un signal de code type correspondant, et pour produire un signal d'identification,
ledit signal d'identification définit une clé brute correspondante ayant un trou dans son anneau et une forme type prédéterminée ayant des signaux de codes types correspondant aux signaux de codes résultant de la reconnaissance de la forme de pixel de la clé objet,
grâce à quoi une clé brute correspondante qui correspond à la forme extérieure d'une clé d'un fabricant connu peut être déterminée.

8. Appareil de fabrication de clés selon l'une quelconque des revendications 5 à 7, dans lequel le signal d'identification définit en outre un code d'encoche identifié avec la clé brute correspondante (78),
grâce à quoi des encoches conformes aux codes d'encoches d'une clé d'un fabricant connu peuvent être déterminées.

9. Appareil de fabrication de clés selon l'une quelconque des revendications 5 à 7, dans lequel le signal d'identification définit en outre les caractéristiques d'encoches de la clé objet (32) qui correspondent de manière générale aux codes d'encoches identifiés avec la clé brute correspondante (78),
grâce à quoi les caractéristiques d'encoches de la clé objet peuvent être déterminées pour être utilisées avec la clé brute correspondante (78).

10. Appareil de fabrication de clés selon l'une quelconque des revendications 5 à 7, comprenant un moyen (82) de stockage d'une pluralité de clés brutes, un moyen pour sélectionner une clé brute correspondante dans la pluralité de clés brutes en réponse audit signal d'identification, et un moyen (72) pour saisir une clé brute correspondante.

11. Appareil de fabrication de clés selon la revendication 10, dans lequel le moyen de stockage d'une pluralité de clés brutes comprend :
a. une pluralité de récipients (82) contenant des clés, chacun pour contenir une pile de clés brutes identiques (78) ; et
b. une cuvette de distribution (80) disposée au fond de chaque récipient (82) contenant des clés,
chacune desdites cuvettes de distribution (80) ayant une ouverture au sommet, convenablement dimensionnée et adaptée pour recevoir un récipient (82) contenant des clés et ayant une paroi avant proximale dans laquelle est disposé un passage (86) et une paroi inférieure ayant une fente (81) disposée centralement le long d'une partie de celle-ci se prolongeant continuellement à partir du passage disposé dans ladite paroi avant, à travers laquelle une clé brute (78) peut être retirée,
chacune desdites cuvettes de distribution ayant son ouverture alignée dans une direction identique,
lesdites cuvettes de distribution (80) étant disposée en un réseau spatial de colonnes et de rangées, lesdites colonnes et rangées étant disposées orthogonalement,
chaque cuvette de distribution (80) dans une rangée étant disposée à une hauteur identique, ladite rangée étant généralement parallèle à ses parois avant proximales,
chaque rangée de cuvettes de distribution ayant une distance d'espacement vertical par rapport aux cuvettes de distribution d'une rangée contiguë et formant une relation étagée généralement uniforme entre elles avec les cuvettes de distribution d'une rangée faisant face aux parois avant proximales des cuvettes de distribution dans une rangée contiguë se trouvant à une distance d'espacement élevé par rapport à elle, ladite distance d'espacement étant suffisante pour permettre au moyen de prise d'accéder à une clé brute (78) et de la retirer.

12. Appareil de fabrication de clés selon la revendication 10, dans lequel le moyen de stockage d'une pluralité de clés brutes comprend :
a. au moins un récipient (82) contenant des clés ayant une ouverture à la base et une ouverture au sommet et dans lequel est disposée une cavité verticale de forme générale uniforme, ladite cavité étant convenablement dimensionnée et adaptée pour contenir une pile de clés brutes positionnées horizontalement (78) ; et
b. une cuvette de distribution (80) pour chaque récipient (82) contenant des clés, ladite cuvette de distribution (80) ayant une ouverture au sommet convenablement dimensionnée et adaptée pour recevoir un récipient (82) contenant des clés et ayant une paroi avant proximale dans laquelle est disposé un passage (86) et une paroi inférieure ayant une fente (81) disposée centralement le long d'une partie de celle-ci se prolongeant continuellement à partir du passage disposé dans ladite paroi avant,
ledit passage étant convenablement dimensionné pour permettre de retirer une clé brute (78) horizontalement à travers lui, et sur lequel une porte (88) supérieure est disposée, ladite porte (88) ayant un contour dépassant vers l'extérieur avec un moyen de pivot à charnière articulée (82a) et étant agencée et adaptée pour se déplacer entre une position généralement fermée et une position ouverte dans laquelle le moyen de pivot à charnière articulée (82a) est comprimé en laissant le passage suffisamment ouvert pour permettre d'en retirer une clé,
grâce à quoi une clé brute positionnée à la base de la pile peut être retirée et ladite porte empêche effectivement la clé brute positionnée immédiatement au-dessus de la clé brute du dessous de se déplacer horizontalement.

13. Appareil de fabrication de clés selon la revendication 10, dans lequel le moyen de prise comprend un effecteur de clés (72) ayant une base (56), un ensemble de positionnement de broche mobile ayant une broche qui est convenablement dimensionnée et adaptée pour se prolonger dans un trou prévu dans l'anneau d'une clé brute, et un moyen de serrage,
a. ledit ensemble de positionnement de broche comprenant un pied (84), une paire d'éléments de collier opposés disposés vers le haut (75), un manchon (83) et une tige (85) sur une extrémité distante de laquelle la broche (89) est disposée verticalement et radialement,
(1) chacun des éléments de collier opposés (75) comprenant :
une surface inférieure agencée et adaptée pour être supportée sur le dessus du pied (84) et pour supporter le manchon (83) disposé latéralement entre eux, une bride dirigée vers l'intérieur à partir de sa surface supérieure et parallèlement à celle-ci à une certaine distance l'une de l'autre, chacune desdites brides s'étendant par-dessus le manchon supporté (83) pour limiter le déplacement indépendant du manchon vers le haut,
une paroi latérale proximale, une paroi latérale distale, une paroi latérale intérieure, et une paroi latérale extérieure, le bord inférieur de chacune des parois latérales étant relié aux bords latéraux d'une paroi inférieure et leur bord supérieur étant relié aux bords latéraux d'une surface supérieure, respectivement, chacune des parois latérales extérieures étant coplanaires avec une surface latérale du pied (84), la paroi inférieure de chacun des éléments de collier (75) et sa surface supérieure étant chacune située dans un plan horizontal, et chacune de ses parois latérales étant disposée dans un plan vertical,
la paroi latérale intérieure étant agencée et adaptée pour s'engager avec une paroi extérieure latérale du manchon (83) pour limiter le déplacement latéral de celui-ci,
un évidement (75b) formant une ouverture dans sa surface supérieure convenablement dimensionnée et adaptée pour recevoir un ressort (73) et un bloc (71), et
un rebord disposé vers le haut (75c) à l'extrémité distale de sa surface supérieure, chacun desdits rebords (75a) sur chacun des éléments de collier respectifs (75) étant situé dans un plan vertical et ayant entre eux un espace supérieur à la largeur latérale de l'une quelconque de ladite pluralité de clés brutes mesurée en travers de sa butée, et inférieur à la largeur latérale de l'une quelconque de ladite pluralité de clés brutes mesurée en travers de son anneau,
le ressort (73) et le bloc (71) rappelé par ressort étant normalement exposés à partir de l'évidement (75b) dans sa surface supérieure, le dessus dudit bloc s'étendant plus haut que les rebords verticaux et pouvant être comprimé à l'intérieur par le moyen de serrage ;
(2) le manchon (83) a une forme générale allongée et une cavité cylindrique intérieure longitudinale formant des ouvertures à chacune de ses extrémités, dont la surface est agencée et adaptée pour fixer de manière coulissante la tige (85) qui peut se déplacer axialement à l'intérieur,
ledit manchon (83) a en outre une fente centrale disposée longitudinalement dans sa surface supérieure, grâce à quoi la tige (85) peut se déplacer axialement dans le manchon sans obstruction à la broche (87) qui dépasse vers le haut ;
(3) ladite tige (86) étant reliée à son extrémité proximale à un premier moyen actionnable pour assurer le déplacement axial et ayant un diamètre légèrement plus petit que le diamètre de la cavité cylindrique du manchon (83) de manière à pouvoir coulisser axialement à l'intérieur ;
(4) le haut de ladite broche dépassant vers le haut (87) dépassant plus haut que le dessus des blocs rappelés par ressort normalement exposés (71) ;
(5) ledit pied (84) ayant la forme d'un prisme carré à surface supérieure horizontale, deux parois latérales, et une paroi latérale proximale et une paroi latérale distale, ledit manchon (83) étant supporté par, et positionné entre, les éléments de collier opposés disposés vers le haut (75), les éléments de collier opposés disposés vers le haut (75) étant supportés par et fixés à la surface supérieure du pied (84),
b. le moyen de serrage comprend une bride (74) reliée à un second moyen actionnable (70) pour assurer le déplacement vertical et ayant une paroi inférieure, deux parois latérales parallèles, et une paroi supérieure, et ayant une ouverture rectangulaire (98) délimitée par la surface inférieure de la paroi supérieure, la surface supérieure de la paroi inférieure et la surface intérieure de chaque paroi latérale,
ladite ouverture rectangulaire (98) est convenablement dimensionnée et adaptée pour englober le pied et les éléments de collier (75) de l'ensemble de positionnement de la broche et se déplacer verticalement par rapport à eux entre une première position, dans laquelle la surface inférieure de la paroi supérieure est à une certaine distance au-dessus de la broche qui dépasse vers le haut, et une seconde position, dans laquelle la surface inférieure de la paroi supérieure est en dessous du bord supérieur des rebords dépassant vers le haut des éléments de collier (75) et en association fonctionnelle avec la surface supérieure des éléments de collier (75) ;
c. ladite base (56) ayant quatre sous-bases comprenant une première sous-base (52) ayant une position fixe et un premier système de guides de déplacement coulissant linéaire (54, 61) disposés dessus, une seconde sous-base (58) engagée avec le premier système de guides de déplacement coulissant linéaire (54, 61) et pouvant se déplacer dessus, et sur laquelle est disposé un second système de guides de déplacement coulissant linéaire (60, 63), une troisième sous-base (62) engagée avec le second système de guides de déplacement coulissant linéaire (60, 63) et pouvant se déplacer dessus et sur laquelle est disposé un troisième système de guides de déplacement coulissant linéaire (64, 65), et une quatrième sous-base (66) engagée avec le troisième système de guides de déplacement coulissant linéaire et pouvant se déplacer dessus, et à laquelle est fixé l'effecteur de clés (72).
la seconde sous-base (58) a une premier moyen formant moteur de sous-base pour déplacer la sous-base le long des guides de déplacement coulissant linéaire (54, 61) l'engageant à la première sous-base (52),
la troisième sous-base (62) a un second moyen formant moteur de sous-base pour déplacer la sous-base (62) le long des guides de déplacement coulissant linéaire (60, 63) l'engageant avec la seconde sous-base (58),
la quatrième sous-base (66) a un troisième moyen formant moteur de sous-base pour déplacer la sous-base (66) le long des guides de déplacement coulissant linéaire (64, 65) l'engageant avec la troisième sous-base (62),
les guides de déplacement coulissant linéaire respectifs sont agencés de façon mutuellement perpendiculaire,
grâce à quoi chacun desdits moyens formant moteur de sous-base déplace l'effecteur de clés linéairement dans une direction perpendiculaire au mouvement assuré par les autres moyens formant moteur de sous-base ; et
d. ledit effecteur de clés (72) ayant en outre un moyen de commande relié fonctionnellement à chacun desdits moyens formant moteur de sous-base et auxdits premier et second moyens actionnables pour retirer la clé brute correspondante de la cuvette de distribution et limiter le mouvement de ladite clé brute correspondante avec le moyen de serrage.

14. Appareil de fabrication de clés selon la revendication 13, dans lequel l'effecteur de clés (72) ayant la broche dirigée vers le haut (87) à une certaine distance en dessous et en alignement avec un trou (94) dans l'anneau de la clé brute correspondante (78) et le moyen de serrage disposé dans la première position est agencé et adapté pour amener la broche (87) en engagement avec le trou (94) dans l'anneau de la clé brute correspondante (78) lorsque la surface supérieure de la paroi supérieure du moyen de serrage pousse contre la porte articulée de la cuvette de distribution (80) et ouvre ladite porte (88) pour permettre l'accès pour le retrait de ladite clé brute.

15. Appareil de fabrication de clés selon l'une quelconque des revendications 5 à 14, comprenant en outre un moyen pour tailler les encoches dans la clé brute correspondante afin de produire une nouvelle clé.

16. Appareil de fabrication de clés selon la revendication 15, dans lequel le moyen pour tailler les encoches dans la clé brute correspondante comprend une molette de taillage de clé (102) pouvant tourner dans au moins une direction et ayant au moins une enclume (106) qui lui est contiguë pour chaque direction de rotation de taillage, chaque enclume (106) ayant une surface de contact plate (104, 108) disposée dans un plan qui est perpendiculaire à une tangente de ladite molette (102) et ladite enclume (106) étant en outre agencée et adaptée pour maintenir le panneton d'une clé brute correspondante disposée à plat sur sa surface de contact plate par l'effecteur de clés pour tailler la clé brute (78) et empêcher son déplacement causé par les forces tangentielles créées par la molette (102) de taillage de la clé ; et
le moyen de commande de l'effecteur de clés actionne sélectivement chacun desdits moyens formant moteur de sous-base pour disposer le panneton de la clé brute correspondante (78) saisie par l'effecteur de clé (72) à plat sur la surface de contact plane de l'enclume (106) et pour placer les parties sélectionnées de ladite clé brute en relation fonctionnelle de taillage avec ladite molette de taillage de clé (102) en réponse au signal d'identification, grâce à quoi les entailles caractéristiques de la clé sont taillées dans ladite clé brute.

17. Appareil de fabrication de clés selon l'une quelconque des revendications 5 à 7, dans lequel le moyen sans contact d'extraction des attributs d'une clé objet comprend :
a. un moyen pour enregistrer les données en mémoire des clés objets rejetées qui n'ont pas de signaux de codes types correspondant aux signaux de codes résultant de ladite reconnaissance de la forme de pixel de la clé objet,
grâce à quoi un appareil de fabrication de clés peut acquérir des informations supplémentaires sur les clés qui ne sont pas encore disponibles dans sa mémoire de formes types.

18. Appareil de fabrication de clés selon la revendication 13 convenant à au moins une clé brute (78), ayant un moyen d'indexage adapté pour supporter la clé brute contre les rebords dirigés vers le haut de l'effecteur de clés (72), grâce à quoi la clé brute peut être fixée de manière uniforme audit effecteur de clés.

19. Appareil de fabrication de clés selon la revendication 18, dans lequel le moyen d'indexage comprend une arête disposée longitudinalement entre la butée et l'anneau de la clé brute (78), ladite arête ayant un tenon supérieur et un tenon inférieur symétrique disposés symétriquement par rapport à l'axe longitudinal de la clé brute, chaque tenon ayant un contour uniforme à surfaces de contact longitudinale et transversale contiguës, ladite surface de contact longitudinale s'étend dans une direction générale longitudinale à partir de la surface de contact transversale vers la butée et ladite surface de contact transversale émane dans un plan qui est perpendiculaire à l'axe longitudinal de ladite clé brute, chacune desdites surfaces de contact longitudinales est disposée à une distance latérale de l'axe longitudinal qui est supérieure à la moitié de la largeur latérale de la clé brute mesurée en travers de sa butée,
grâce à quoi l'arête de la clé brute est adaptée pour indexer la clé brute en la supportant de manière uniforme contre les rebords dépassant vers le haut de l'effecteur de clés.

20. Appareil de fabrication de clés selon la revendication 18, dans lequel le moyen d'indexage comprend une arête disposée longitudinalement entre la butée et l'anneau de la clé brute (78), ladite arête ayant un tenon supérieur et un tenon inférieur symétrique disposés symétriquement par rapport à l'axe longitudinal de la clé brute (78), chaque tenon ayant un contour uniforme à surfaces de contact longitudinale et transversale contiguës, ladite surface de contact longitudinale s'étend dans une direction générale longitudinale par rapport à la surface de contact transversale vers la butée et ladite surface de contact transversale émane dans un plan qui est perpendiculaire à l'axe longitudinal de ladite clé brute, chacune desdites surfaces de contact longitudinales est disposée à une distance latérale par rapport à l'axe longitudinal de la clé brute suffisante pour permettre à chacune des surfaces de contact de s'engager simultanément avec un rebord dépassant vers le haut des éléments de collier respectifs de l'effecteur de clés,
grâce à quoi l'arête de la clé brute est adaptée pour indexer la clé brute en la supportant uniformément contre les rebords dépassant vers le haut de l'effecteur de clés.

21. Appareil de fabrication de clés selon l'une quelconque des revendications précédentes, comprenant en outre un moyen pour saisir une clé brute ayant un panneton tout en laissant le panneton exempt de contrainte pour le taillage.

22. Appareil de fabrication de clés selon la revendication 21, dans lequel le panneton (36) a au moins un bord latéral longitudinal taillable et le côté du panneton opposé au bord latéral taillable est exempt de contrainte.

23. Appareil de fabrication de clés selon la revendication 22, dans lequel la clé brute (78) comprend en outre une tige et un anneau (34) et le moyen de prise s'engage avec une partie de la clé brute (78) et positionne la clé brute en relation fonctionnelle avec un moyen pour tailler son bord latéral taillable longitudinal, ladite partie étant constituée de son anneau et de sa tige, tout en laissant le bord opposé dudit panneton exempt de contrainte.

24. Appareil de fabrication de clés selon la revendication 22, dans lequel la clé brute (78) comprend en outre un anneau (34) et le moyen de prise s'engage avec l'anneau et positionne la clé brute (78) en relation fonctionnelle avec un moyen de taillage d'un bord latéral taillable longitudinal de celle-ci, tout en laissant le côté opposé dudit panneton (36) exempt de contrainte.

25. Appareil de fabrication de clés selon l'une quelconque des revendications 5 à 14 et 17 à 20, comprenant en outre :
a. un moyen pour saisir une clé brute ayant un panneton (36) à deux bords latéraux taillables longitudinaux tout en laissant le panneton libre de contrainte pour le taillage ;
b. une molette de taillage rotative (102) ; et
c. un moyen pour déplacer le moyen de prise et la clé brute (78) engagée avec lui en relation de taillage face à face entre un premier bord latéral taillable longitudinal de la clé brute (78) et un premier côté de la molette de taillage, grâce à quoi des encoches sont pratiquées dans le premier bord latéral taillable de la clé brute, pour déplacer le moyen de prise et la clé brute engagée avec lui de manière à positionner un second bord latéral taillable longitudinal de la clé brute pour le taillage, et pour déplacer le moyen de prise et la clé brute engagée avec lui en relation de taillage face à face entre le second bord latéral taillable longitudinal de la clé brute et le côté opposé de la molette de taillage,
grâce à quoi des encoches sont pratiquées dans le second bord latéral taillable longitudinal de la clé brute.

26. Procédé de fabrication automatique de clés utilisant les attributs d'une clé objet (32) ayant un axe longitudinal, qui comprend les étapes consistant à :
a. supporter la clé objet (32) sans contrainte sur une partie transparente (25, 26) d'une surface (22) ;
b. rétro-éclairer la clé objet en faisant passer la lumière à travers la partie transparente afin d'identifier les attributs de la clé objet ;
c. projeter une bande de lumière sur la clé objet et faire pivoter la surface (22) pour établir une relation positionnelle fonctionnelle entre l'axe longitudinal de la clé objet supportée sans contrainte (32) et un moyen (2) d'extraction des attributs de la clé objet supportée sans contrainte ; et
d. extraire les attributs de la clé objet supportée sans contrainte, y compris les encoches exposées latéralement, indépendamment de tout contact physique,
grâce à quoi les codes d'entailles de la clé objet peuvent être reconnus.

27. Procédé de fabrication automatique de clés selon la revendication 26, qui comprend en outre :
a. la réception d'au moins une image objet de la clé objet projetée par ledit rétro-éclairage ;
b. la production d'un signal de sortie ; et
c. l'identification des attributs exposés latéralement de la clé objet réagissant au signal de sortie.

28. Procédé de fabrication automatique de clés selon la revendication 26, dans lequel l'extraction des attributs de la clé objet supportée sans contrainte comprend :
a. la projection d'au moins une bande de lumière obliquement sur la clé objet ;
b. la réception d'une image objet de la bande de lumière des attributs protégés latéralement de la clé objet ;
c. la reconnaissance d'une forme de pixel à partir de ladite image objet ;
d. la production d'une série de signaux de codes qui définissent les caractéristiques de la forme de pixel reconnue pour chaque pixel cible résultant de ladite reconnaissance ;
e. la comparaison des signaux de codes avec les signaux de codes types provenant d'une mémoire de formes types, lesdits signaux de codes types définissant les caractéristiques d'une forme de pixel type d'une clé d'un fabricant sélectionné ; et
f. la production d'un signal d'identification à partir de cette comparaison, ledit signal d'identification définissant une clé brute correspondante de forme type prédéterminée ayant des signaux de codes types qui correspondent aux signaux de codes résultant de la reconnaissance de la forme de pixel de la clé objet.

29. Procédé de fabrication automatique de clés selon la revendication 26, dans lequel l'extraction des attributs de la clé objet supportée sans contrainte comprend :
a. la projection d'au moins une bande de lumière obliquement sur la clé objet ;
b. la réception d'une image objet de la bande de lumière des attributs protégés latéralement de la clé objet ;
c. la reconnaissance d'une forme de pixel à partir de ladite image objet ;
d. la production d'une série de signaux de codes qui définissent les caractéristiques de la forme de pixel reconnue pour chaque pixel cible résultant de ladite reconnaissance ;
e. la comparaison des signaux de codes avec des signaux de codes types provenant d'une mémoire de formes types, lesdits signaux de codes types définissant les caractéristiques de formes de pixels types qui définissent les attributs protégés latéralement d'une clé d'un fabricant sélectionné ; et
f. la production d'un signal d'identification à partir de cette comparaison, ledit signal d'identification définissant les codes d'encoches avec une forme type prédéterminée ayant des signaux de codes qui correspondent aux signaux de codes résultant de la reconnaissance de la forme de pixel de la clé objet,
grâce à quoi des encoches conformes aux codes d'encoches peuvent être taillées dans une clé brute correspondante.

30. Procédé de fabrication automatique de clés selon la revendication 26, dans lequel l'extraction des attributs de la clé objet supportée sans contrainte comprend les étapes séquentielles consistant à :
a. projeter au moins une bande de lumière obliquement sur la clé objet ;
b. recevoir une image objet de la bande de lumière des attributs protégés latéralement de la clé objet ;
c. reconnaître une forme de pixel à partir de ladite image objet ;
d. produire une série de signaux de codes qui définissent les caractéristiques de la forme de pixel reconnue pour chaque pixel cible résultant de ladite reconnaissance ;
e. comparer les signaux de codes avec des signaux de codes types correspondants provenant d'une mémoire de formes types, lesdits signaux de codes types définissant les caractéristiques d'une forme de pixel type des attributs protégés latéralement d'une clé d'un fabricant sélectionné ; et
f. produire un signal d'identification à partir de cette comparaison, ledit signal d'identification définissant une clé brute correspondante de forme type prédéterminée ayant des signaux de codes types qui correspondent aux signaux de codes résultant de la reconnaissance de la forme de pixel de la clé objet.

31. Procédé de fabrication automatique de clés selon la revendication 26, qui comprend en outre :
a. la réception d'au moins une image objet de la clé objet projetée par ledit rétro-éclairage ;
b. la reconnaissance d'une forme de pixel à partir de ladite image objet ;
c. la production d'une série de signaux de codes qui définissent les caractéristiques de la forme de pixel reconnue pour chaque pixel cible résultant de ladite reconnaissance,
lesdits pixels cibles définissant une polyligne d'attributs exposés latéralement de la clé objet ;
d. la comparaison des signaux de codes avec les signaux de codes types correspondants provenant d'une mémoire de formes types, chaque signal de code type définissant les caractéristiques d'une forme de pixel type d'attributs exposés latéralement d'une clé d'un fabricant sélectionné ;
e. la production d'un signal d'identification à partir de cette comparaison ; et
f. l'identification des attributs exposés latéralement de la clé objet réagissant au signal dé sortie.

32. Procédé de fabrication automatique de clés selon l'une quelconque des revendications 28 - 31, comprenant les étapes supplémentaires suivantes :
a. la sélection d'une clé brute correspondant audit signal d'identification à partir d'une pluralité de clés brutes ;
b. la prise de ladite clé brute ;
c. le positionnement de ladite clé brute pour le taillage ;
d. le taillage des encoches dans ladite clé brute correspondante pour créer une nouvelle clé ;
e. l'ébavurage de ladite nouvelle clé ; et
f. la distribution de ladite nouvelle clé.

33. Procédé de fabrication automatique de clés selon la revendication 26, qui comprend en outre :
a. la sélection d'une clé brute correspondante (78) dans une pluralité de clés brutes en réponse à un signal d'identification ;
b. la prise de ladite clé brute ;
c. le positionnement de ladite clé brute pour le taillage ; et
d. le taillage d' encoches dans ladite clé brute conformément aux entailles de la clé d'origine du fabricant de serrures pour créer une nouvelle clé.

34. Procédé de fabrication automatique de clés selon la revendication 26, dans lequel l'extraction des attributs de la clé objet supportée sans contrainte comprend :
a. la réception d'au moins une image objet de la clé objet (32) projetée par ledit rétro-éclairage ;
b. la reconnaissance d'une forme de pixel à partir de ladite image objet ;
c. la production d'une série de signaux de codes qui définissent les caractéristiques de la forme de pixel reconnue pour chaque pixel cible résultant de ladite reconnaissance, lesdits pixels cibles définissant les attributs de la clé objet ;
d. la comparaison des signaux de codes primaires avec les signaux de codes types correspondants provenant d'une mémoire de formes types, chaque signal de code type définissant les caractéristiques d'une forme de pixel type d'attributs d'une clé d'un fabricant sélectionné ;
e. la production d'un signal de rejet à partir de cette comparaison, ledit signal de rejet définissant un manque de signaux de codes types correspondant aux signaux de codes primaires résultant de ladite reconnaissance de la forme de pixel de la clé objet ; et, en réponse audit signal de rejet :
f. l'allumage d'une lampe placée au-dessus et l'éclairage de la clé objet ;
g. la réception d'au moins une image objet de la clé objet éclairée et la production d'un signal de mémoire ; et
h. l'enregistrement dudit signal de mémoire.

35. Procédé de fabrication automatique de clés selon la revendication 26, dans lequel l'extraction des attributs de la clé objet supportée sans contrainte comprend :
a. la réception d'au moins une image objet rétro-éclairée de la clé objet ;
b. la reconnaissance d'une forme de pixel d'après ladite image objet rétro-éclairée ;
c. la production d'une série de signaux de codes primaires qui définissent les caractéristiques de là forme de pixel reconnue pour chaque pixel cible résultant de ladite reconnaissance, lesdits pixels cibles définissant une polyligne d'attributs exposés latéralement de la clé objet ;
d. la comparaison des signaux de codes primaires relatifs à la forme générale de la polyligne avec les signaux de codes types correspondants provenant d'une mémoire de formes types, chaque signal de code type définissant les caractéristiques d'une forme de pixel type de la forme d'une clé d'un fabricant sélectionné ;
e. la production d'un premier signal de rejet à partir de cette comparaison, ledit signal de rejet définissant un manque de signaux de codes types correspondant aux signaux de codes primaires résultant de ladite reconnaissance de la forme de pixel de la clé objet ; et, en réponse audit premier signal de rejet :
f. l'allumage d'une lampe placée au-dessus et l'éclairage de la clé objet ;
g. la réception d'au moins une image objet de la clé objet éclairée et la production d'un premier signal de mémoire ; et
h. l'enregistrement dudit premier signal de mémoire.

36. Procédé de fabrication automatique de clés selon la revendication 26, dans lequel l'extraction des attributs de la clé objet supportée sans contrainte comprend :
a. la réception d'au moins une image objet rétro-éclairée de la clé objet ;
b. la reconnaissance d'une forme de pixel d'après ladite image objet rétro-éclairée ;
c. la production d'une série de signaux de codes primaires qui définissent les caractéristiques de la forme de pixel reconnue pour chaque pixel cible résultant de ladite reconnaissance, lesdits pixels cibles définissant une polyligne d'attributs exposés latéralement de la clé objet ;
d. la comparaison des signaux de codes primaires relatifs à la forme générale de la polyligne avec les signaux de codes types correspondants provenant d'une mémoire de formes types, chaque signal de code type définissant les caractéristiques d'une forme de pixel type relative à la forme d'une clé d'un fabricant sélectionné ;
e. la production d'un premier signal d'identification à partir de cette comparaison, ledit premier signal d'identification définissant une clé brute correspondante d'une forme type prédéterminée ayant des signaux de codes types qui correspondent aux signaux de codes résultant de la reconnaissance de la forme de pixel de la clé objet, grâce à quoi une clé correspondante d'un fabricant sélectionné et une clé brute correspondant réagissant au premier signal d'identification peuvent être déterminées ;
f. la projection d'au moins une bande de lumière sur une clé objet ;
g. la réception d'une image objet de la bande de lumière des attributs protégés latéralement de la clé objet ;
h. la reconnaissance d'une forme de pixel d'après ladite image objet de la bande de lumière des attributs protégés latéralement de la clé objet ;
i. la production d'une série de signaux de codes secondaires qui définissent les caractéristiques de la forme de pixel reconnue pour chaque pixel cible résultant de ladite reconnaissance, lesdits pixels cibles définissant une bande de lumière des attributs protégés latéralement de la clé objet ;
j. la comparaison de chacun des signaux de codes secondaires avec des signaux de codes types correspondants provenant d'une mémoire de formes types, chaque signal de code type définissant les caractéristiques d'une forme de pixel type des attributs protégés latéralement de la clé du fabricant sélectionné ;
k. la production d'un signal d'interrogation à partir de cette comparaison, ledit signal d'interrogation définissant un manque de signaux de codes types correspondant aux signaux de codes secondaires résultant de ladite reconnaissance de la forme de pixel de la clé objet ; et, en réponse audit signal d'interrogation :
l. la détermination de l'existence éventuelle d'informations sur un autre côté de la clé objet à partir de la mémoire de formes types relative à la clé du fabricant sélectionné, et la production d'un signal de rejet, ledit signal de rejet définissant un manque d'informations sur un autre côté de la clé objet ; et, en réponse audit signal de rejet :
m. l'allumage d'une lampe placée au-dessus et l'éclairage de la clé objet ;
n. la réception d'au moins une image objet de la clé objet éclairée et la production d'un signal de mémoire ; et
o. l'enregistrement du signal de mémoire.

37. Procédé de fabrication automatique de clés selon la revendication 26, dans lequel l'extraction des attributs de la clé objet supportée sans contrainte comprend :
a. la réception d'au moins une image objet rétro-éclairée de la clé objet ;
b. la reconnaissance d'une forme de pixel à partir de ladite image objet rétro-éclairée ;
c. la production d'une série de signaux de codes primaires qui définissent les caractéristiques de la forme de pixel reconnue pour chaque pixel cible résultant de ladite reconnaissance, lesdits pixels cibles définissant une polyligne d'attributs exposés latéralement de la clé objet ;
d. la comparaison des signaux de codes primaires relatifs à une forme générale de la polyligne avec les signaux de codes types correspondants provenant d'une mémoire de formes types, chaque signal de code type définissant les caractéristiques d'une forme de pixel type de la forme d'une clé d'un fabricant sélectionné ;
e. la production d'un premier signal d'identification d'après cette comparaison, ledit premier signal d'identification définissant une clé brute correspondante de forme type prédéterminée ayant des signaux de codes types qui correspondent aux signaux de codes résultant de la reconnaissance de la forme de pixel de la clé objet, grâce à quoi une clé correspondante d'un fabricant sélectionné et une clé brute correspondante réagissant au premier signal d'identification peuvent être déterminées ; et
f. la projection d'au moins une bande de lumière sur une clé objet ;
g. la réception d'une image objet de la bande de lumière des attributs protégés latéralement de la clé objet ;
h. la reconnaissance d'une forme de pixel d'après ladite image objet de la bande de lumière des attributs protégés latéralement de la clé objet ;
i. la production d'une série de signaux de codes secondaires qui définissent les caractéristiques de la forme de pixel reconnue pour chaque pixel cible résultant de ladite reconnaissance de la forme de pixel provenant de l'image objet de la bande de lumière des attributs protégés latéralement de la clé objet ;
j. la comparaison de chacun des signaux de codes secondaires avec des signaux de codes types correspondants provenant d'une mémoire de formes types, chaque signal de code type définissant les caractéristiques d'une forme de pixel type des attributs protégés latéralement de la clé du fabricant sélectionné ;
k. la production d'un signal d'interrogation à partir de cette comparaison, ledit signal d'interrogation définissant des signaux de codes types correspondant aux signaux de codes secondaires résultant de ladite reconnaissance de la forme de pixel de la clé objet ;et, en réponse audit signal d'interrogation :
l. la détermination de la présence éventuelle d'informations sur un autre côté de la clé objet à partir de la mémoire de formes types relative à la clé du fabricant sélectionné, et la production d'un signal de redémarrage, ledit signal de redémarrage définissant d'autres informations sur un autre côté de la clé objet ; et, en réponse audit signal de redémarrage :
m. la fourniture d'instructions de retourner la clé objet ; et
n. la répétition des étapes a à k.

38. Procédé de fabrication automatique de clés selon l'une quelconque des revendications 26 à 37, qui comprend en outre :
a. l'actionnement d'au moins une commande de moteur de sous-base pour positionner un effecteur de clés ayant une tige mobile possédant une broche dépassant vers le haut en association fonctionnelle avec une clé brute correspondante en réponse à un signal d'identification ;
b. l'actionnement d'un premier moyen actionnable pour déplacer la tige horizontalement et axialement afin de positionner la broche dépassant vers le haut à une certaine distance en dessous d'un trou dans l'anneau de la clé brute correspondante et en alignement avec ce trou ;
c. l'actionnement d'une commande de moteur pour positionner la broche de l'effecteur de clés verticalement dans le trou de l'anneau de la clé brute correspondante ;
d. l'actionnement du premier moyen actionnable pour tirer la tige axialement et horizontalement vers l'intérieur afin de retirer la clé brute correspondante d'un moyen de retenue ;
e. l'actionnement d'un second moyen actionnable pour fixer la clé brute correspondante avec un moyen de serrage ;
f. l'actionnement d'un moyen de taillage ;
g. l'actionnement d'au moins une commande de moteur de sous-base pour positionner l'effecteur de clés et la clé brute correspondante fixée en association fonctionnelle avec le moyen de taillage pour tailler une nouvelle clé ;
h. l'actionnement du second moyen actionnable pour libérer le moyen de serrage ; et
i. l'actionnement d'au moins une commande de moteur de sous-base pour positionner la nouvelle clé pour sa distribution.

39. Procédé de fabrication automatique de clés selon l'une quelconque des revendications 26 à 37, qui comprend en outre :
a. la projection d'un faisceau de lumière de direction générale horizontale immédiatement au-dessus d'un moyen de support d'une clé objet et transversalement au panneton de la clé objet supportée dessus ;
b. la réception de la lumière du faisceau horizontal qui n'est pas arrêtée par le panneton d'une clé objet disposée sur la partie de panneton du moyen de support d'une clé objet et la production d'au moins un signal de sortie ;
c. l'abaissement progressif de l'élévation verticale de la partie anneau du moyen de support d'une clé objet par rapport audit second signal de sortie ; et
d. la répétition des étapes séquentielles a, b, et c, un nombre de fois spécifié ;
e la production d'un signal de rejet de clé non existante d'après ce nombre de répétitions spécifié, ledit signal de rejet de clé non existante définissant l'absence d'une clé objet empêchant la réception de la lumière, indiquant que la clé objet n'était pas disposée sur le moyen de support ; et, en réponse audit signal de rejet de clé non existante :
f. l'allumage d'une lampe placée au-dessus, l'affichage d'instructions et l'ouverture d'une porte d'accès.

40. Procédé de fabrication automatique de clés selon la revendication 28, qui consiste à saisir par son anneau une clé brute ayant un panneton à au moins un bord latéral taillable longitudinal et un anneau qui correspond à la clé brute correspondante, et à tailler des encoches dans un bord latéral taillable longitudinal de celle-ci tout en laissant le côté opposé dudit panneton exempt de contrainte.

41. Procédé de fabrication automatique de clés selon la revendication 40, qui comprend :
a. le taillage, avec un premier côté d'une molette de taillage rotative, d'un premier bord latéral taillable longitudinal d'une clé brute ayant un panneton à deux bords latéraux taillables longitudinaux tout en laissant le côté opposé dudit panneton exempt de contrainte ;
b. le déplacement de la clé brute pour positionner un second bord latéral taillable longitudinal en relation face à face avec le côté opposé de la molette de taillage rotative pour le taillage ; et
c. le taillage, avec le côté opposé de la molette de taillage rotative, du second bord latéral taillable longitudinal de la clé brute tout en laissant le côté opposé dudit panneton exempt de contrainte.
